(19) Europäisches Patentamt
European Patent Office
Office européen des brevets

(11) EP 4 299 283 A1

(12) **EUROPEAN PATENT APPLICATION**
published in accordance with Art. 153(4) EPC

(43) Date of publication:
**03.01.2024 Bulletin 2024/01**

(21) Application number: **22780800.3**

(22) Date of filing: **28.03.2022**

(51) International Patent Classification (IPC):
***B29C 55/02*** *(2006.01)* ***C08F 222/14*** *(2006.01)*
***C08J 5/18*** *(2006.01)* ***G02B 5/30*** *(2006.01)*

(52) Cooperative Patent Classification (CPC):
**B29C 55/02; C08F 222/14; C08J 5/18; G02B 5/30**

(86) International application number:
**PCT/JP2022/015143**

(87) International publication number:
**WO 2022/210589 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021 JP 2021056714**

(71) Applicant: **Tosoh Corporation**
**Yamaguchi 746-8501 (JP)**

(72) Inventors:
- **YOSHIMURA, Asuka**
**Yokkaichi-Shi**
**Mie 510-8540 (JP)**
- **KOMINE, Takuya**
**Yokkaichi-Shi**
**Mie 510-8540 (JP)**
- **SAKASHITA, Ryuichi**
**Yokkaichi-Shi**
**Mie 510-8540 (JP)**
- **ICHIJO, Hiroki**
**Yokkaichi-Shi**
**Mie 510-8540 (JP)**

(74) Representative: **Novagraaf International SA**
**Chemin de l'Echo 3**
**1213 Onex, Geneva (CH)**

(54) **FUMARIC ACID DIESTER RESIN, FILM AND POLARIZING PLATE**

(57) The present invention provides a resin which has low wavelength dispersion $R_{450}/R_{550}$ and is capable of improving the viewing angle characteristics and contrast over a wide wavelength range; and a film which uses this resin. A fumaric acid diester resin according to the present invention contains a fumaric acid diester residue unit that is represented by formula (1) and a (meth)acrylic acid ester residue unit that is represented by formula (2).

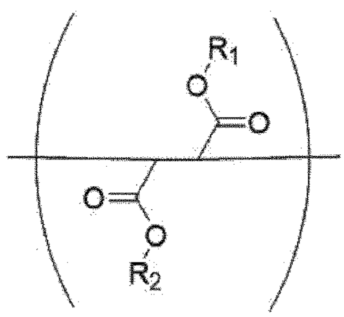
(1)

EP 4 299 283 A1

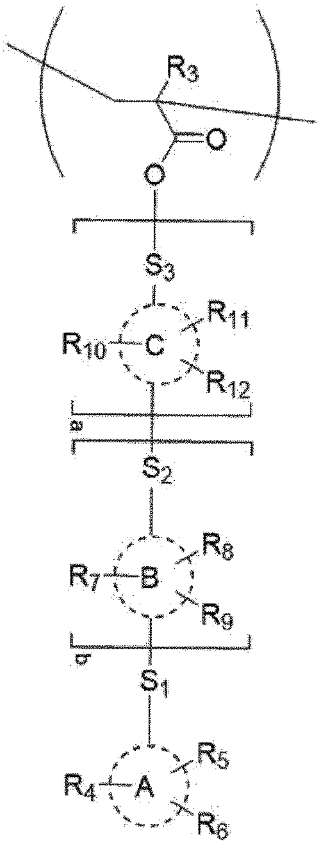

(2)

## Description

TECHNICAL FIELD

The present disclosure relates to a novel fumaric acid diester resin, a film including the resin, and a polarizing plate in which the film is arranged on at least one side of the polarizer. More specifically, the present disclosure relates to a novel fumaric acid diester resin suitable for forming optical compensation films that have excellent retardation properties for use in displays.

BACKGROUND ART

Flat panel displays (FPDs), such as liquid crystal displays and organic electroluminescence (EL) displays, are widely used for cellular phones, computer monitors, notebook computers, televisions, and so on as the most important display devices in the multimedia society. For use in FPDs, there are many types of optical compensation films for improving display properties. In particular, optical compensation films are essential components for improving the visibility of displays viewed at normal or oblique angles.

The optical compensation is known as a quarter-wave plate and a half-wave plate, and a stretched polycarbonate film is used as the material (see, for example, Patent Documents 1 to 3). In general, optical compensation films are also used as antireflection layers for reflective liquid crystal displays, touch panels, and organic EL displays. These applications require optical compensation films with a higher retardation particularly in a longer wavelength region (hereinafter referred to as "reverse wavelength dispersion films").

Meanwhile, Patent Document 4 discloses a fumaric acid diester-(meth)acrylate copolymer.

Patent Document 1: Japanese Patent No. 2818983
Patent Document 2: Japanese Unexamined Patent Application, Publication No. H5-297223
Patent Document 3: Japanese Unexamined Patent Application, Publication No. H5-323120
Patent Document 4: Japanese Unexamined Patent Application, Publication No. 2017-149932

DISCLOSURE OF THE INVENTION

Problems to be Solved by the Invention

As a result of investigations, however, the inventors have found that optical compensation films made of polycarbonate have some problems to be solved. Many polycarbonate resins, which have an aromatic component in their main chain, will tend to exhibit a large wavelength dispersion of retardation when formed into stretched films. In this regard, the wavelength dispersion indicates measurement wavelength-dependent variations in retardation. The wavelength dispersion may be represented by the ratio $R_{450}/R_{550}$ of the retardation $R_{450}$ measured at a wavelength of 450 nm to the retardation $R_{550}$ measured at a wavelength of 550 nm. In general, aromatic-structure polymers strongly tend to have a $R_{450}/R_{550}$ ratio of more than 1.1, which may lead to lower contrast or lower viewing angle characteristics in a short-wavelength region.

Moreover, as a result of investigations, the inventors have found that the fumaric acid diester-(meth)acrylate copolymer disclosed in Patent Document 4 will have insufficient wavelength dispersion properties.

Thus, there is a need for a resin useful for forming films having a low wavelength dispersion $R_{450}/R_{550}$ and being capable of improving contrast and viewing angle characteristics in a short-wavelength range.

It is an object of the present disclosure to provide a resin capable of being formed into stretched films that have a low $R_{450}/R_{550}$ ratio and can improve contrast and viewing angle characteristics over a wide wavelength range, to provide a film including such a resin, and to provide a polarizing plate in which the film is arranged on at least one side of the polarizer.

Means for Solving the Problems

As a result of intensive studies for solving the problem described above, the inventors have created a resin including: a fumaric acid diester residue unit; and a specific (meth)acrylic acid ester residue unit, created a film including such a resin, and completed the present disclosure based on findings that such a resin and film provide a solution to the problem.

Specifically, the present disclosure is directed to a fumaric acid diester resin including: a fumaric acid diester residue unit represented by Formula (1) below; and a (meth)acrylic acid ester residue unit represented by Formula (2)

below.

[Chem. 1]

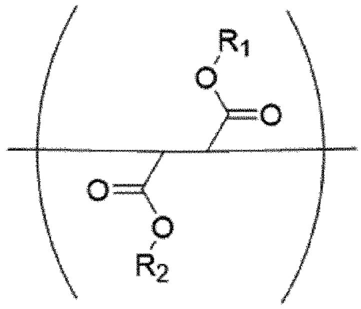

(1)

In the formula, $R_1$ and $R_2$ each independently represent a linear alkyl group having 1 to 12 carbon atoms, a branched alkyl group having 3 to 12 carbon atoms, or a cyclic alkyl group having 3 to 12 carbon atoms.

[Chem. 2]

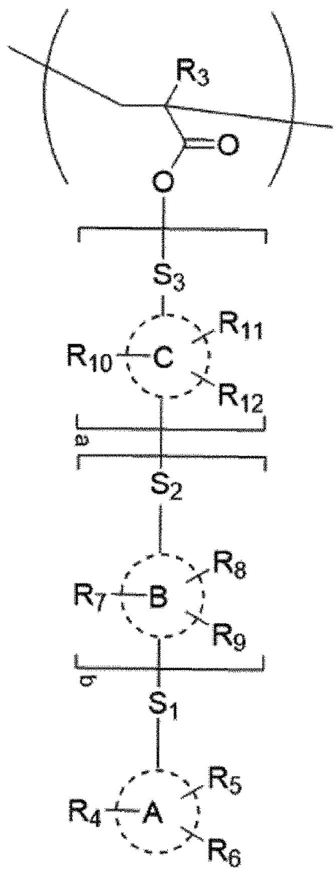

(2)

In the formula, $R_3$ represents a hydrogen atom or a methyl group,

$S_1$, $S_2$, and $S_3$ each independently represent a single bond or an alkylene group having 1 to 12 carbon atoms, the alkylene group having 1 to 12 carbon atoms may have at least one selected from the group consisting of an ether group, an ester group, a carbonate group, and an amide group and may have at least one selected from the group consisting of a branched structure, an alicyclic ring, and an aromatic ring in a chain thereof,
ring A, ring B, and ring C each independently represent an aromatic or heterocyclic ring-constituting atoms selected

from the group consisting of a carbon atom, a nitrogen atom, an oxygen atom, and a sulfur atom,
$R_4$ to $R_{12}$ each independently represent a hydrogen atom, a halogen atom, a hydroxyl group, a carboxyl group, a cyano group, a cyanophenyl group, an alkyl group having 1 to 10 carbon atoms, an alkoxy group having 1 to 10 carbon atoms, an alkyl carboxylic acid group having 2 to 11 carbon atoms, a halogenated alkyl group having 1 to 10 carbon atoms, an alkyl alcohol group having 1 to 10 carbon atoms, or an aromatic or heterocyclic ring-constituting atoms selected from the group consisting of a carbon atom, a nitrogen atom, an oxygen atom, and a sulfur atom, and
a and b each independently represent 0 or 1.

Effects of the Invention

The present disclosure provides a resin useful for forming films, specifically optical compensation films, having a low $R_{450}/R_{550}$ ratio and being capable of improving contrast and viewing angle characteristics over a wide wavelength range.

PREFERRED MODE FOR CARRYING OUT THE INVENTION

Hereinafter, the fumaric acid diester resin according to an embodiment of the present disclosure will be described in detail.
The present disclosure is directed to a fumaric acid diester resin including: a fumaric acid diester residue unit represented by Formula (1) above; and a (meth)acrylic acid ester residue unit represented by Formula (2) above (hereinafter referred to as the "resin of the present disclosure").
The resin of the present disclosure includes the fumaric acid diester residue unit represented by Formula (1) above.
In Formula (1), $R_1$ and $R_2$ each independently represent a linear alkyl group having 1 to 12 carbon atoms, a branched alkyl group having 3 to 12 carbon atoms, or a cyclic alkyl group having 3 to 12 carbon atoms.
The linear alkyl group having 1 to 12 carbon atoms may be, for example, methyl group, ethyl group, propyl group, butyl group, pentyl group, or hexyl group. The branched alkyl group having 3 to 12 carbon atoms may be, for example, isopropyl group, isobutyl group, sec-butyl group, or tert-butyl group. The cyclic alkyl group having 3 to 12 carbon atoms may be, for example, cyclopropyl group, cyclobutyl group, or cyclohexyl group. Among them, for good polymerization with the residue unit represented by Formula (2), an ethyl group, an isopropyl group, a tert-butyl group, or a cyclohexyl group is preferred, and an ethyl group or an isopropyl group is more preferred.
Specifically, the fumaric acid ester residue unit represented by Formula (1) may be, for example, a monomethyl fumarate residue unit, a monoethyl fumarate residue unit, a monopropyl fumarate residue unit, a monoisopropyl fumarate residue unit, a monopentyl fumarate residue unit, a monohexyl fumarate residue unit, a mono-n-butyl fumarate residue unit, a monoisobutyl fumarate residue unit, a mono-sec-butyl fumarate residue unit, a mono-tert-butyl fumarate residue unit, a monocyclopropyl fumarate residue unit, a monocyclobutyl fumarate residue unit, a monocyclohexyl fumarate residue unit, a dimethyl fumarate residue unit, a diethyl fumarate residue unit, a dipropyl fumarate residue unit, a dipentyl fumarate residue unit, a dihexyl fumarate residue unit, a diisopropyl fumarate residue unit, a di-n-butyl fumarate residue unit, a diisobutyl fumarate residue unit, a di-sec-butyl fumarate residue unit, a di-tert-butyl fumarate residue unit, a dicyclopropyl fumarate residue unit, a dicyclobutyl fumarate residue unit, or a dicyclohexyl fumarate residue unit. Among them, for good polymerization with the monomer for the residue unit represented by Formula (2), a diethyl fumarate residue unit, a diisopropyl fumarate residue unit, a di-tert-butyl fumarate residue unit, or a dicyclohexyl fumarate residue unit is preferred, and a diethyl fumarate residue unit or a diisopropyl fumarate residue unit is more preferred.
The resin of the present disclosure includes the (meth)acrylic acid ester residue unit represented by Formula (2) above. Here, the term "(meth)acrylic acid ester residue unit" means an acrylic acid ester residue unit or a methacrylic acid ester residue unit.
In Formula (2), $R_3$ represents a hydrogen atom or a methyl group.
In Formula (2), $S_1$, $S_2$, and $S_3$ each independently represent a single bond or an alkylene group having 1 to 12 carbon atoms. The alkylene group having 1 to 12 carbon atoms may have at least one selected from the group consisting of an ether group, an ester group, a carbonate group, and an amide group and may have at least one selected from the group consisting of a branched structure, an alicyclic ring, and an aromatic ring in a chain thereof. The alkylene group may have a single moiety or two or more moieties selected from the group defined above.
The alicyclic ring, which the above alkylene group may have, may be, for example, a cyclopropane ring, a cyclobutane ring, a cyclopentane ring, or a cyclohexane ring, among which a cyclohexane ring is preferred. The aromatic ring, which the above alkylene group may have, may be, for example, a benzene ring, a naphthalene ring, an anthracene ring, or a phenanthrene ring, among which a benzene ring is preferred.
The alkylene group preferably has 2 to 8 carbon atoms, more preferably 3 to 6 carbon atoms, so that the resin of the present disclosure can be stretched into a film with a lower wavelength dispersion $R_{450}/R_{550}$. When the above

alkylene group has an ester group, a carbonate group, an amide group, an alicyclic ring, or an aromatic ring, the number of carbon atoms contained in these is also included in the number of carbon atoms.

The alkylene group may have a functional group. In such a case, the functional group is preferably an ether group and/or an ester group, more preferably an ether group, so that the resin of the present disclosure can be stretched into a film with a lower wavelength dispersion $R_{450}/R_{550}$.

$S_1$ is preferably a single bond, and $S_2$ and $S_3$ are preferably each independently the above alkylene group.

Examples of the above alkylene group having an ether group includes the structures shown below. It should be noted that divalent groups or chemical structures (e.g., ester bonds, repeating units in the polymer structure) shown by way of example in the description may form a bond oriented in any direction as long as it is chemically acceptable.

[Chem. 3]

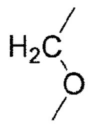
(1-1-1)

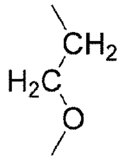
(1-1-2)

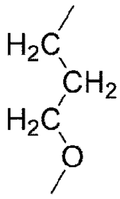
(1-1-3)

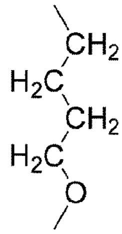
(1-1-4)

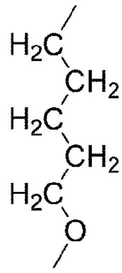
(1-1-5)

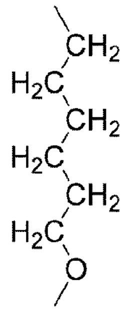
(1-1-6)

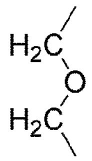
(1-1-7)

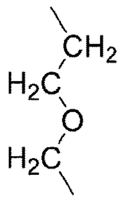
(1-1-8)

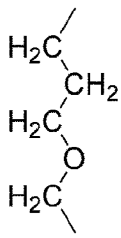
(1-1-9)

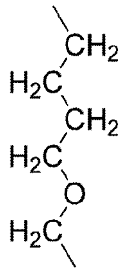
(1-1-10)

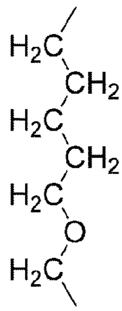
(1-1-11)

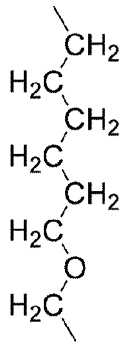
(1-1-12)

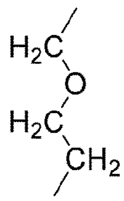
(1-1-13)

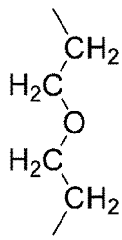
(1-1-14)

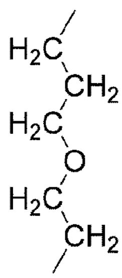
(1-1-15)

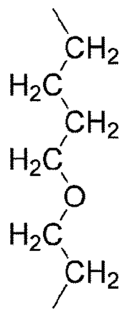
(1-1-16)

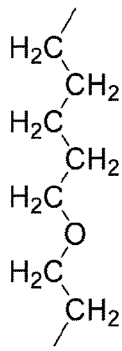
(1-1-17)

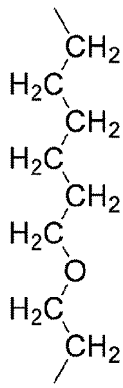
(1-1-18)

[Chem. 4]

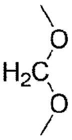
(1-1-19)

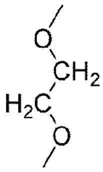
(1-1-20)

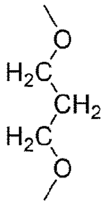
(1-1-21)

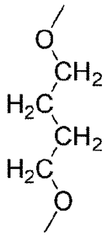
(1-1-22)

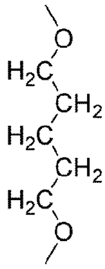
(1-1-23)

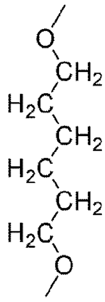
(1-1-24)

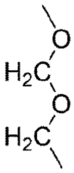
(1-1-25)

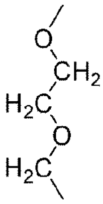
(1-1-26)

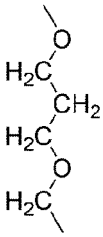
(1-1-27)

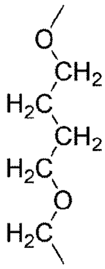
(1-1-28)

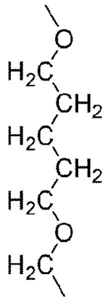
(1-1-29)

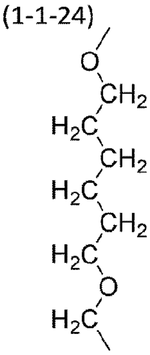
(1-1-30)

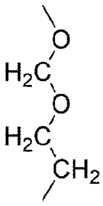
(1-1-31)

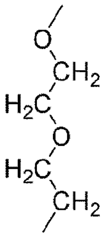
(1-1-32)

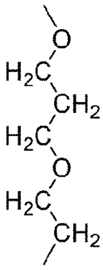
(1-1-33)

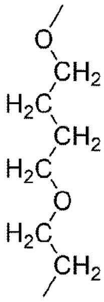
(1-1-34)

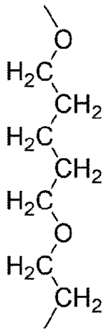
(1-1-35)

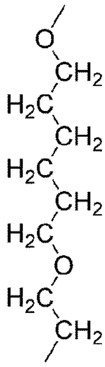
(1-1-36)

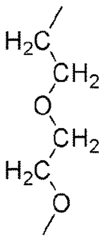
(1-1-37)

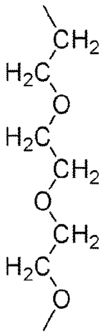
(1-1-38)

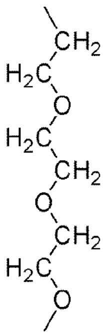
(1-1-39)

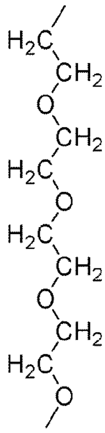
(1-1-40)

[Chem. 5]

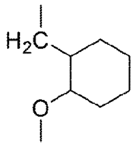
(1-1-41)
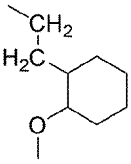
(1-1-42)
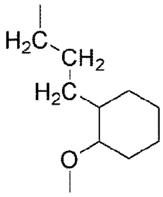
(1-1-43)
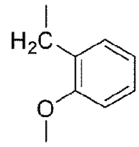
(1-1-44)
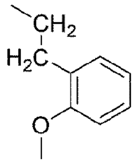
(1-1-45)
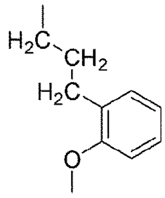
(1-1-46)

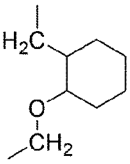
(1-1-47)
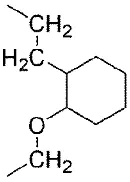
(1-1-48)
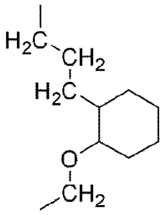
(1-1-49)
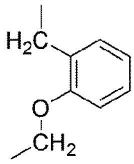
(1-1-50)
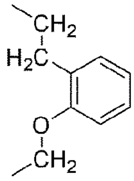
(1-1-51)
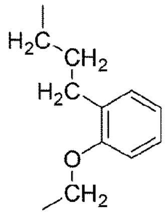
(1-1-52)

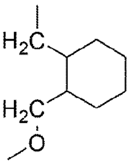
(1-1-53)
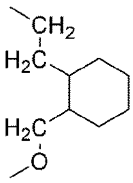
(1-1-54)
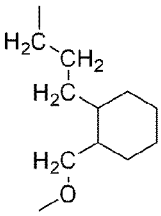
(1-1-55)
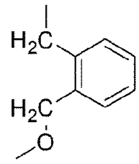
(1-1-56)
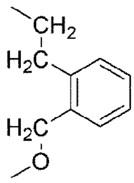
(1-1-57)
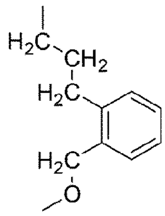
(1-1-58)

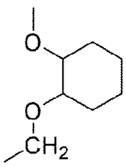
(1-1-59)
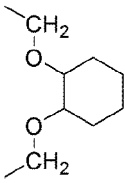
(1-1-60)
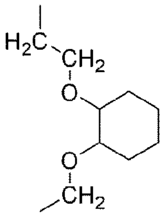
(1-1-61)
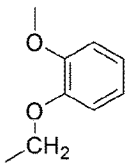
(1-1-62)
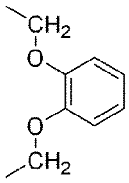
(1-1-63)
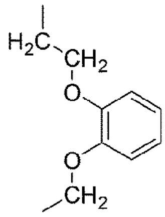
(1-1-64)

Examples of the above alkylene group having an ester group include the structures shown below.

[Chem. 6]

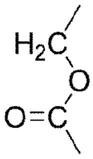
(1-2-1)

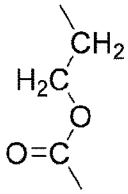
(1-2-2)

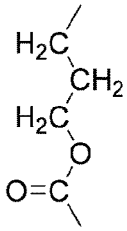
(1-2-3)

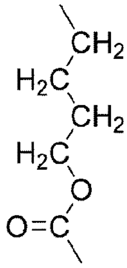
(1-2-4)

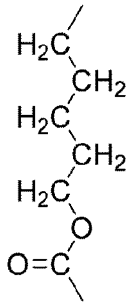
(1-2-5)

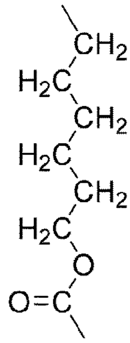
(1-2-6)

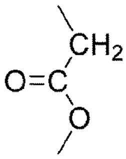
(1-2-7)

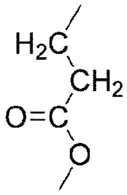
(1-2-8)

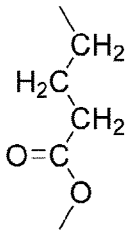
(1-2-9)

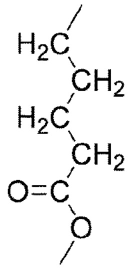
(1-2-10)

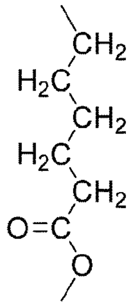
(1-2-11)

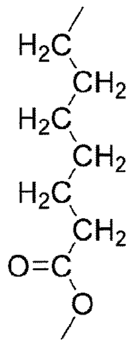
(1-2-12)

[Chem. 7]

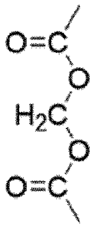 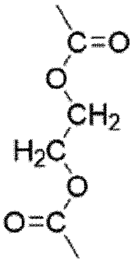 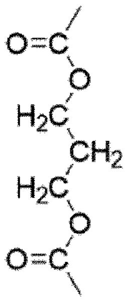 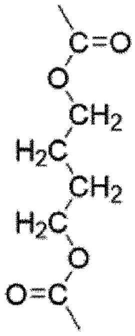 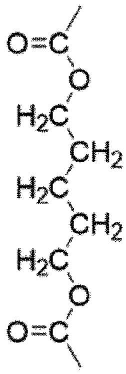 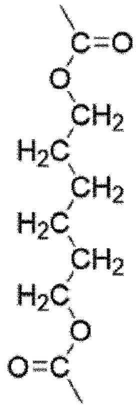

(1-2-13) (1-2-14) (1-2-15) (1-2-16) (1-2-17) (1-2-18)

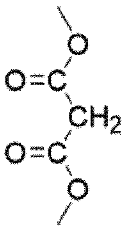 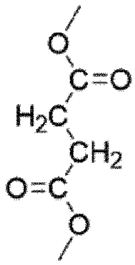 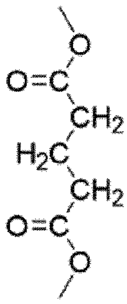 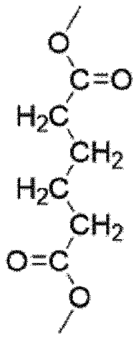 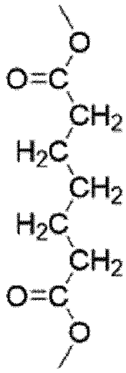 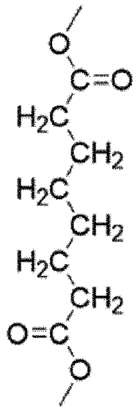

(1-2-19) (1-2-20) (1-2-21) (1-2-22) (1-2-23) (1-2-24)

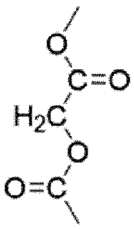 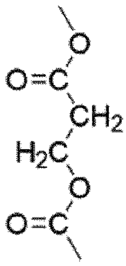 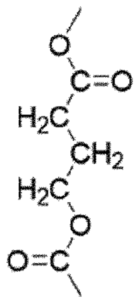 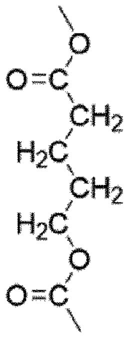 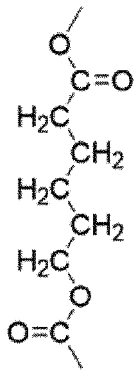 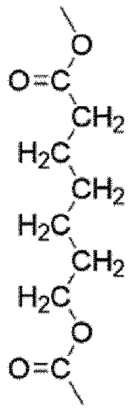

(1-2-25) (1-2-26) (1-2-27) (1-2-28) (1-2-29) (1-2-30)

[Chem. 8]

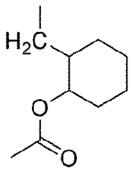 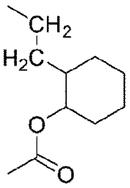 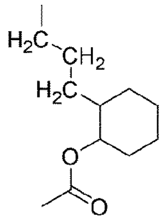 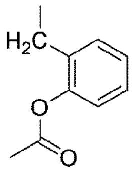 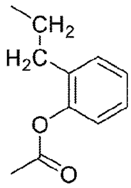 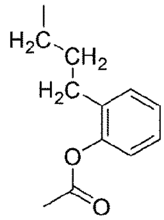

(1-2-31) (1-2-32) (1-2-33) (1-2-34) (1-2-35) (1-2-36)

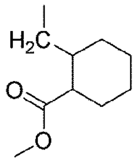 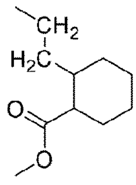 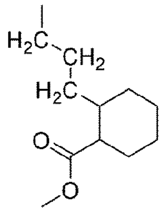 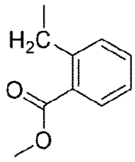 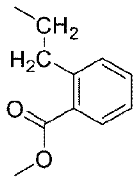 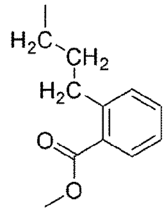

(1-2-37) (1-2-38) (1-2-39) (1-2-40) (1-2-41) (1-2-42)

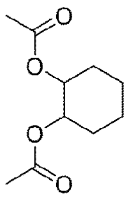 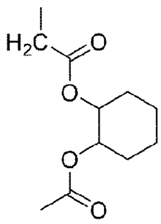 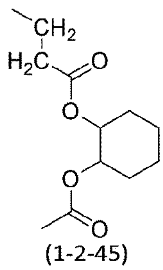 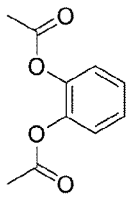 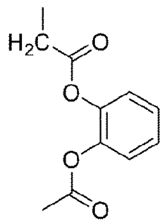 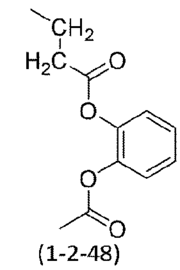

(1-2-43) (1-2-44) (1-2-45) (1-2-46) (1-2-47) (1-2-48)

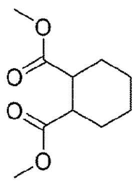 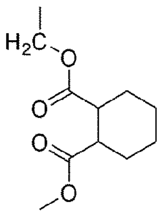 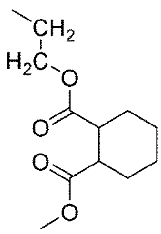 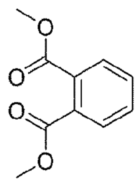 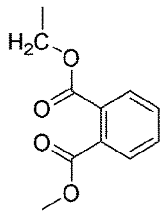 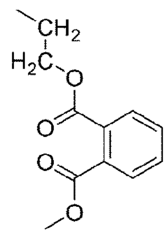

(1-2-49) (1-2-50) (1-2-51) (1-2-52) (1-2-53) (1-2-54)

Examples of the above alkylene group having a carbonate group include the structures shown below.

[Chem. 9]

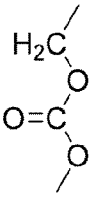

(1-3-1)

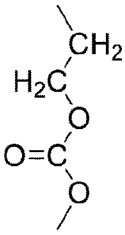

(1-3-2)

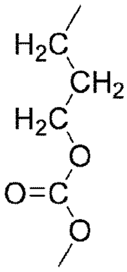

(1-3-3)

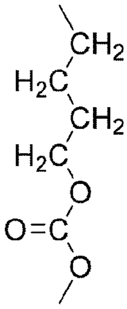

(1-3-4)

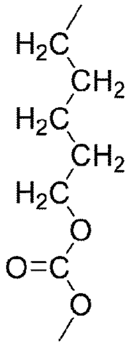

(1-3-5)

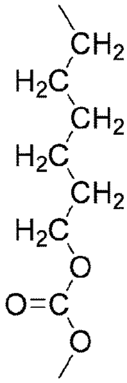

(1-3-6)

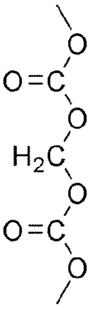

(1-3-7)

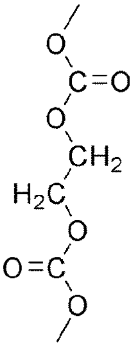

(1-3-8)

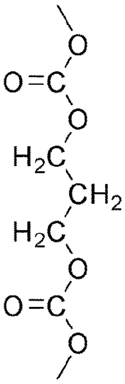

(1-3-9)

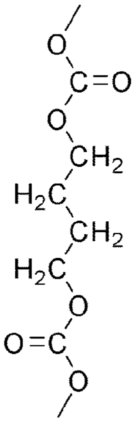

(1-3-10)

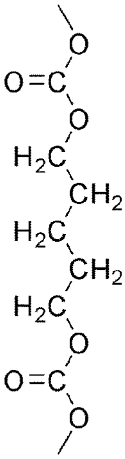

(1-3-11)

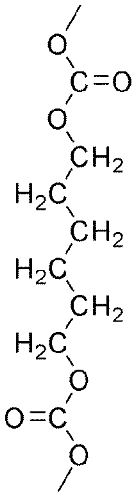

(1-3-12)

[Chem. 10]

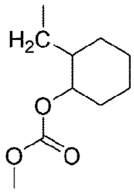 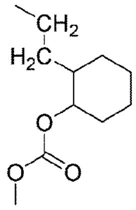 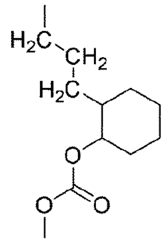 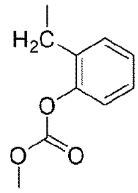 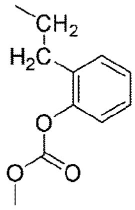 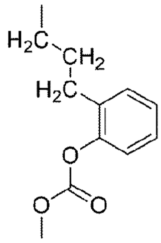

(1-3-13) (1-3-14) (1-3-15) (1-3-16) (1-3-17) (1-3-18)

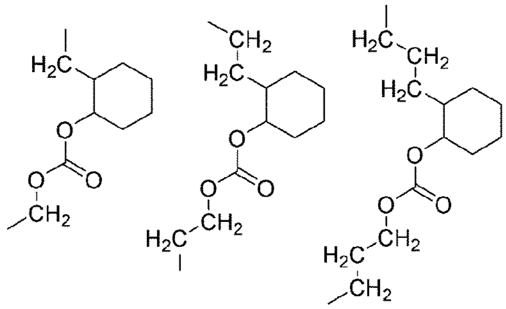 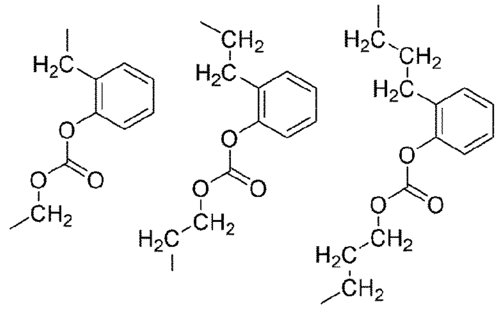

(1-3-19) (1-3-20) (1-3-21) (1-3-22) (1-3-23) (1-3-24)

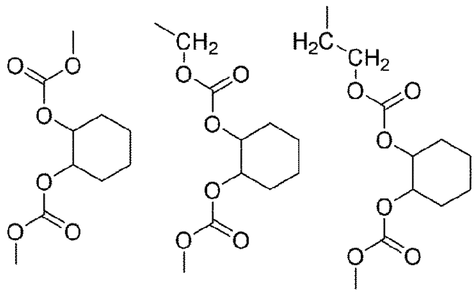 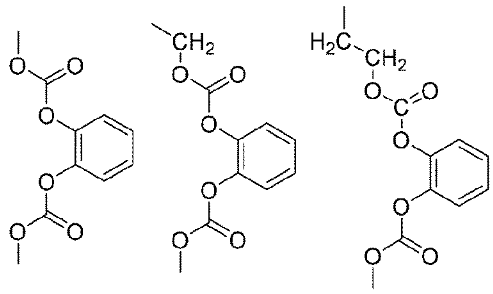

(1-3-25) (1-3-26) (1-3-27) (1-3-28) (1-3-29) (1-3-30)

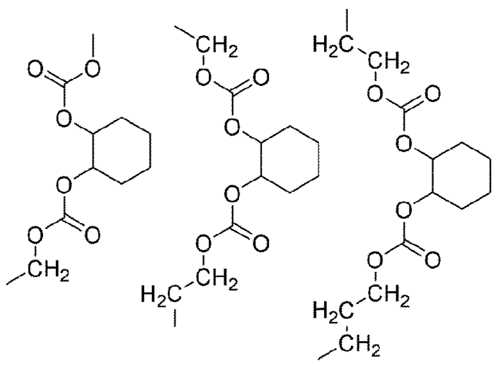 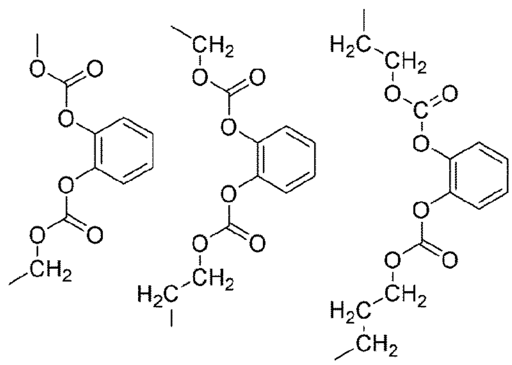

(1-3-31) (1-3-32) (1-3-33) (1-3-34) (1-3-35) (1-3-36)

Examples of the above alkylene group having an amide group include the structures shown below.

[Chem. 11]

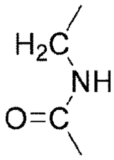
(1-4-1)

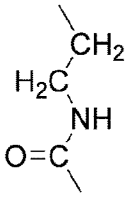
(1-4-2)

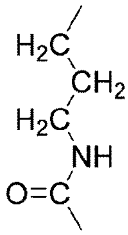
(1-4-3)

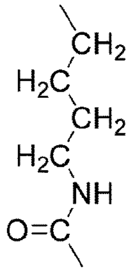
(1-4-4)

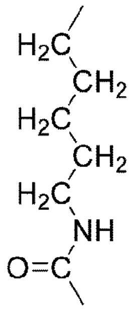
(1-4-5)

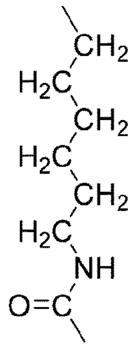
(1-4-6)

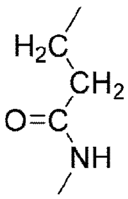
(1-4-7)

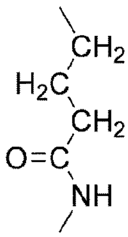
(1-4-8)

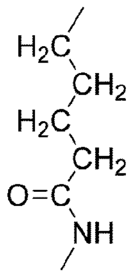
(1-4-9)

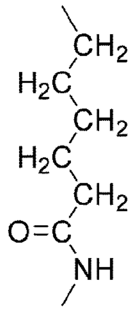
(1-4-10)

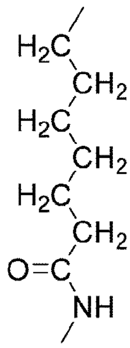
(1-4-11)

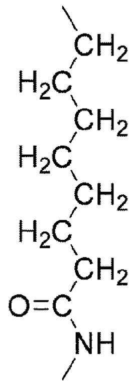
(1-4-12)

[Chem. 12]

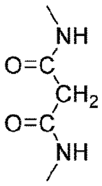
(1-4-13)

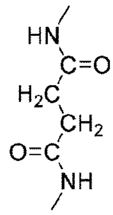
(1-4-14)

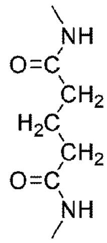
(1-4-15)

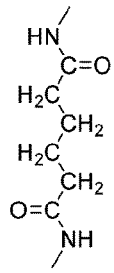
(1-4-16)

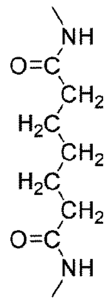
(1-4-17)

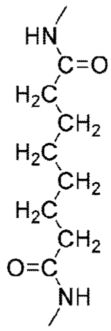
(1-4-18)

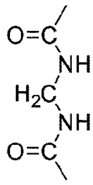
(1-4-19)

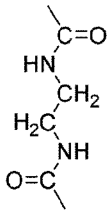
(1-4-20)

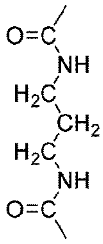
(1-4-21)

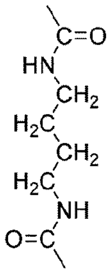
(1-4-22)

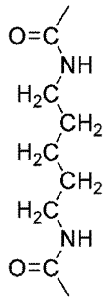
(1-4-23)

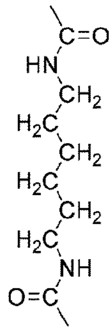
(1-4-24)

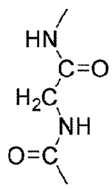
(1-4-25)

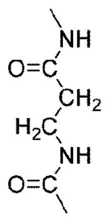
(1-4-26)

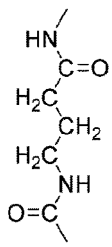
(1-4-27)

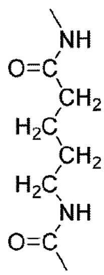
(1-4-28)

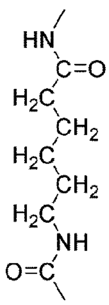
(1-4-29)

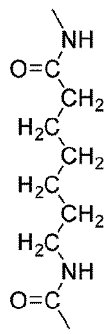
(1-4-30)

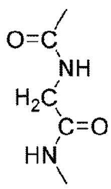
(1-4-31)

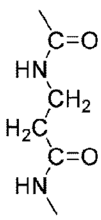
(1-4-32)

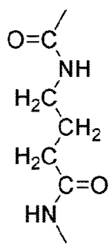
(1-4-33)

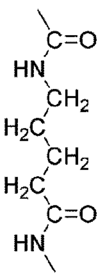
(1-4-34)

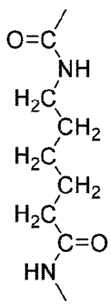
(1-4-35)

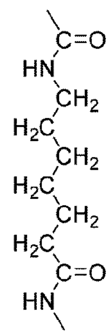
(1-4-36)

[Chem. 13]

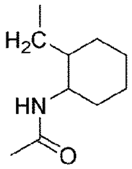
(1-4-37)

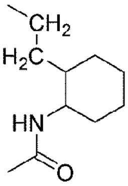
(1-4-38)

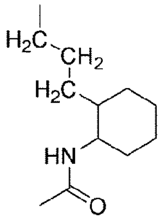
(1-4-39)

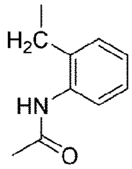
(1-4-40)

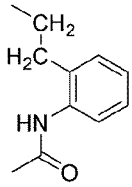
(1-4-41)

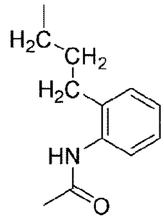
(1-4-42)

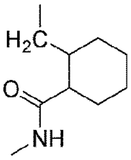
(1-4-43)

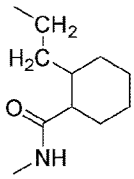
(1-4-44)

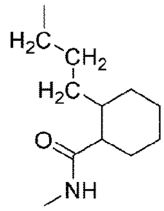
(1-4-45)

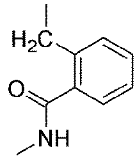
(1-4-46)

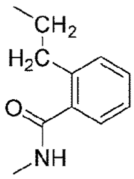
(1-4-47)

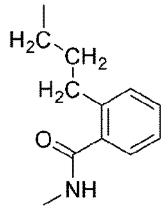
(1-4-48)

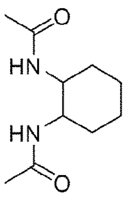
(1-4-49)

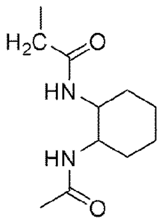
(1-4-50)

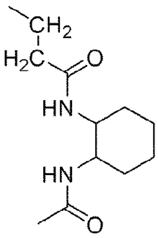
(1-4-51)

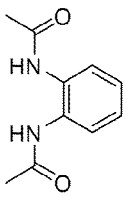
(1-4-52)

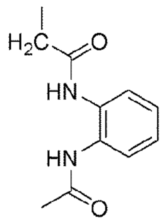
(1-4-53)

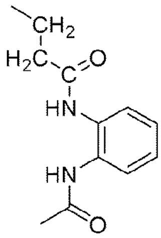
(1-4-54)

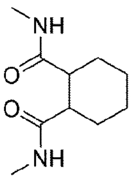
(1-4-55)

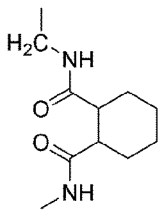
(1-4-56)

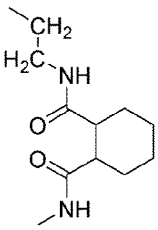
(1-4-57)

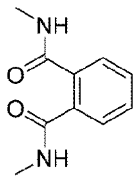
(1-4-58)

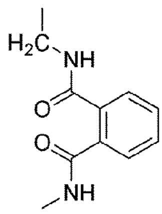
(1-4-59)

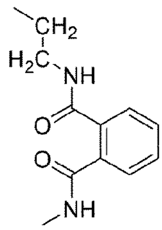
(1-4-60)

Examples of the above alkylene group having two selected from the group consisting of an ether group, an ester group, a carbonate group, and an amide group include the structures shown below.

[Chem. 14]

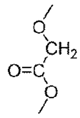 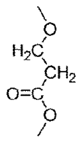 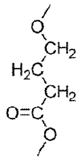 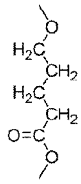 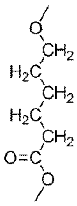

(1-5-1) (1-5-2) (1-5-3) (1-5-4) (1-5-5)

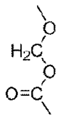 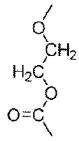 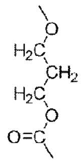 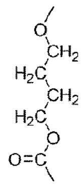 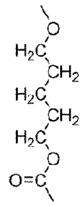 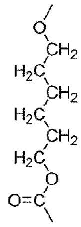

(1-5-6) (1-5-7) (1-5-8) (1-5-9) (1-5-10) (1-5-11)

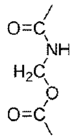 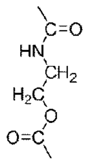 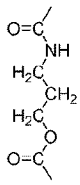 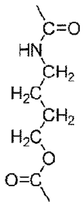 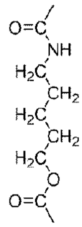 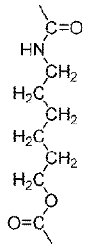

(1-5-12) (1-5-13) (1-5-14) (1-5-15) (1-5-16) (1-5-17)

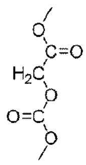 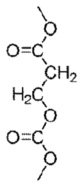 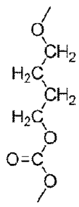 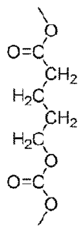 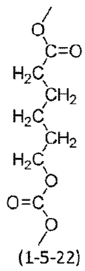 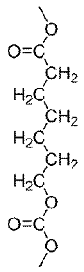

(1-5-18) (1-5-19) (1-5-20) (1-5-21) (1-5-22) (1-5-23)

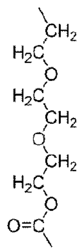 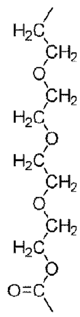 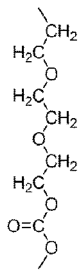 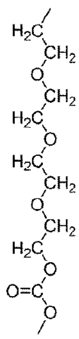

(1-5-24) (1-5-25) (1-5-26) (1-5-27)

[Chem. 15]

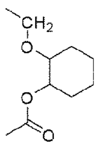 (1-5-28)
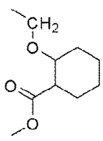 (1-5-29)
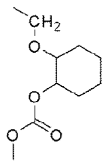 (1-5-30)
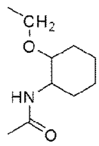 (1-5-31)
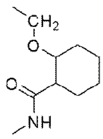 (1-5-32)
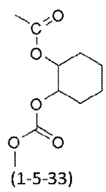 (1-5-33)
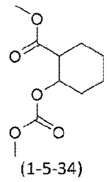 (1-5-34)
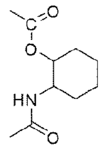 (1-5-35)
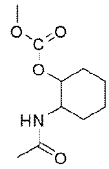 (1-5-36)

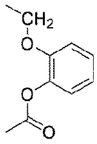 (1-5-37)
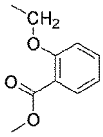 (1-5-38)
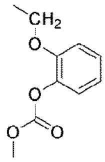 (1-5-39)
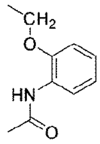 (1-5-40)
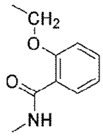 (1-5-41)
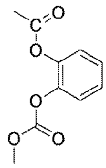 (1-5-42)
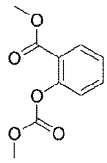 (1-5-43)
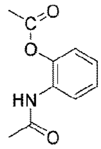 (1-5-44)
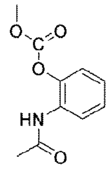 (1-5-45)

Preferred examples of the above alkylene group include the structures shown below.

[Chem. 16]

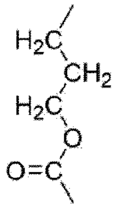 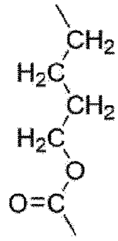 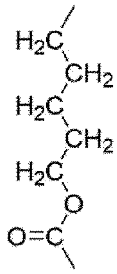 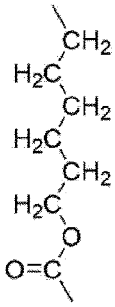

(1-2-3) (1-2-4) (1-2-5) (1-2-6)

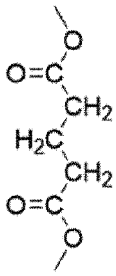 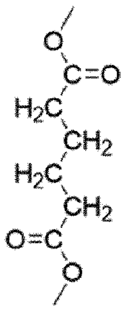 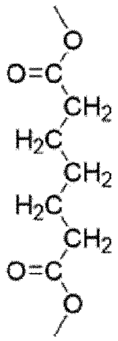 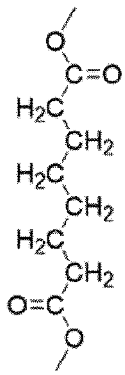

(1-2-21) (1-2-22) (1-2-23) (1-2-24)

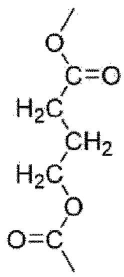 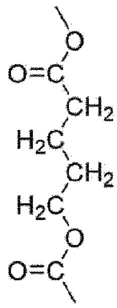 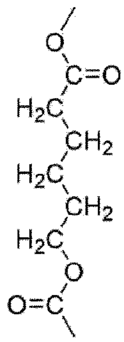 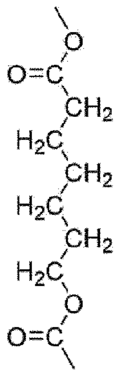

(1-2-27) (1-2-28) (1-2-29) (1-2-30)

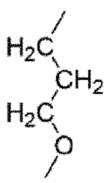 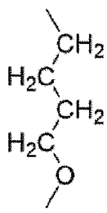 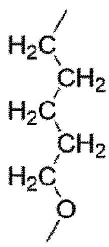 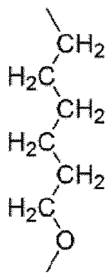

(1-1-3) (1-1-4) (1-1-5) (1-1-6)

In Formula (2), ring A, ring B, and ring C each independently represent an aromatic or heterocyclic ring-constituting atoms selected from the group consisting of a carbon atom, a nitrogen atom, an oxygen atom, and a sulfur atom and preferably each independently represent an aromatic or heterocyclic ring that has 3 to 20 carbon atoms and may contain a nitrogen atom, an oxygen atom, or a sulfur atom.

The aromatic or heterocyclic ring-constituting atoms selected from the group consisting of a carbon atom, a nitrogen atom, an oxygen atom, and a sulfur atom may be, for example, a benzene ring, a naphthalene ring, an anthracene ring, a tetracene ring, a phenanthrene ring, a fluorene ring, an azulene ring, a pentacene ring, a pyrene ring, a pyridine ring, a pyridazine ring, a pyrimidine ring, a pyrazine ring, a quinoline ring, an isoquinoline ring, an indole ring, a phthalimide ring, a tetrahydrophthalimide ring, a triazole ring, a benzotriazole ring, a triazine ring, a pyrrole ring, a thiophene ring, a benzothiophene ring, a benzoxazole ring, a benzothiazole ring, an oxadiazole ring, a dibenzoxazole ring, a dibenzothiophene ring, a tetrahydrofuran ring, a tetrahydropyran ring, a piperidine ring, a piperidone ring, a piperazine ring, a thiomorpholine ring, or a morpholine ring. In particular preferred are a benzene ring, a naphthalene ring, an anthracene ring, a benzotriazole ring, a triazine ring, and a tetrahydrophthalimide ring, among which a benzene ring and a benzotriazole ring are more preferred.

At least one ring selected from the group consisting of ring A, ring B, and ring C is preferably at least one selected from the group consisting of rings represented by Structural Formulas (I) to (IX) below, and at least one of ring A or ring B is more preferably at least one selected from the group consisting of rings represented by Structural Formulas (I) to (IX) below. Ring A is preferably bonded to $S_1$ and $R_4$, $R_5$, or $R_6$ in meta-, para-, or amphi-positions, more preferably in para-positions. Ring B is preferably bonded to $S_1$ and $S_2$ in meta-, para-, or amphi-positions, more preferably in para-positions. Ring C is preferably bonded to $S_2$ and $S_3$ in meta-, para-, or amphi-positions, more preferably in para-positions. With this feature, the resin of the present disclosure can be formed into a film with a lower wavelength dispersion $R_{450}/R_{550}$.

[Chem. 17]

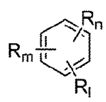
(I)

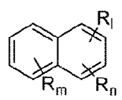
(II)

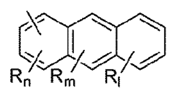
(III)

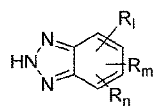
(IV)

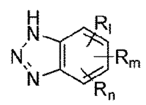
(V)

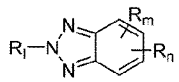
(VI)

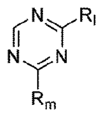
(VII)

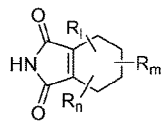
(VIII)

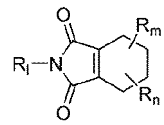
(IX)

In the formulas, $R_1$, $R_m$, and $R_n$ each independently have the same meaning as that defined for $R_4$ to $R_{12}$ in Formula (2) above, and

the rings (I) to (IX) are bonded to any of S1, S2, and S3 in formula (2) above, and are bonded at any carbon atom or nitrogen atom constituting the ring.

At least one ring selected from the group consisting of ring A, ring B, and ring C is more preferably at least one selected from the group consisting of rings represented by Structural Formulas (I), (IV), (V), and (VI) below.

[Chem. 18]

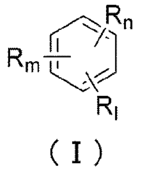
(I)

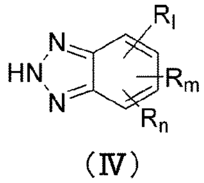
(IV)

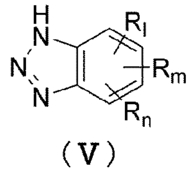
(V)

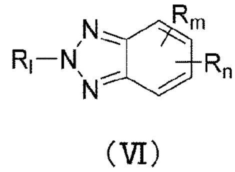
(VI)

In the formulas, $R_1$, $R_m$, and $R_n$ each independently have the same meaning as that defined for $R_4$ to $R_{12}$ in Formula (2) above.

In Formula (2), $R_4$ to $R_{12}$ each independently represent a hydrogen atom, a halogen atom, a hydroxyl group, a carboxyl group, a cyano group, a cyanophenyl group, an alkyl group having 1 to 10 carbon atoms, an alkoxy group having 1 to 10 carbon atoms, an alkyl carboxylic acid group having 2 to 11 carbon atoms, a halogenated alkyl group having 1 to 10 carbon atoms, an alkyl alcohol group having 1 to 10 carbon atoms, or an aromatic or heterocyclic ring-constituting atoms selected from the group consisting of a carbon atom, a nitrogen atom, an oxygen atom, and a sulfur atom, and preferably each independently represent a hydrogen atom, a hydroxyl group, a cyano group, or an alkyl group having 1 to 10 carbon atoms.

The alkyl group having 1 to 10 carbon atoms may be linear, cyclic, or branched and may be, for example, methyl group, ethyl group, n-propyl group, isopropyl group, n-butyl group, sec-butyl group, tert-butyl group, n-pentyl group, cyclopropyl group, cyclobutyl group, or cyclopentyl group. In particular, the alkyl group having 1 to 10 carbon atoms is preferably a linear alkyl group, more preferably methyl group or ethyl group.

The alkoxy group having 1 to 10 carbon atoms may be, for example, methoxy group, ethoxy group, or propoxy group.

The alkyl carboxylic acid group having 2 to 11 carbon atoms may be the above $C_1$ to $C_{10}$ alkyl group with one of the hydrogen atoms replaced by a carboxyl group. The alkyl carboxylic acid group having 2 to 11 carbon atoms may be, for example, carboxymethyl group ($-CH_2COOH$), 2-carboxyethyl group ($-CH_2CH_2COOH$), or 3-carboxypropyl group ($-CH_2CH_2CH_2COOH$).

The halogenated alkyl group having 1 to 10 carbon atoms may be the above $C_1$ to $C_{10}$ alkyl group with some or all of the hydrogen atoms replaced by a halogen atom or atoms. The halogenated alkyl group is preferably a fluorinated alkyl group, more preferably a perfluoroalkyl group.

The alkyl alcohol group having 1 to 10 carbon atoms may be the above $C_1$ to $C_{10}$ alkyl group with one of the hydrogen atoms replaced by a hydroxyl group. The alkyl alcohol group having 1 to 10 carbon atoms may be, for example, hydroxymethyl group ($-CH_2OH$), 2-hydroxyethyl group ($-CH_2CH_2OH$), or 3-hydroxypropyl group ($-CH_2CH_2CH_2OH$).

The aromatic or heterocyclic ring-constituting atoms selected from the group consisting of a carbon atom, a nitrogen atom, an oxygen atom, and a sulfur atom may be, for example, phenyl group, naphthyl group, anthracyl group, tetracyl group, phenanthryl group, fluoryl group, azuryl group, pentasil group, pyryl group, pyridinyl group, pyridazinyl group, pyrimidinyl group, pyrazinyl group, quinolinyl group, isoquinolinyl group, indonyl group, phthalimidoyl group, tetrahydrophthalimidoyl group, triazolyl group, benzotriazolyl group, triazinyl group, pyrrolyl group, thiophenyl group, benzothiophenyl group, benzoxazolyl group, benzothiazolyl group, oxadiazolyl group, dibenzoxazolyl group, dibenzothiophenyl group, tetrahydrofuranyl group, tetrahydropyranyl group, piperidinyl group, piperidonyl group, piperazinyl group, thiomorpholinyl group, or morpholinyl group. The ring of these groups may have a hydrogen atom replaced by any substituent. Such a substituent may be, for example, a halogen atom, hydroxyl group, carboxyl group, cyano group, cyanophenyl group, $C_1$ to $C_{10}$ alkyl, $C_1$ to $C_{10}$ alkoxy, an alkyl carboxylic acid group having 2 to 11 carbon atoms, $C_1$ to $C_{10}$ halogenated alkyl, or an alkyl alcohol group having 1 to 10 carbon atoms.

In Formula (2), a is preferably 0 or 1 and b is preferably 1, and a is more preferably 0 and b is more preferably 1, so that the resin of the present disclosure can be formed into a film with a lower wavelength dispersion $R_{450}/R_{550}$ .

In the resin of the present disclosure, the residue unit represented by Formula (2) preferably has a structure derived from one selected from the group consisting of monomers represented by the formulas shown below.

[Chem. 19]

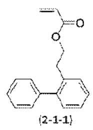
(2-1-1)
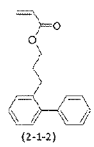
(2-1-2)
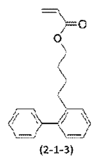
(2-1-3)
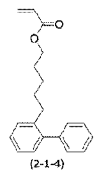
(2-1-4)
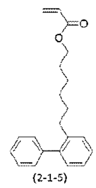
(2-1-5)

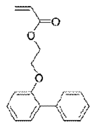
(2-1-6)
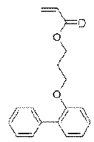
(2-1-7)
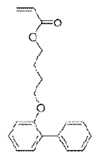
(2-1-8)
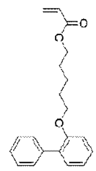
(2-1-9)
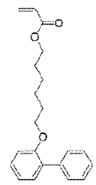
(2-1-10)

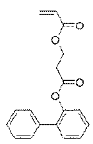
(2-1-11)
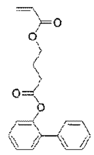
(2-1-12)
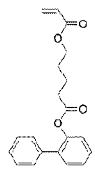
(2-1-13)
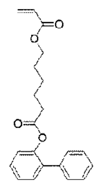
(2-1-14)
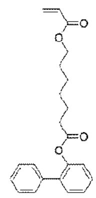
(2-1-15)

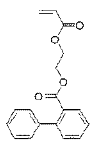
(2-1-16)
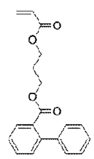
(2-1-17)
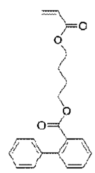
(2-1-18)
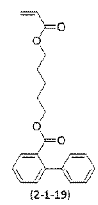
(2-1-19)
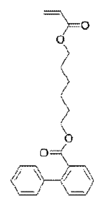
(2-1-20)

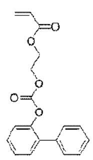
(2-1-21)
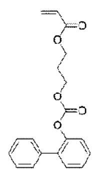
(2-1-22)
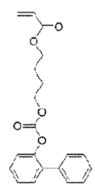
(2-1-23)
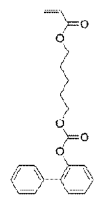
(2-1-24)
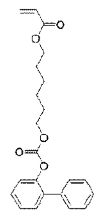
(2-1-25)

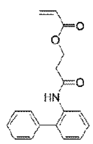
(2-1-26)
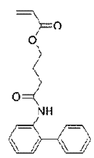
(2-1-27)
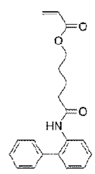
(2-1-28)
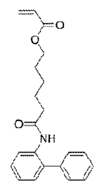
(2-1-29)
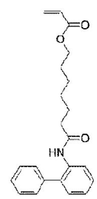
(2-1-30)

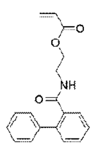
(2-1-31)
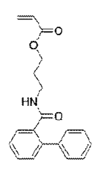
(2-1-32)
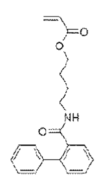
(2-1-33)
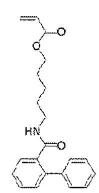
(2-1-34)
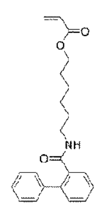
(2-1-35)

[Chem. 20]

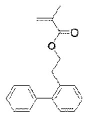
(2-1-36)

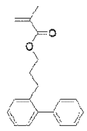
(2-1-37)

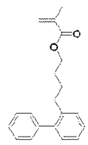
(2-1-38)

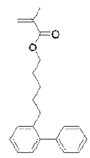
(2-1-39)

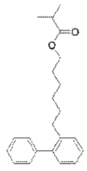
(2-1-40)

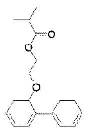
(2-1-41)

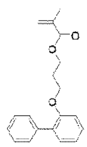
(2-1-42)

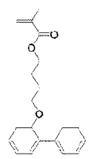
(2-1-43)

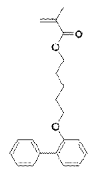
(2-1-44)

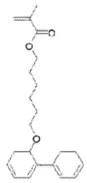
(2-1-45)

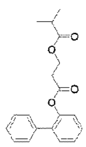
(2-1-46)

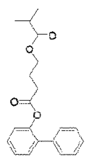
(2-1-47)

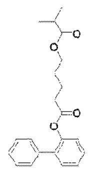
(2-1-48)

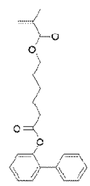
(2-1-49)

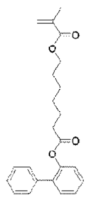
(2-1-50)

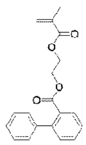
(2-1-51)

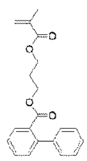
(2-1-52)

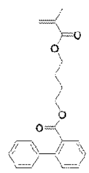
(2-1-53)

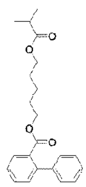
(2-1-54)

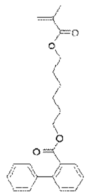
(2-1-55)

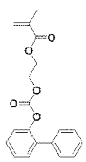
(2-1-56)

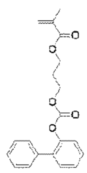
(2-1-57)

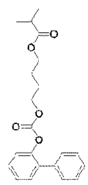
(2-1-58)

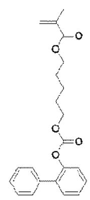
(2-1-59)

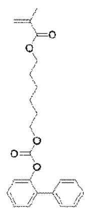
(2-1-60)

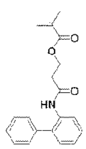
(2-1-61)

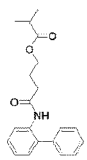
(2-1-62)

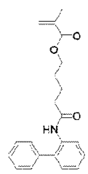
(2-1-63)

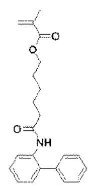
(2-1-64)

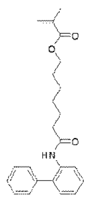
(2-1-65)

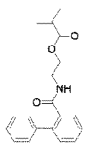
(2-1-66)

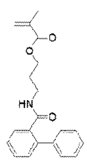
(2-1-67)

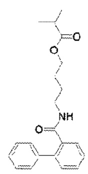
(2-1-68)

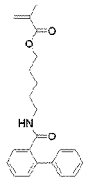
(2-1-69)

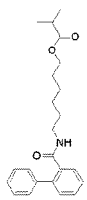
(2-1-70)

[Chem. 21]

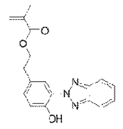
(2-2-1)

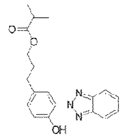
(2-2-2)

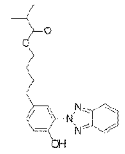
(2-2-3)

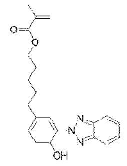
(2-2-4)

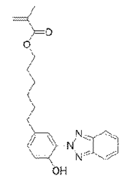
(2-2-5)

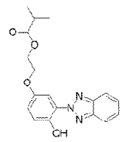
(2-2-6)

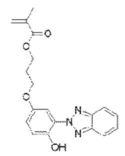
(2-2-7)

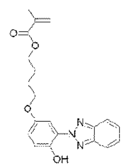
(2-2-8)

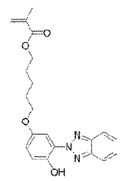
(2-2-9)

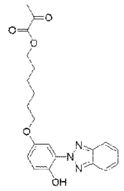
(2-2-10)

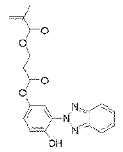
(2-2-11)

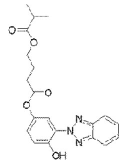
(2-2-12)

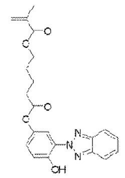
(2-2-13)

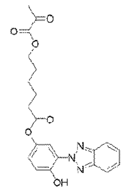
(2-2-14)

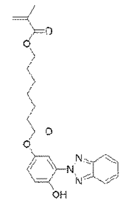
(2-2-15)

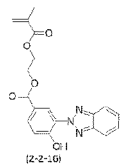
(2-2-16)

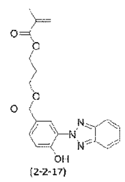
(2-2-17)

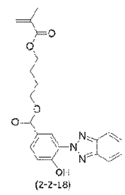
(2-2-18)

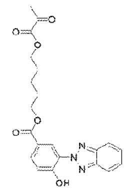
(2-2-19)

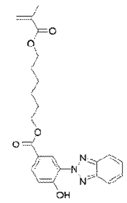
(2-2-20)

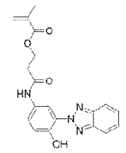
(2-2-21)

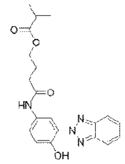
(2-2-22)

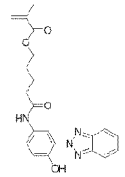
(2-2-23)

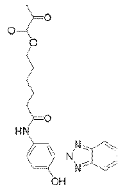
(2-2-24)

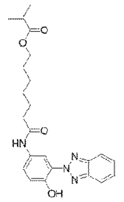
(2-2-25)

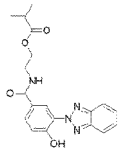
(2-2-26)

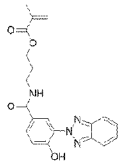
(2-2-27)

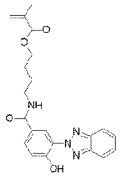
(2-2-28)

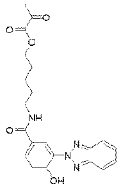
(2-2-29)

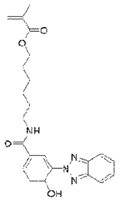
(2-2-30)

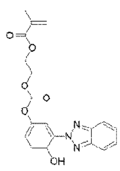
(2-2-31)

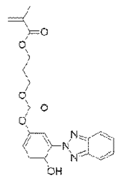
(2-2-32)

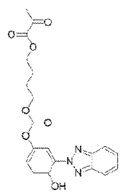
(2-2-33)

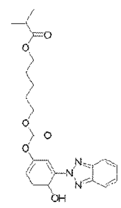
(2-2-34)

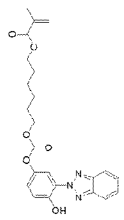
(2-2-35)

[Chem. 22]

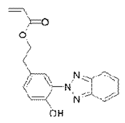
(2-2-36)

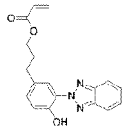
(2-2-37)

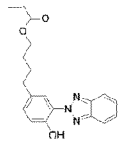
(2-2-38)

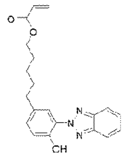
(2-2-39)

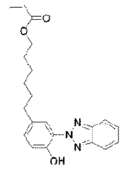
(2-2-40)

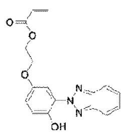
(2-2-41)

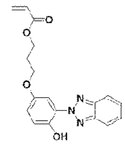
(2-2-42)

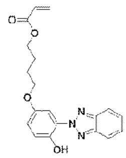
(2-2-43)

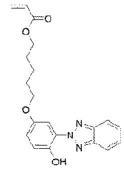
(2-2-44)

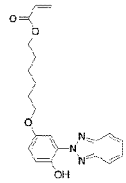
(2-2-45)

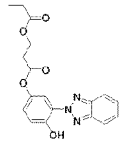
(2-2-46)

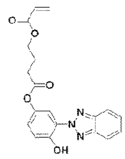
(2-2-47)

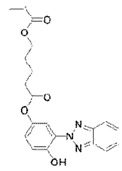
(2-2-48)

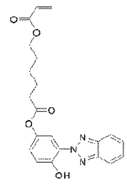
(2-2-49)

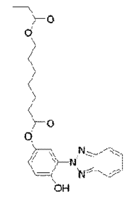
(2-2-50)

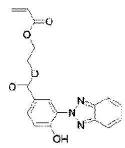
(2-2-51)

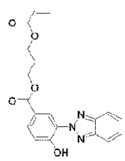
(2-2-52)

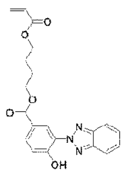
(2-2-53)

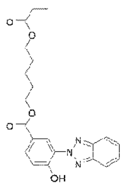
(2-2-54)

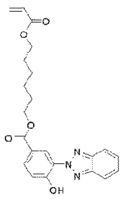
(2-2-55)

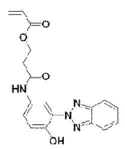
(2-2-56)

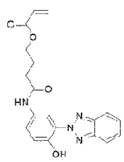
(2-2-57)

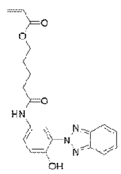
(2-2-58)

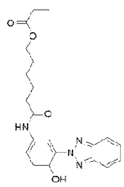
(2-2-59)

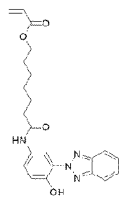
(2-2-60)

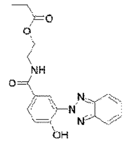
(2-2-61)

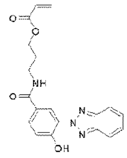
(2-2-62)

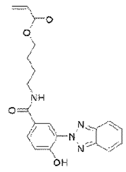
(2-2-63)

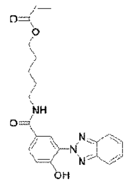
(2-2-64)

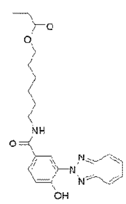
(2-2-65)

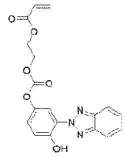
(2-2-66)

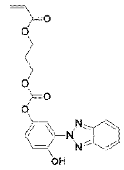
(2-2-67)

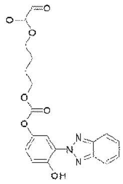
(2-2-68)

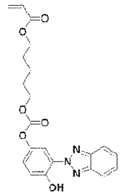
(2-2-69)

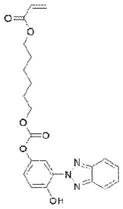
(2-2-70)

[Chem. 23]

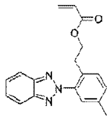
(2-3-1)

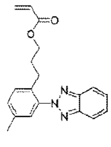
(2-3-2)

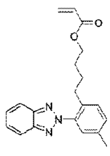
(2-3-3)

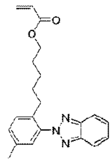
(2-3-4)

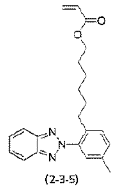
(2-3-5)

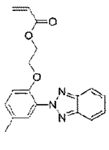
(2-3-6)

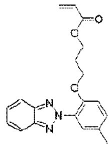
(2-3-7)

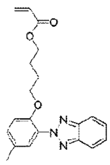
(2-3-8)

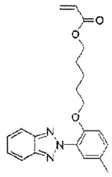
(2-3-9)

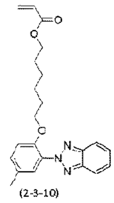
(2-3-10)

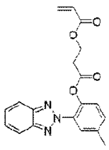
(2-3-11)

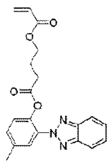
(2-3-12)

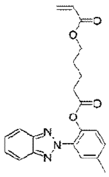
(2-3-13)

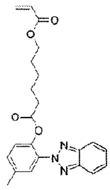
(2-3-14)

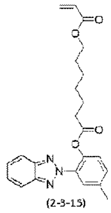
(2-3-15)

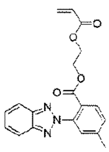
(2-3-16)

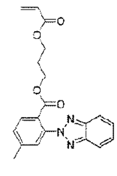
(2-3-17)

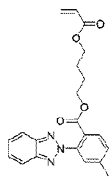
(2-3-18)

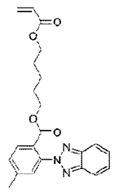
(2-3-19)

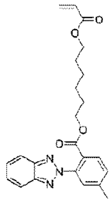
(2-3-20)

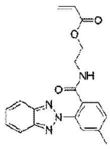
(2-3-21)

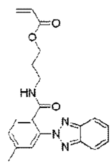
(2-3-22)

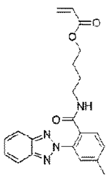
(2-3-23)

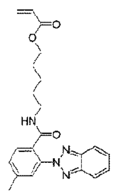
(2-3-24)

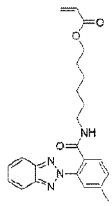
(2-3-25)

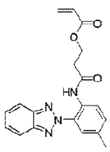
(2-3-26)

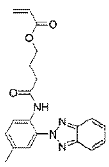
(2-3-27)

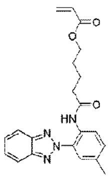
(2-3-28)

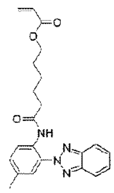
(2-3-29)

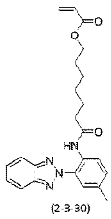
(2-3-30)

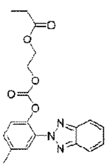
(2-3-31)

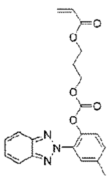
(2-3-32)

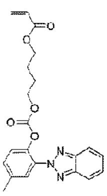
(2-3-33)

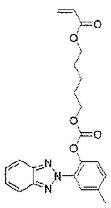
(2-3-34)

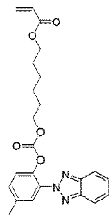
(2-3-35)

[Chem. 24]

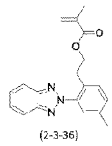
(2-3-36)
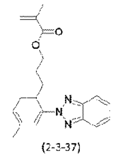
(2-3-37)
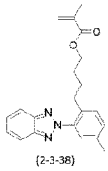
(2-3-38)
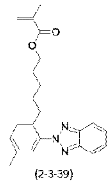
(2-3-39)
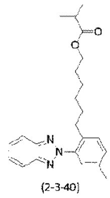
(2-3-40)

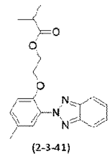
(2-3-41)
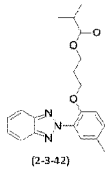
(2-3-42)
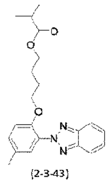
(2-3-43)
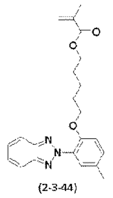
(2-3-44)
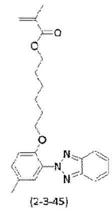
(2-3-45)

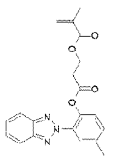
(2-3-46)
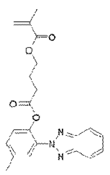
(2-3-47)
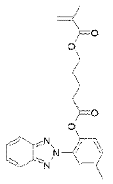
(2-3-48)
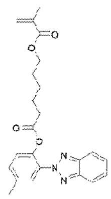
(2-3-49)
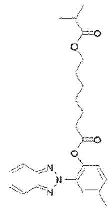
(2-3-50)

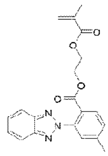
(2-3-51)
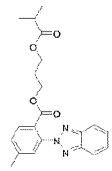
(2-3-52)
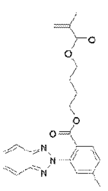
(2-3-53)
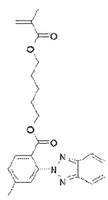
(2-3-54)
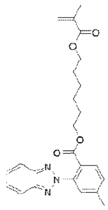
(2-3-55)

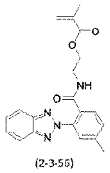
(2-3-56)
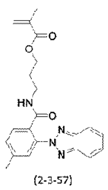
(2-3-57)
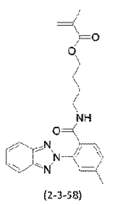
(2-3-58)
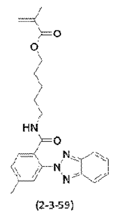
(2-3-59)
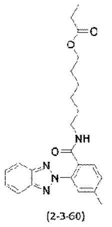
(2-3-60)

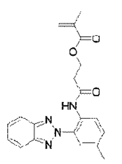
(2-3-61)
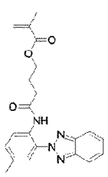
(2-3-62)
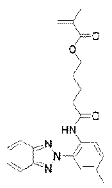
(2-3-63)
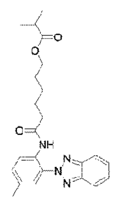
(2-3-64)
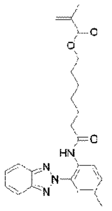
(2-3-65)

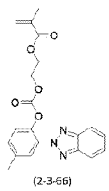
(2-3-66)
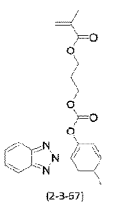
(2-3-67)
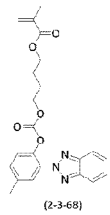
(2-3-68)
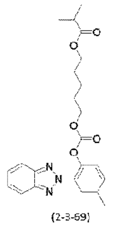
(2-3-69)
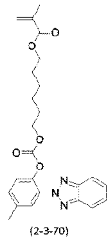
(2-3-70)

[Chem. 25]

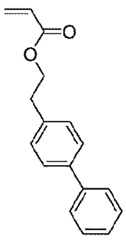
(2-4-1)
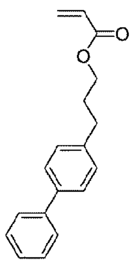
(2-4-2)
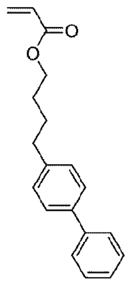
(2-4-3)
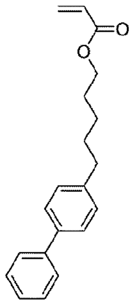
(2-4-4)
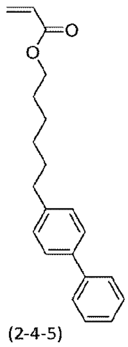
(2-4-5)

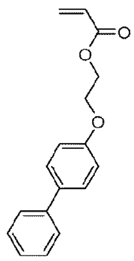
(2-4-6)
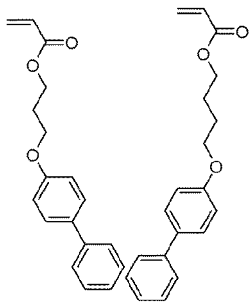
(2-4-7) (2-4-8)
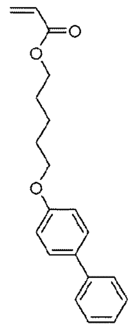
(2-4-9)
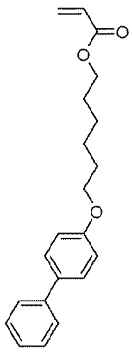
(2-4-10)

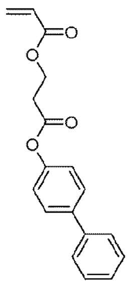
(2-4-11)
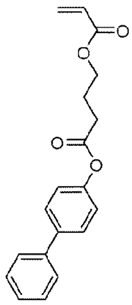
(2-4-12)
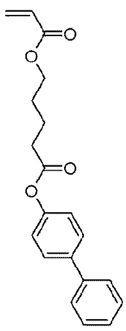
(2-4-13)
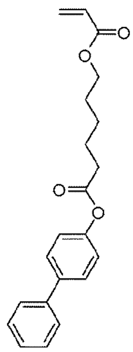
(2-4-14)
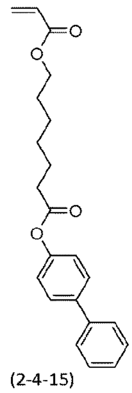
(2-4-15)

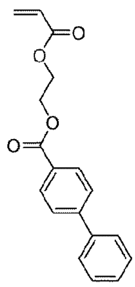
(2-4-16)
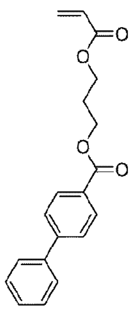
(2-4-17)
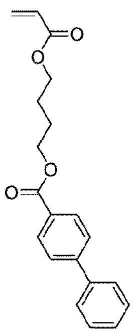
(2-4-18)
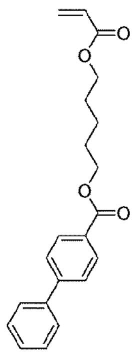
(2-4-19)
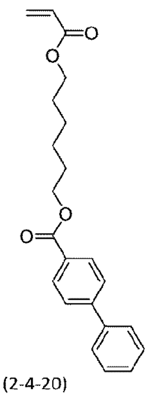
(2-4-20)

[Chem. 26]

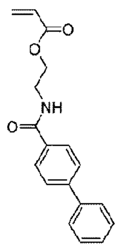
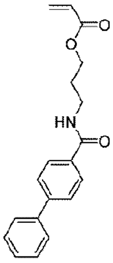
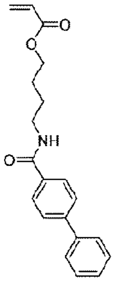
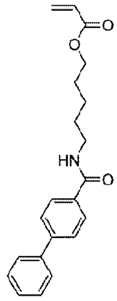
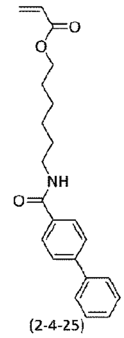

(2-4-21) (2-4-22) (2-4-23) (2-4-24) (2-4-25)

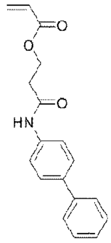
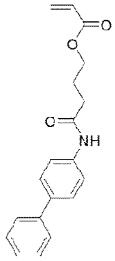
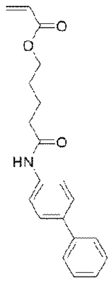
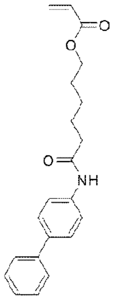
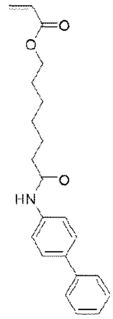

(2-4-26) (2-4-27) (2-4-28) (2-4-29) (2-4-30)

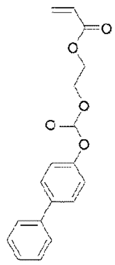
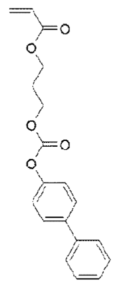
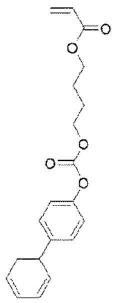
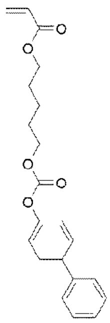
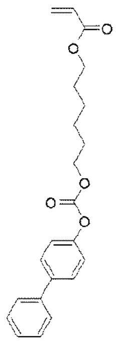

(2-4-31) (2-4-32) (2-4-33) (2-4-34) (2-4-35)

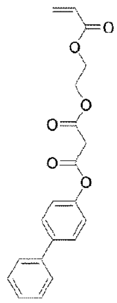
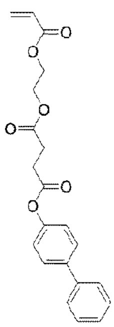
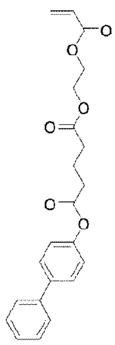
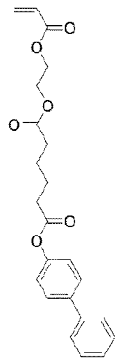
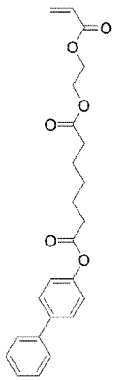

(2-4-36) (2-4-37) (2-4-38) (2-4-39) (2-4-40)

[Chem. 27]

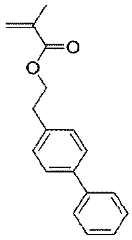
(2-4-41)

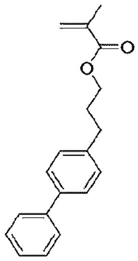
(2-4-42)

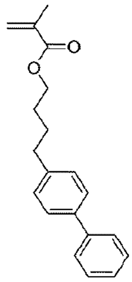
(2-4-43)

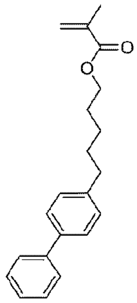
(2-4-44)

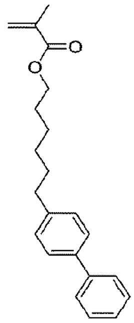
(2-4-45)

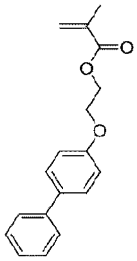
(2-4-46)

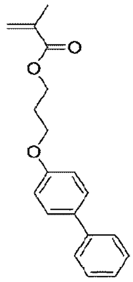
(2-4-47)

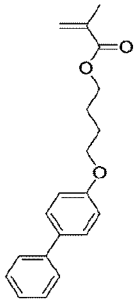
(2-4-48)

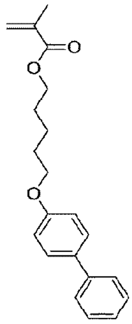
(2-4-49)

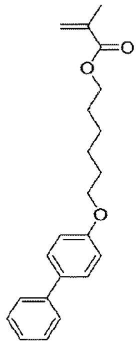
(2-4-50)

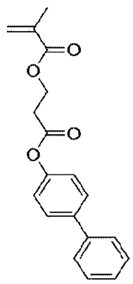
(2-4-51)

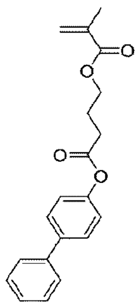
(2-4-52)

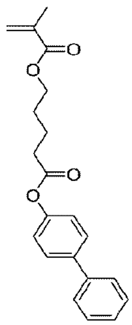
(2-4-53)

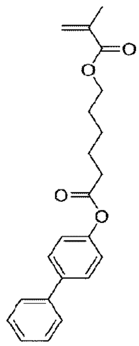
(2-4-54)

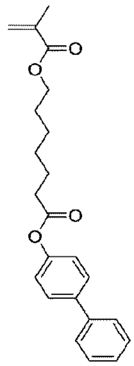
(2-4-55)

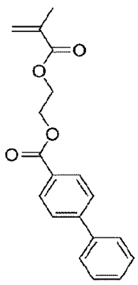
(2-4-56)

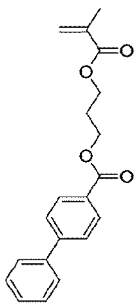
(2-4-57)

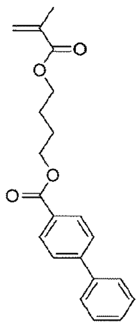
(2-4-58)

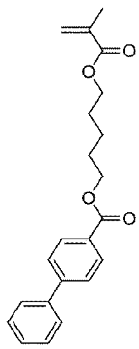
(2-4-59)

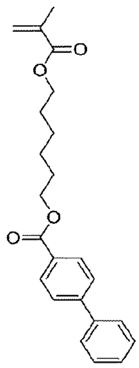
(2-4-60)

[Chem. 28]

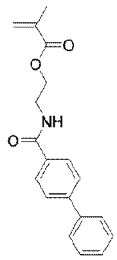 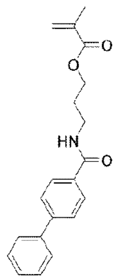 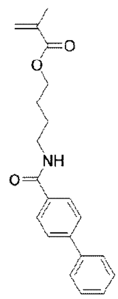 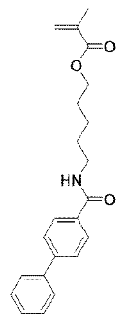 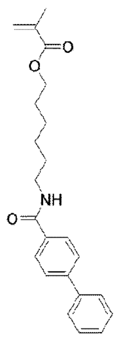

(2-4-61) (2-4-62) (2-4-63) (2-4-64) (2-4-65)

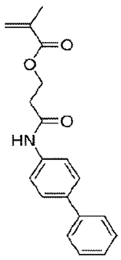 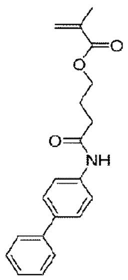 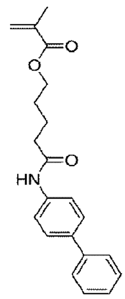 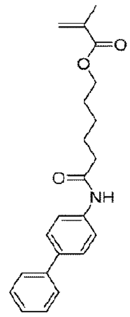 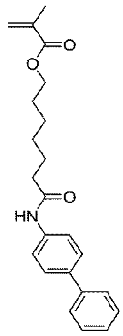

(2-4-66) (2-4-67) (2-4-68) (2-4-69) (2-4-70)

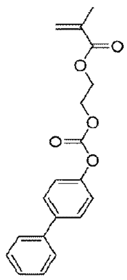 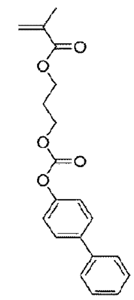 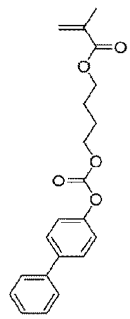 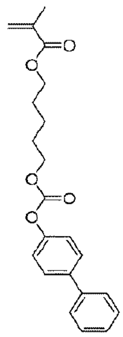 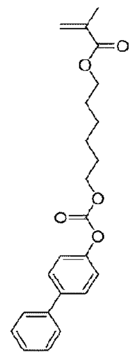

(2-4-71) (2-4-72) (2-4-73) (2-4-74) (2-4-75)

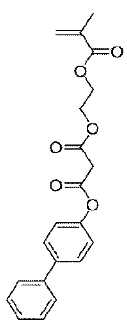 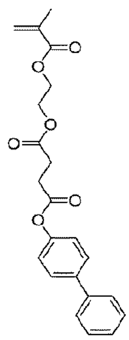 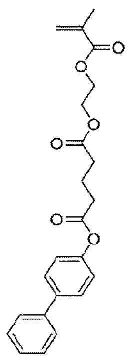 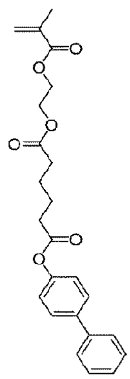 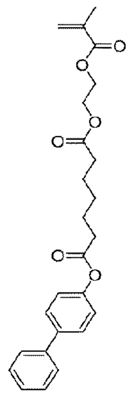

(2-4-76) (2-4-77) (2-4-78) (2-4-79) (2-4-80)

[Chem. 29]

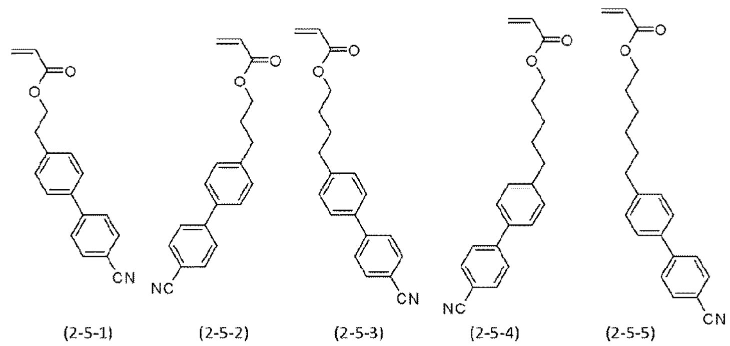

(2-5-1) (2-5-2) (2-5-3) (2-5-4) (2-5-5)

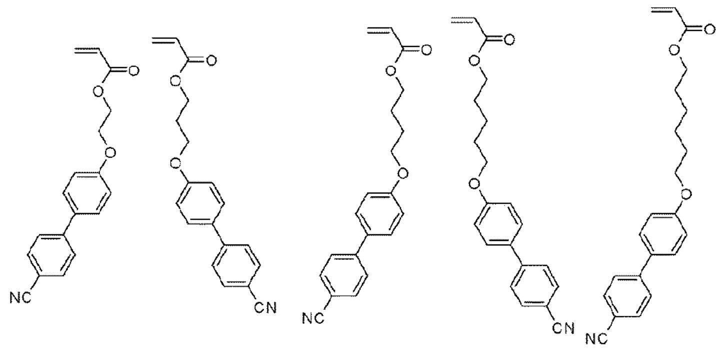

(2-5-6) (2-5-7) (2-5-8) (2-5-9) (2-5-10)

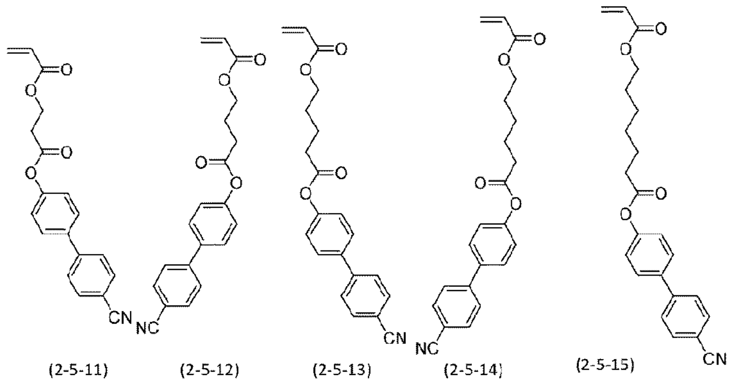

(2-5-11) (2-5-12) (2-5-13) (2-5-14) (2-5-15)

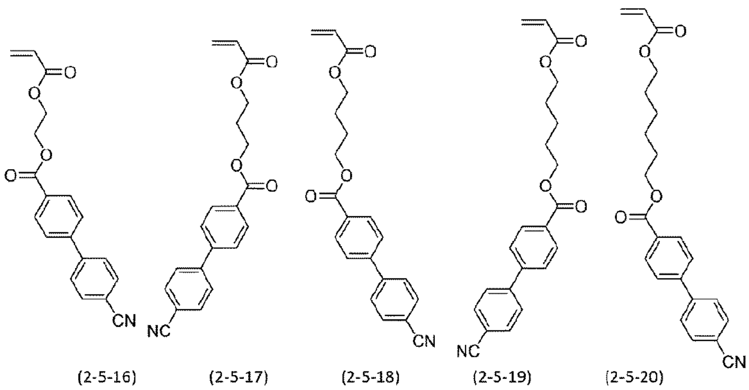

(2-5-16) (2-5-17) (2-5-18) (2-5-19) (2-5-20)

[Chem. 30]

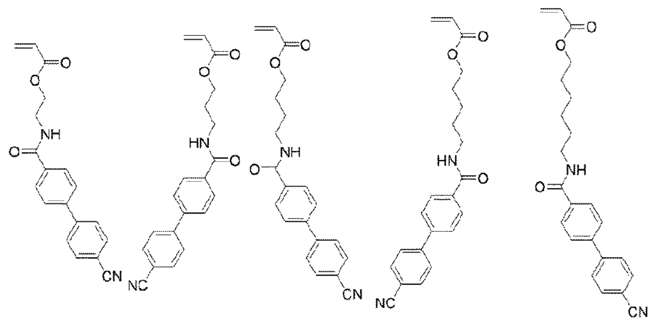

(2-5-21) (2-5-22) (2-5-23) (2-5-24) (2-5-25)

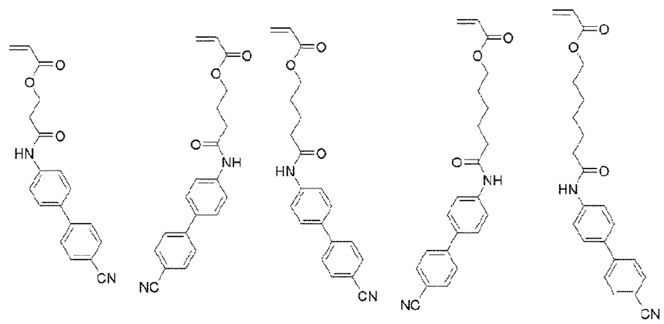

(2-5-26) (2-5-27) (2-5-28) (2-5-29) (2-5-30)

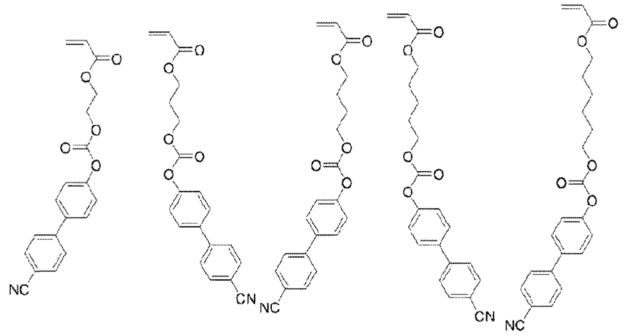

(2-5-31) (2-5-32) (2-5-33) (2-5-34) (2-5-35)

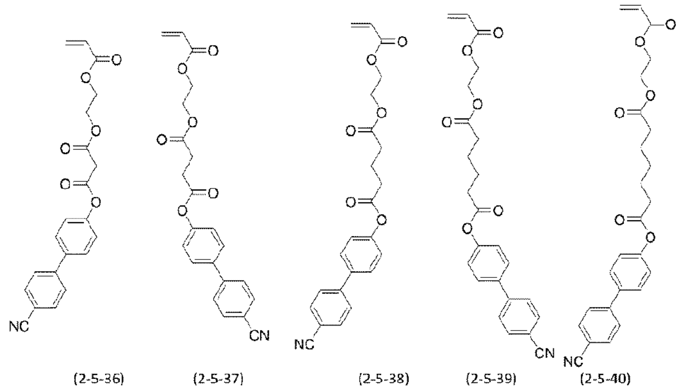

(2-5-36) (2-5-37) (2-5-38) (2-5-39) (2-5-40)

[Chem. 31]

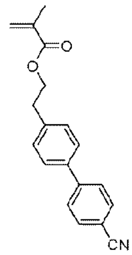
(2-5-41)

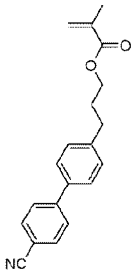
(2-5-42)

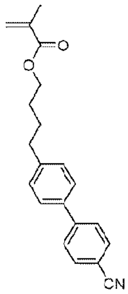
(2-5-43)

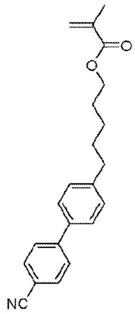
(2-5-44)

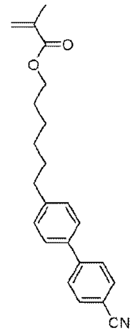
(2-5-45)

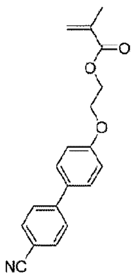
(2-5-46)

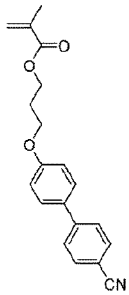
(2-5-47)

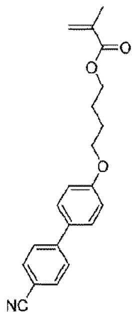
(2-5-48)

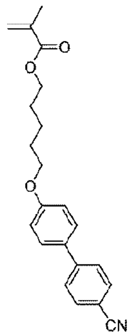
(2-5-49)

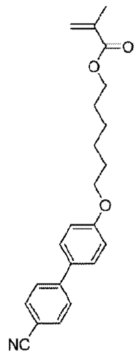
(2-5-50)

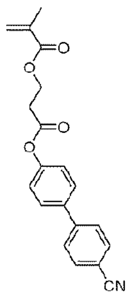
(2-5-51)

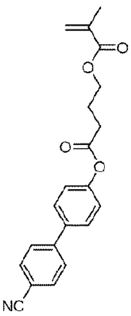
(2-5-52)

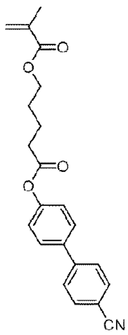
(2-5-53)

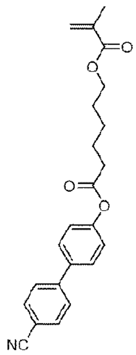
(2-5-54)

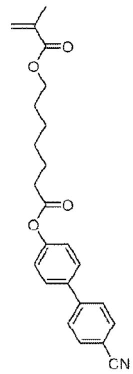
(2-5-55)

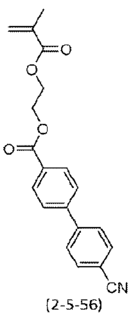
(2-5-56)

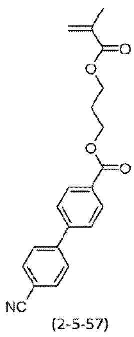
(2-5-57)

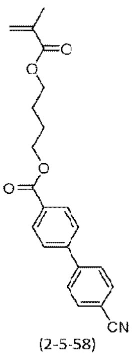
(2-5-58)

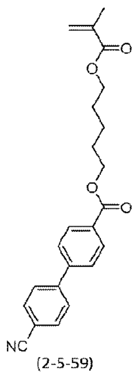
(2-5-59)

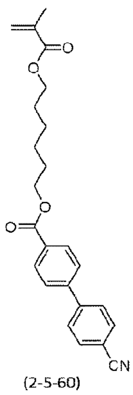
(2-5-60)

[Chem. 32]

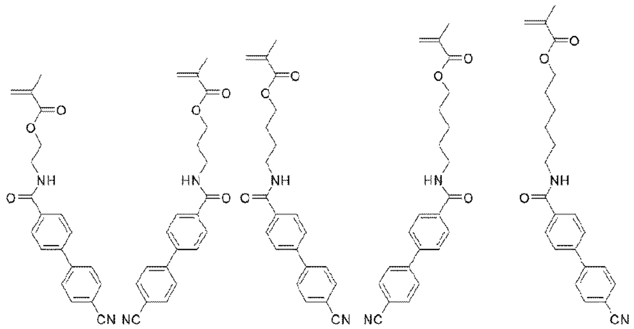

(2-5-61) (2-5-62) (2-5-63) (2-5-64) (2-5-65)

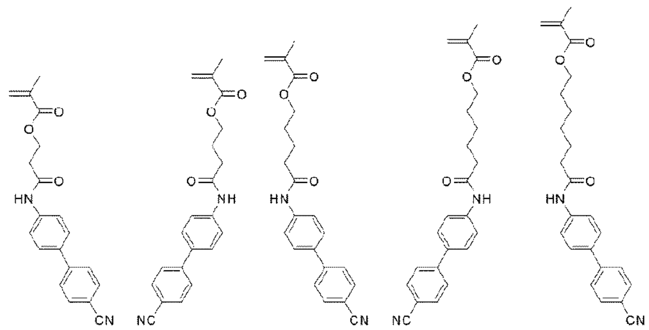

(2-5-66) (2-5-67) (2-5-68) (2-5-69) (2-5-70)

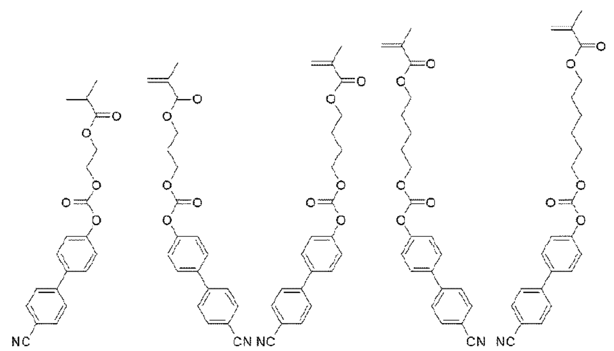

(2-5-71) (2-5-72) (2-5-73) (2-5-74) (2-5-75)

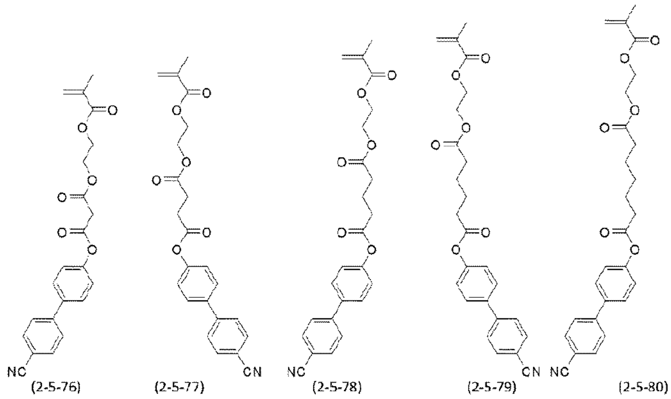

(2-5-76) (2-5-77) (2-5-78) (2-5-79) (2-5-80)

Among them, the residue unit represented by Formula (2) preferably has a structure derived from one selected from the group consisting of monomers (2-1-1) to (2-1-20), (2-2-1) to (2-2-20), (2-2-36) to (2-2-55), (2-3-1) to (2-3-20), (2-4-1) to (2-4-20), (2-4-36) to (2-4-40), (2-5-1) to (2-5-20), and (2-5-36) to (2-5-40), more preferably has a structure derived from one selected from the group consisting of monomers (2-4-8), (2-4-10), (2-4-37), (2-5-8), (2-5-10), and (2-5-37).

The fumaric acid diester resin of the present disclosure may have, for example, one of the structures shown

below.

[Chem. 33]

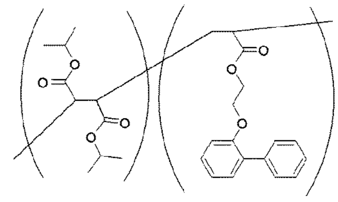

(3-1-1)

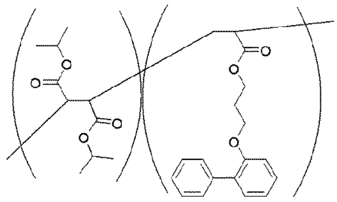

(3-1-2)

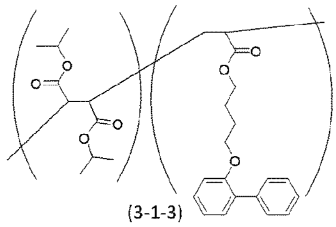

(3-1-3)

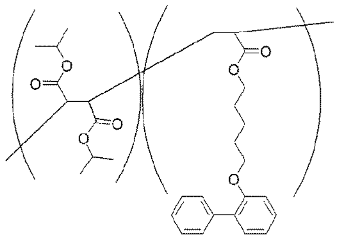

(3-1-4)

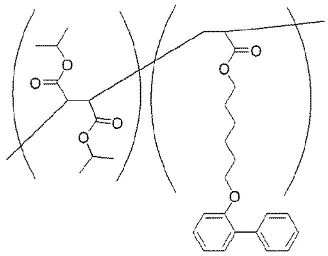

(3-1-5)

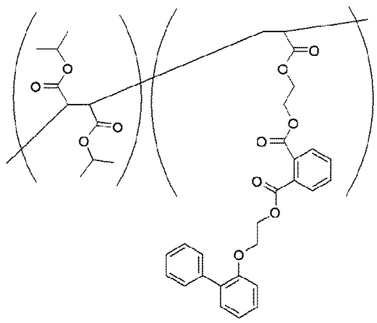

(3-1-6)

[Chem. 34]

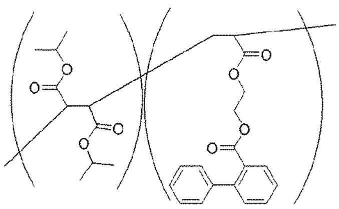

(3-1-7)

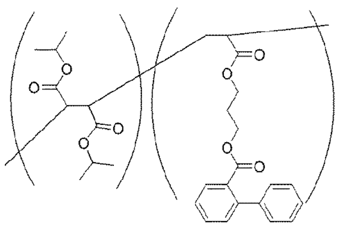

(3-1-8)

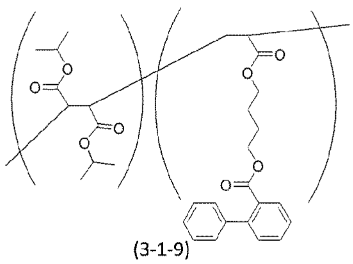

(3-1-9)

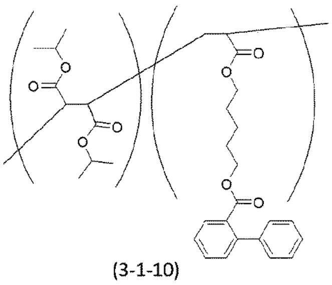

(3-1-10)

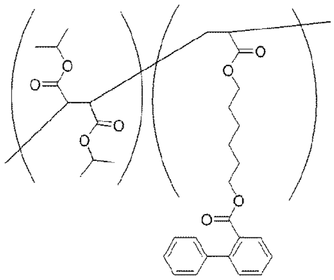

(3-1-11)

[Chem. 35]

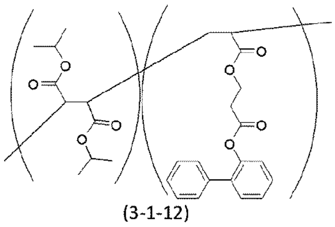
(3-1-12)

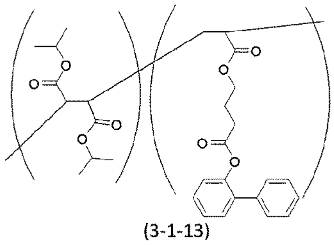
(3-1-13)

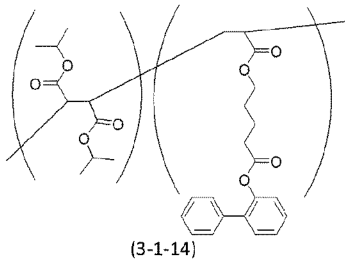
(3-1-14)

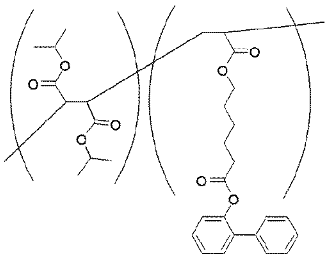
(3-1-15)

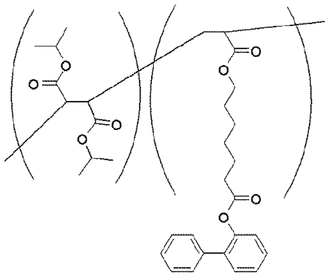
(3-1-16)

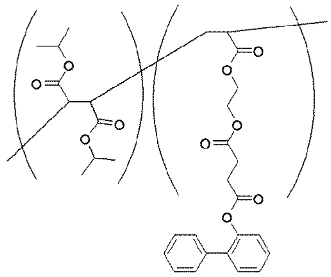
(3-1-17)

[Chem. 36]

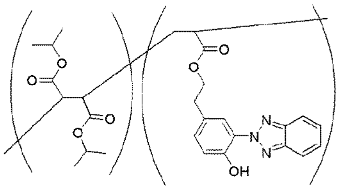
(3-2-1)

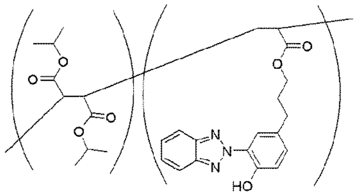
(3-2-2)

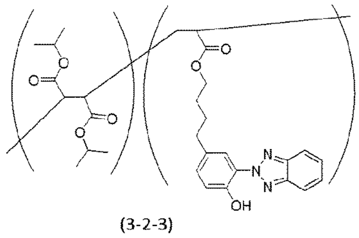
(3-2-3)

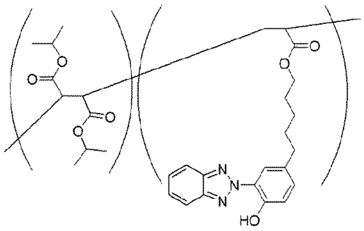
(3-2-4)

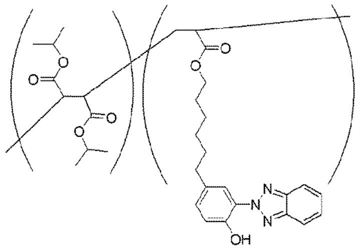
(3-2-5)

[Chem. 37]

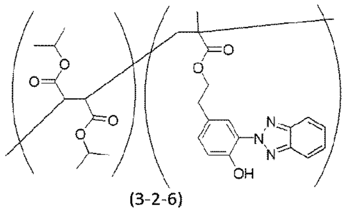

(3-2-6)

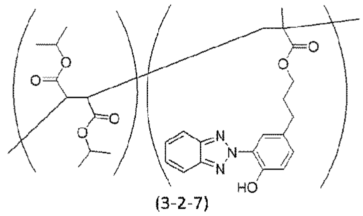

(3-2-7)

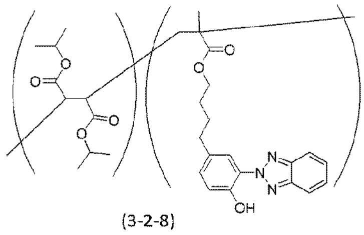

(3-2-8)

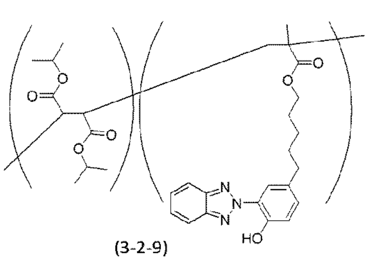

(3-2-9)

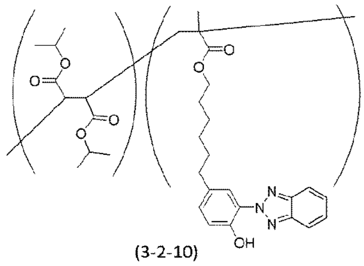

(3-2-10)

[Chem. 38]

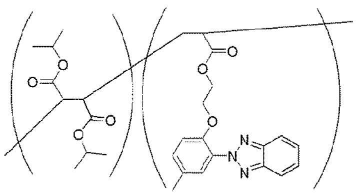

(3-3-1)

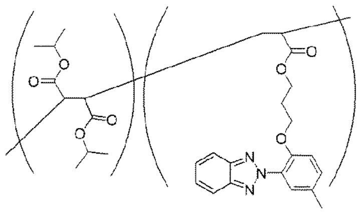

(3-3-2)

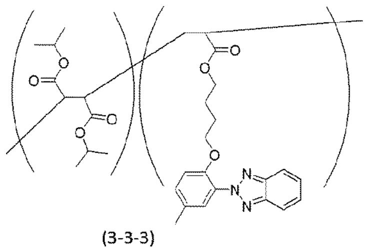

(3-3-3)

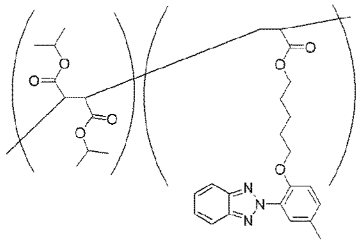

(3-3-4)

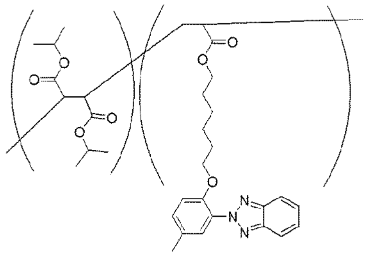

(3-3-5)

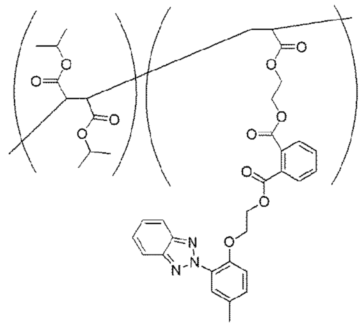

(3-3-6)

[Chem. 39]

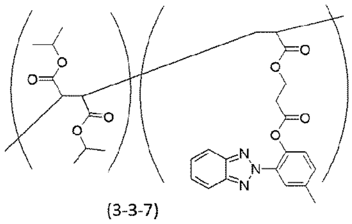
(3-3-7)

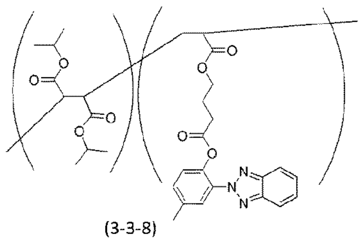
(3-3-8)

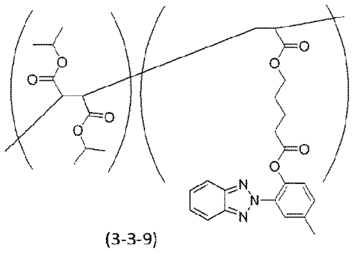
(3-3-9)

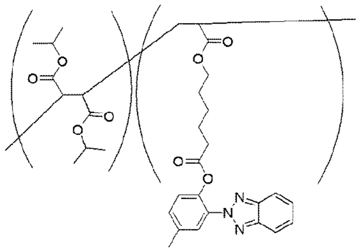
(3-3-10)

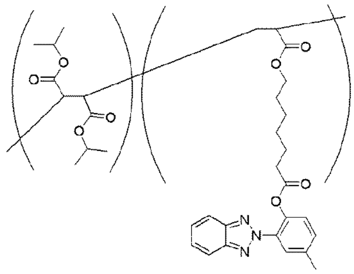
(3-3-11)

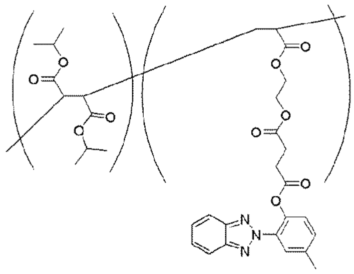
(3-3-12)

[Chem. 40]

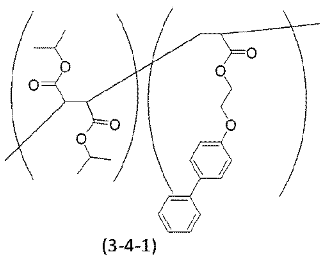
(3-4-1)

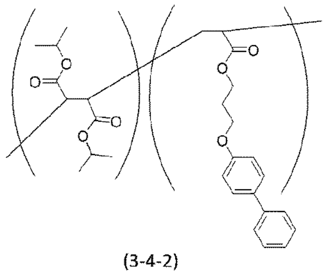
(3-4-2)

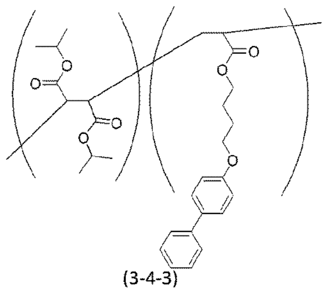
(3-4-3)

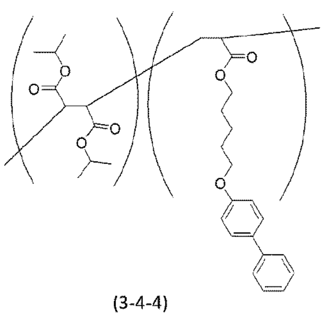
(3-4-4)

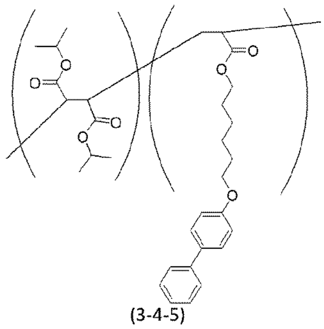
(3-4-5)

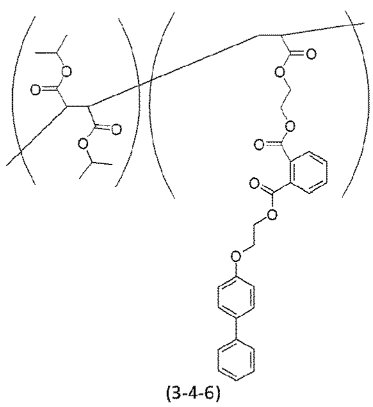
(3-4-6)

[Chem. 41]

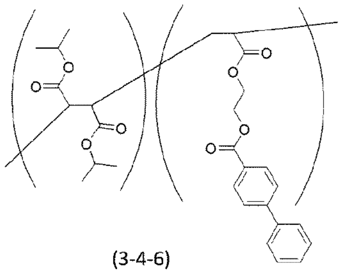
(3-4-6)

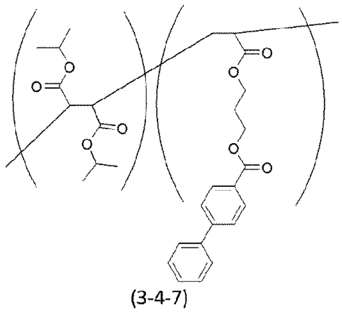
(3-4-7)

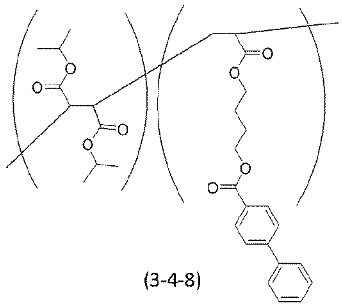
(3-4-8)

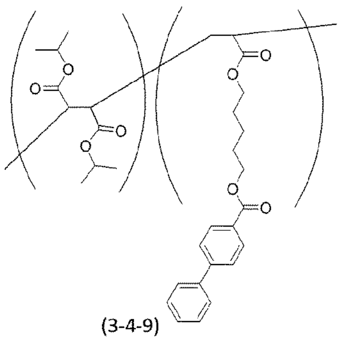
(3-4-9)

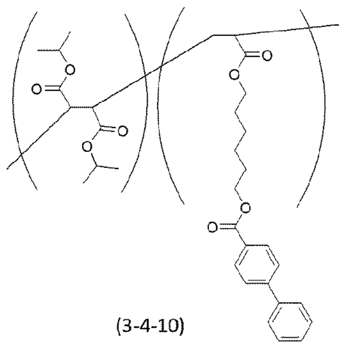
(3-4-10)

[Chem. 42]

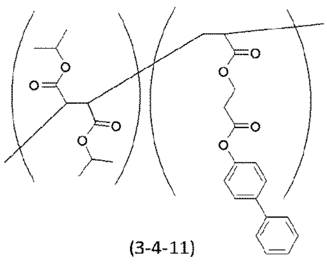
(3-4-11)

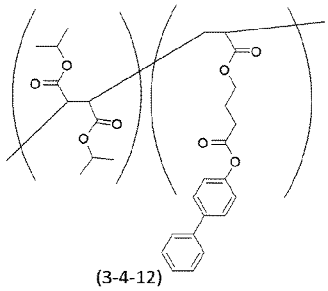
(3-4-12)

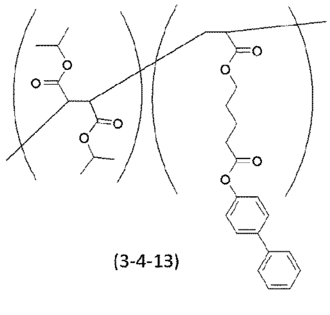
(3-4-13)

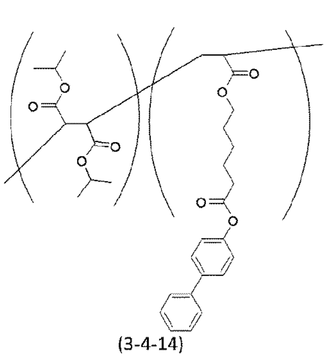
(3-4-14)

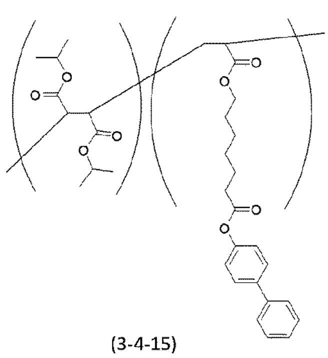
(3-4-15)

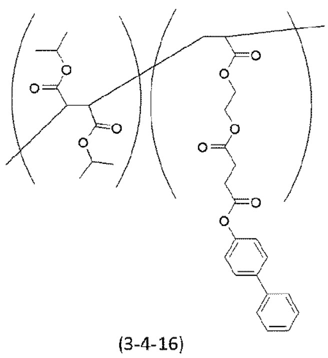
(3-4-16)

[Chem. 43]

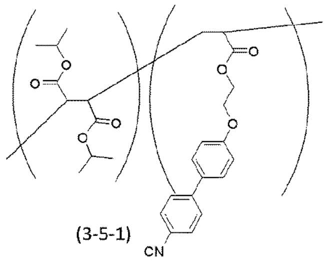
(3-5-1)

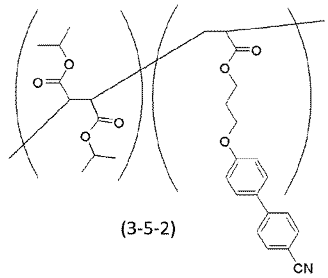
(3-5-2)

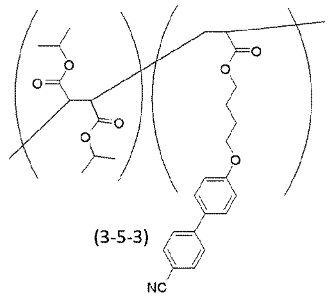
(3-5-3)

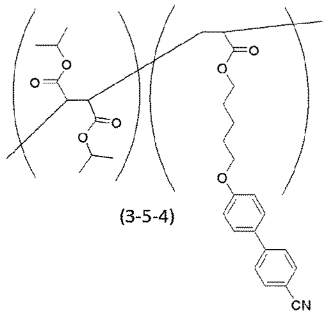
(3-5-4)

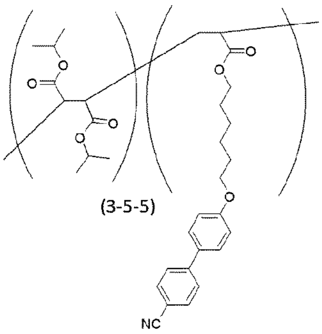
(3-5-5)

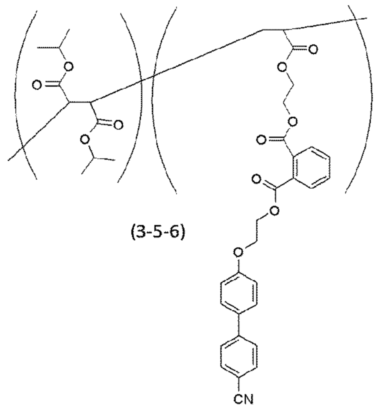
(3-5-6)

[Chem. 44]

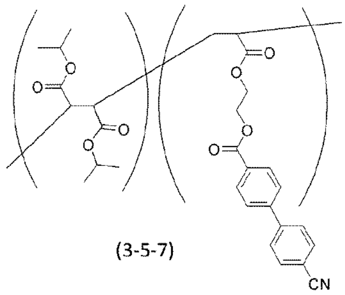
(3-5-7)

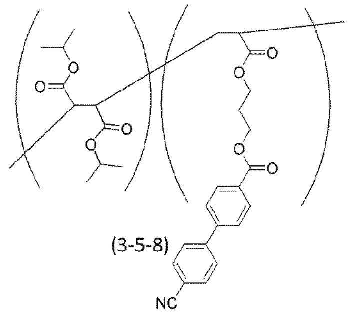
(3-5-8)

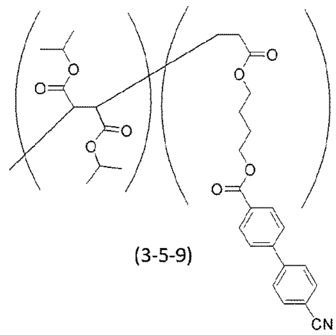
(3-5-9)

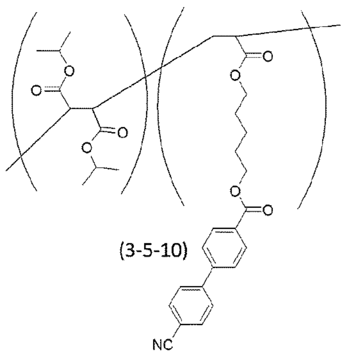
(3-5-10)

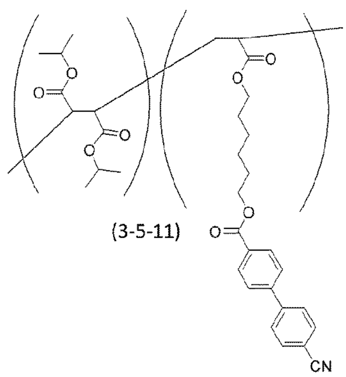
(3-5-11)

[Chem. 45]

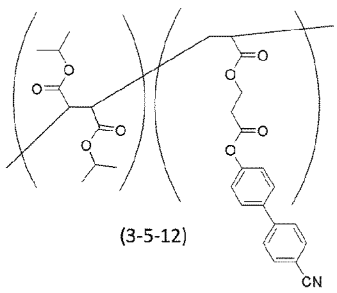

(3-5-12)

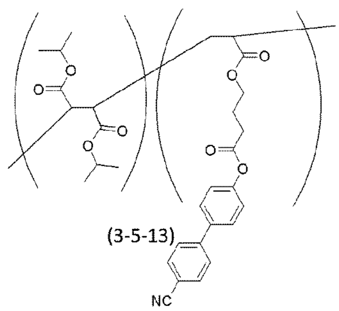

(3-5-13)

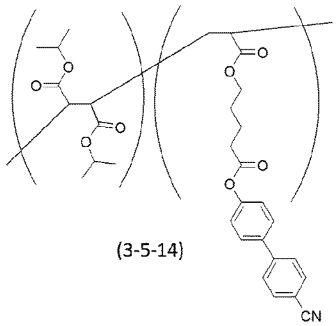

(3-5-14)

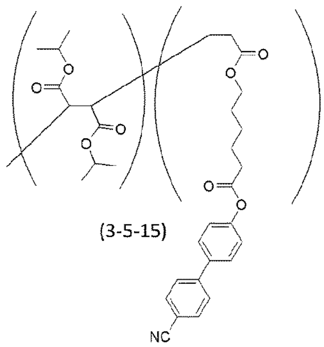

(3-5-15)

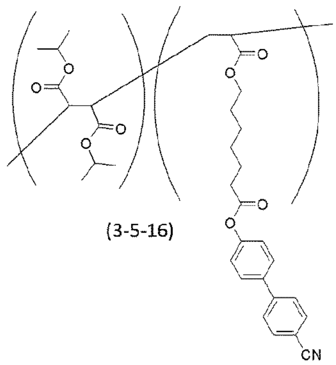

(3-5-16)

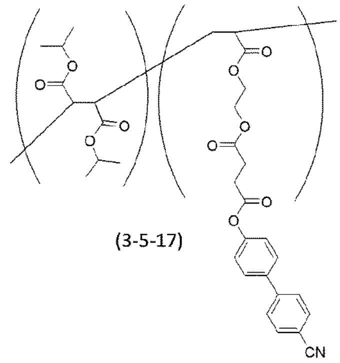

(3-5-17)

[Chem. 46]

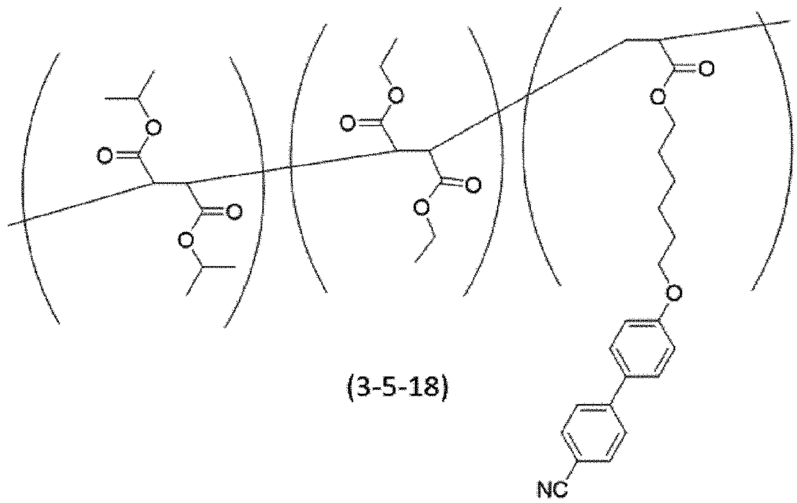

(3-5-18)

Regarding the composition, the resin of the present disclosure preferably includes 50 mol% or more and 99 mol% or less of the residue unit represented by Formula (1) and 1 mol% or more and 50 mol% or less of the residue unit represented by Formula (2), more preferably 70 mol% or more and 99 mol% or less of the residue unit represented by Formula (1) and 1 mol% or more and 30 mol% or less of the residue unit represented by Formula (2), even more preferably 80 mol% or more and 99 mol% or less of the residue unit represented by Formula (1) and 1 mol% or more and 20 mol% or less of the residue unit represented by Formula (2). With this feature, the resin of the present disclosure can be formed into a film that has a lower wavelength dispersion $R_{450}/R_{550}$ and can be used as an optical compensation film to form a display with higher contrast.

To exhibit higher mechanical strength, the resin of the present disclosure preferably has a weight average molecular weight of 150,000 or more and 450,000 or less. To exhibit higher mechanical strength, the resin of the present disclosure more preferably has a weight average molecular weight of 200,000 or more and 450,000 or less, even more preferably 240,000 or more and 450,000 or less. With this feature, the resin of the present disclosure can be formed into a film with higher mechanical strength. In this regard, the weight average molecular weight can be expressed as the standard polystyrene-equivalent value measured by gel permeation chromatography.

The resin of the present disclosure may be produced by any method suitable for the production of the resin. For example, the resin may be produced by carrying out radical polymerization using both monomers for the residue units represented by Formulas (1) and (2). The radical polymerization method may be, for example, a bulk polymerization method, a solution polymerization method, a suspension polymerization method, a precipitation polymerization method, or an emulsion polymerization method.

The radical polymerization is carried out using a polymerization initiator, such as benzoyl peroxide, lauryl peroxide, octanoyl peroxide, acetyl peroxide, di-tert-butyl peroxide, tert-butyl cumyl peroxide, dicumyl peroxide, tert-butyl peroxyacetate, tert-butyl peroxybenzoate, 2,5-dimethyl-2,5-di(2-ethylhexanoylperoxy)hexane, or any other organic peroxide; 2,2'-azobis(2,4-dimethylvaleronitrile), 2,2'-azobis(2-butyronitrile), 2,2'-azobisisobutyronitrile, dimethyl-2'-azobisisobutyrate, 1,1'-azobis(cyclohexane-1-carbonitrile), or any other azo initiator.

The solution polymerization, the suspension polymerization, the precipitation polymerization, or the emulsion polymerization may be carried out using any suitable solvent, such as benzene, toluene, xylene, or any other aromatic solvent; methanol, ethanol, propanol, butanol, or any other alcohol solvent; cyclohexane; dioxane; tetrahydrofuran; acetone; methyl ethyl ketone; N,N-dimethylformamide; dimethyl sulfoxide; isopropyl acetate; water; or any mixture of these solvents.

The radical polymerization temperature may be appropriately set depending on the decomposition temperature of the polymerization initiator. In general, for ease of reaction control, the radical polymerization is preferably carried out at a temperature in the range of 30 to 150°C.

Hereinafter, the film according to an embodiment of the present disclosure will be described in detail.

The resin of the present disclosure is advantageously used to form a film for use on optical components. Specifically, the resin of the present disclosure can be formed and uniaxially or multiaxially stretched into a film with excellent retardation properties. Such a film can be used as an optical compensation film, which will exhibit a desired retardation for use in displays and other devices. In a case where the resin of the present disclosure is used to form an optical compensation film, the optical compensation film will exhibit desired retardation properties. Specifically, the resin of the present disclosure can be formed and stretched into a film with a low wavelength dispersion $R_{450}/R_{550}$, which will provide an optical compensation film with excellent retardation properties.

The film using the resin of the present disclosure will have retardation properties suitable for optical compensation by means of optical components.

The film using the resin of the present disclosure preferably has a thickness of 80 um or less, more preferably 50 um or less, even more preferably 30 um or less. Thinning of the film makes it possible to reduce the thickness of displays.

The wavelength dispersion properties of the film using the resin of the present disclosure may be expressed by the ratio $R_{450}/R_{550}$ of the retardation $R_{450}$ at 450 nm to the retardation $R_{550}$ at 550 nm. The film preferably satisfies the condition of $R_{450}/R_{550} < 1.015$. The film with an $R_{450}/R_{550}$ ratio in such a range can successfully control the contrast of displays or other optical components. In order to allow displays or other optical components to provide improved contrast, the film preferably has an $R_{450}/R_{550}$ ratio of less than 1.00 ($R_{450}/R_{550} < 1.00$), more preferably less than 0.90 ($R_{450}/R_{550} < 0.90$), so that it can exhibit reverse wavelength dispersion properties. The $R_{450}/R_{550}$ ratio of the film may have a lower limit of 0.80 or more and should preferably be in the range of 0.80 or more and less than 1.015, more preferably in the range of 0.80 or more and less than 1.00, even more preferably in the range of 0.80 or more and less than 0.90.

The film including the resin of the present disclosure preferably has an in-plane retardation (Re) of 10 to 300 nm, so that it can control the in-plane retardation of optical components for displays or the like and achieve optical compensation. For good control of the contrast of displays or the like, the film more preferably has an in-plane retardation (Re) of 50 to 280 nm, even more preferably 70 to 200 nm. The film also preferably has an out-of-plane retardation (Rth) of -200 to 50 nm, so that it can control the out-of-plane retardation (Rth) of optical components for displays or the like and achieve optical compensation. For good control of the contrast of displays or the like, the film more preferably has an out-of-plane retardation (Rth) of -160 to 30 nm, even more preferably -90 to 0 nm.

Many components for displays and other devices have a positive Rth value. This suggests that an assembly of components for a display may have a large Nz coefficient, which may cause a problem such as color shift for IPS mode liquid crystal displays, etc. The film including the resin of the present disclosure may have a negative Rth value. In that case, the film can control the Rth value of such an assembly of components for a display. Therefore, the resin with such a feature can be used to form an optical compensation film that allows displays to have a wide viewing angle.

In this regard, the in-plane retardation (Re) of the film may be calculated by Formula (a) below, and the out-of-plane retardation (Rth) of the film may be calculated by Formula (b) below.

$$Re = (nx - ny) \times d \quad (a)$$

$$Rth = \{(nx + ny)/2 - nz\} \times d \quad (b)$$

In Formulas (a) and (b), nx is refractive index of an in-plane slow axis direction of the film,

ny is refractive index of an in-plane fast axis direction of the film,
nz is the out-of-plane refractive index of the film, and d is the thickness (nm) of the film.

The term "fast axis direction" means the direction in which the refractive index is minimum, and the term "slow axis direction" means the direction in which the refractive index is maximum.

The film including the resin of the present disclosure preferably has an Nz coefficient of -5.0 or more and 0.9 or less so that it can provide a wide viewing angle when used as an optical compensation film for optical components, such as displays. For a wider viewing angle, the film more preferably has an Nz coefficient of -1.0 or more and 0.7 or less, even more preferably -0.5 or more and 0.5 or less.

In this regard, the Nz coefficient (Nz) of the film may be calculated by Formula (c) below.

$$Nz = (nx - nz)/(nx - ny) \quad (c)$$

In Formula (c), nx, ny, and nz have the same meaning as those in Formulas (a) and (b).

The film including the resin of the present disclosure may contain a wavelength dispersion adjusting agent that has a positive birefringence to improve the wavelength dispersion properties.

The wavelength dispersion adjusting agent having a positive birefringence is an additive having a positive birefringence and a high wavelength dispersion. The wavelength dispersion of the resin with a negative birefringence can be modified using a wavelength dispersion adjusting agent with a positive birefringence. The wavelength dispersion adjusting agent is preferably an aromatic compound, which can have a large positive wavelength dispersion and high wavelength dispersion adjusting performance. Examples of such an aromatic compound include naphthalene, anthracene, an ultraviolet absorber, and a liquid crystal material, among which an ultraviolet absorber or a liquid crystal material is preferred since it can particularly have a large positive birefringence and be easily oriented under stress.

Preferred examples of the ultraviolet absorber include benzotriazole compounds, benzophenone compounds, triazine compounds, and benzoate compounds. The ultraviolet absorber is preferably at least one of a benzotriazole compound or a triazine compound, which can particularly have a large positive wavelength dispersion and high wavelength dispersion adjusting performance.

Preferred examples of the liquid crystal material include nematic liquid crystals, which can particularly have a large positive birefringence and be easily oriented under stress. Preferred examples of the nematic liquid crystal include biphenyl compounds and terphenyl compounds. The liquid crystal material is preferably at least one of a cyanobiphenyl compound or a cyanoterphenyl compound, which can particularly have a large positive wavelength dispersion and high wavelength dispersion adjusting performance.

In particular, the wavelength dispersion adjusting agent with a positive birefringence is preferably at least one selected from the group consisting of a benzotriazole compound, a benzophenone compound, a triazine compound, a benzoate compound, a biphenyl compound, and a terphenyl compound.

Examples of the wavelength dispersion adjusting agent with a positive birefringence include 2-(2'-hydroxy-5'-methylphenyl)benzotriazole, 2-(2'-hydroxy-5'-tert-butylphenyl)benzotriazole, 2-(2'-hydroxy-5'-tert-octylphenyl)benzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-[2-hydroxy-3,5-bis($\alpha$,$\alpha$-dimethylbenzyl)phenyl]benzotriazole, 2,2'-methylenebis[6-(benzotriazol-2-yl)-4-tert-octylphenol], 2-(2H-benzotriazol-2-yl)-4,6-bis(1-methyl-1-phenylethyl)phenol, and other benzotriazole compounds; 2-hydroxy-4-methoxybenzophenone, 2,2'-dihydroxy-4-methoxybenzophenone, 2,2'-dihydroxy-4,4'-methoxybenzophenone, 2,4-dihydroxybenzophenone, 2,2',4,4'-tetrahydroxybenzophenone, 2-hydroxy-4-methoxy-5-sulfobenzophenone, and other benzophenone compounds; 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-bis(2,4-dimethylphenyl)-6-(2-hydroxy-4-n-octyloxyphenyl)-1,3,5-triazine, 2,6-diphenyl-4-(2-hydroxy-4-hexyloxyphenyl)-1,3,5-triazine, 2,4-bis(2,4-dimethylphenyl)-6-(2-hydroxy-4-[2-(2-ethylhexanoyloxy)ethoxy]phenyl)-1,3,5-triazine, and other triazine compounds; 2,4-di-tert-butylphenyl-3,5-di-tert-butyl-4-hydroxybenzoate, 2,4-di-tert-pentylphenyl-3,5-di-tert-butyl-4-hydroxybenzoate, hexadecyl-3,5-di-tert-butyl-4-hydroxybenzoate, and other benzoate compounds; 4-cyano-4'-methylbiphenyl, 4-cyano-4'-ethylbiphenyl, 4-cyano-4'-propylbiphenyl, 4-cyano-4'-butylbiphenyl, 4-cyano-4'-pentylbiphenyl, 4-cyano-4'-hexylbiphenyl, 4-cyano-4'-heptylbiphenyl, 4-cyano-4'-n-octylbiphenyl, 4-cyano-4'-nonylbiphenyl, 4-cyano-4'-decylbiphenyl, 4-cyano-4'-undecylbiphenyl, 4-cyano-4'-dodecylbiphenyl, 4-cyano-4'-methoxybiphenyl, 4-cyano-4'-ethoxybiphenyl, 4-cyano-4'-propoxybiphenyl, 4-cyano-4'-butoxybiphenyl, 4-cyano-4'-pentyloxybiphenyl, 4-cyano-4'-hexyloxybiphenyl, 4-cyano-4'-heptyloxybiphenyl, 4-cyano-4'-n-octyloxybiphenyl, 4-cyano-4'-nonyloxybiphenyl, 4-cyano-4'-decyloxybiphenyl, 4-cyano-4'-undecyloxybiphenyl, 4-cyano-4'-dodecyloxybiphenyl, 4,4'-bis(trans-4-propylcyclohexyl)biphenyl, trans-4-cyano-4'-(4-pentylcyclohexyl)biphenyl, and other biphenyl compounds; 4-cyano-4"-methyl-p-terphenyl, 4-cyano-4"-ethyl-p-terphenyl, 4-cyano-4"-propyl-p-terphenyl, 4-cyano-4"-butyl-p-terphenyl, 4-cyano-4"-pentyl-p-terphenyl, 4-cyano-4"-hexyl-p-terphenyl, 4-cyano-4"-heptyl-p-terphenyl, 4-cyano-4"-n-octyl-p-terphenyl, 4-cyano-4"-nonyl-p-terphenyl, 4-cyano-4"-decyl-p-terphenyl, 4-cyano-4"-undecyl-p-terphenyl, 4-cyano-4"-dodecyl-p-terphenyl, 4-cyano-4"-methoxy-p-terphenyl, 4-cyano-4"-ethoxy-p-terphenyl, 4-cyano-4"-propoxy-p-terphenyl, 4-cyano-4"-butoxy-p-terphenyl, 4-cyano-4"-pentyloxy-p-terphenyl, 4-cyano-4"-hexyloxy-p-terphenyl, 4-cyano-4"-heptyloxy-p-terphenyl, 4-cyano-4"-n-octyloxy-p-terphenyl, 4-cyano-4"-nonyloxy-p-terphenyl, 4-cyano-4"-decyloxy-p-terphenyl, 4-cyano-4"-undecyloxy-p-terphenyl, 4-cyano-4"-dodecyloxy-p-terphenyl, 4-amino-p-terphenyl, 4,4"-diamino-p-terphenyl, 4-nitro-p-terphenyl, 4,4"-dinitro-p-terphenyl, 4"-ethyl-2'-fluoro-4-propyl-p-terphenyl, 2'-fluoro-4-pentyl-4"-propyl-p-terphenyl, 2',3,4-trifluoro-4"-propyl-p-terphenyl, 2',3,4,5-tetrafluoro-4"-propyl-p-terphenyl, and other terphenyl compounds.

In view of compatibility with the resin, in-plane retardation, and wavelength dispersion control, the wavelength dispersion adjusting agent having a positive birefringence preferably has a molecular weight of 150 to 5,000, more preferably 250 to 2,000, even more preferably 280 to 1,000. In this regard, molecular weight indicates its molecular weight if the wavelength dispersion adjusting agent exhibiting positive birefringence is a low-molecular compound whose molecular weight can be calculated from its chemical structure, and indicates the weight average molecular weight in terms of standard polystyrene in the case of a polymer compound having repeating units.

The ratio of the wavelength dispersion adjusting agent having a positive birefringence is preferably 0.01 to 19 mass%, more preferably 2 to 10 mass%, even more preferably 3 to 8 mass% in view of higher mechanical properties, compatibility with the resin, in-plane retardation, and wavelength dispersion control.

The film including the resin of the present disclosure may contain an antioxidant for allowing the film to serve as an optical film with improved thermal stability. Examples of the antioxidant include hindered phenol antioxidants, phosphorus antioxidants, sulfur antioxidants, lactone antioxidants, amine antioxidants, hydroxylamine antioxidants, vitamin E antioxidants, and other antioxidants. These antioxidants may be used alone, or two or more of these antioxidants may be used in combination.

The film including the resin of the present disclosure may contain a compound generally known as a plasticizer for the purpose of, for example, allowing the film to serve as an optical film with improved mechanical properties, flexibility, water absorption resistance, reduced water vapor transmission rate, or adjusted retardation. Such a plasticizer may be, for example, a phosphoric acid ester or a carboxylic acid ester. Such a plasticizer may also be an acrylic polymer.

Examples of the phosphoric acid ester include triphenyl phosphate, tricresyl phosphate, and phenyl diphenyl phosphate.

Examples of the carboxylic acid ester include phthalic acid esters, citric acid esters, fatty acid esters, glycerol esters, and alkyl phthalyl alkyl glycolates. Examples of the phthalic acid ester include dimethyl phthalate, diethyl phthalate, dicyclohexyl phthalate, dioctyl phthalate, and diethylhexyl phthalate. Examples of the citric acid ester include acetyl triethyl citrate and acetyl tributyl citrate. Examples of the fatty acid ester include butyl oleate, methyl acetyl ricinoleate, and dibutyl sebacate. Examples of the glycerol ester include triacetin and trimethylolpropane tribenzoate. Examples of the alkyl phthalyl alkyl glycolate include methyl phthalyl methyl glycolate, ethyl phthalyl ethyl glycolate, propyl phthalyl propyl glycolate, butyl phthalyl butyl glycolate, octyl phthalyl octyl glycolate, methyl phthalyl ethyl glycolate, ethyl phthalyl methyl glycolate, ethyl phthalyl propyl glycolate, propyl phthalyl ethyl glycolate, methyl phthalyl propyl glycolate, methyl phthalyl butyl glycolate, ethyl phthalyl butyl glycolate, butyl phthalyl methyl glycolate, butyl phthalyl ethyl glycolate, propyl phthalyl butyl glycolate, butyl phthalyl propyl glycolate, methyl phthalyl octyl glycolate, ethyl phthalyl octyl glycolate, octyl phthalyl methyl glycolate, and octyl phthalyl ethyl glycolate. These plasticizers may be used alone, or a mixture of two or more of these plasticizers may be used.

The film including the resin of the present disclosure may contain an additional polymer, a surfactant, a polymer electrolyte, a conductive complex, a pigment, a dye, an antistatic agent, an antiblocking agent, a lubricant, or any other additive without departing from the gist of the invention.

If necessary, the film including the resin of the present disclosure may be stacked on a film including a different resin. Such a different resin may be, for example, polyether sulfone, polyarylate, polyethylene terephthalate, polynaphthalene terephthalate, polycarbonate, cyclic polyolefin, maleimide resin, fluorinated resin, or polyimide. A hard coat layer or a gas barrier layer may also be stacked on the film including the resin of the present disclosure.

The film including the resin of the present disclosure may be used as an optical compensation film. Such an optical compensation film is preferably formed by uniaxially or multiaxially stretching a film including the resin of the present disclosure.

The film including the resin of the present disclosure may be produced by any suitable method, such as a melt film forming method or a solution casting method.

Examples of the melt film forming method include T-die melt extrusion, calendering, heat pressing, co-extrusion,

co-melting, multilayer extrusion, and inflation molding. Although not particularly limited, the melt extrusion method using a T-die is preferable because of ease of stretching after film formation.

In the melt film forming method, the film forming temperature is preferably 200 to 265°C, more preferably 210 to 260°C, even more preferably 220 to 258°C, from the viewpoint of a forming method suitable for making the film thickness more uniform and more suitable for preventing film defects and coloring. In general, the film forming temperature is the temperature measured at the outlet of a die for extruding the melted resin.

The solution casting method may include casting, on a support, a solution of the resin of the present disclosure in a solvent (hereinafter such a solution will be referred to as a "dope"); and then removing the solvent from the dope by heating or any other means to form a film. In this process, the method of casting the dope onto the support base includes T-die method, doctor blade method, bar coater method, roll coater method, lip coater method, or any other suitable method. Specifically, one of the most common industrial methods includes continuously extruding the dope from a die onto a belt- or drum-shaped support. The support substrate used may be, for example, a glass substrate, a metal substrate, such as a stainless steel or ferrotype substrate, or a film of polyethylene terephthalate or any other material. In the solution casting method, the viscosity of the dope is a very important factor for the formation of a film having high transparency, high thickness accuracy, and high surface smoothness. The viscosity of the dope is preferably 10 to 20,000 cPs, more preferably 100 to 10,000 cPs.

The film including the resin of the present disclosure is preferably formed by further stretching the film obtained by the above film-forming method, and particularly preferably by uniaxial stretching or unbalanced biaxial stretching.

The stretching temperature is preferably, but not limited to, 50 to 200°C, more preferably 90 to 180°C, for good retardation properties. For good retardation properties, the uniaxial stretching is preferably performed to a ratio of 1.05 to 3.5 times, more preferably 1.1 to 3.0 times. For good retardation properties, the unbalanced biaxial stretching is preferably performed to a ratio of 1.05 to 3.5 times, more preferably 1.1 to 3.0 times in the longitudinal direction, and preferably performed to a ratio of 1.0 to 1.2 times, more preferably 1.0 to 1.1 times in the widthwise direction. The in-plane retardation (Re) of the film can be adjusted by controlling the stretching temperature and the stretch ratio.

The film including the resin of the present disclosure can be a polarizing plate in which the film is arranged on at least one side of a polarize. Such a polarizing plate may include a stack of the film including the resin of the present disclosure and the polarizer, a stack of the polarizer and the film including the resin of the present disclosure, or a stack of the film including the resin of the present disclosure, the polarizer, and the film including the resin of the present disclosure.

## EXAMPLES

Hereinafter, the present disclosure will be described with reference to examples, which are not intended to limit the present disclosure. The physical properties shown in the examples were measured by the methods described below.

### Analysis of Monomers and Polymers

Monomers and polymers were analyzed by proton nuclear magnetic resonance spectroscopy ($^1$H-NMR) using a nuclear magnetic resonance spectrometer (JNM-ECZ400S/L1 (trade name) manufactured by JEOL Ltd.). Some monomers and polymers that were difficult to analyze by $^1$H-NMR spectroscopy were analyzed by CHN elemental analysis using an elemental analyzer (2400 II (trade name) manufactured by PerkinElmer, Inc.).

### Measurement of Average Molecular Weight

The average molecular weight was determined at 40°C as the standard polystyrene-equivalent value using a gel permeation chromatography (GPC) system (HLC-8320GPC (trade name) manufactured by Tosoh Corporation, equipped with a GMHHR-H column) and using tetrahydrofuran or N,N-dimethylformamide as a solvent.

### Measurement of Retardation Properties

The in-plane retardation Re, out-of-plane retardation Rth, and Nz coefficient of films were determined using a tilted sample automatic birefringence analyzer (AxoScan (trade name) manufactured by Axometrics, Inc.) and 589 nm wavelength light.

### Measurement of Wavelength Dispersion Properties

The wavelength dispersion properties of films were determined as the ratio of retardation $R_{450}$ for light at a wavelength of 450 nm to retardation $R_{550}$ for light at a wavelength of 550 nm using a tilted sample automatic birefringence

analyzer (AxoScan (trade name) manufactured by Axometrics, Inc.).

Synthesis Example 1 (Synthesis of Acrylate A)

In a 300 mL three-necked flask, 4.12 g (20.8 mmol) of biphenyl-2-carboxylic acid (manufactured by Tokyo Chemical Industry Co., Ltd.) and 0.254 g (2.08 mmol) of diaminopyridine (manufactured by Tokyo Chemical Industry Co., Ltd.) were dissolved in 50 mL of dehydrated dichloromethane (manufactured by FUJIFILM Wako Pure Chemical Corporation) under a nitrogen atmosphere at 0°C. To the solution, 4.39 g (22.9 mmol) of 1-(3-dimethylaminopropyl)-3-ethylcarbodiimide hydrochloride (manufactured by Tokyo Chemical Industry Co., Ltd.) was added and the resulting mixture was stirred for 30 minutes. To the resulting mixture, 3.00 g of 4-hydroxybutyl acrylate (manufactured by Tokyo Chemical Industry Co., Ltd.) was added. The mixture was returned to room temperature and allowed to react overnight. The reaction was quenched by adding water. The aqueous layer was washed three times with dichloromethane, and the organic layer was washed three times with a saturated aqueous solution of sodium chloride. The resulting organic layer was taken out and dried over anhydrous sodium sulfate, which was followed by removal of the solvent by distillation under reduced pressure. The resulting oil was purified by silica gel column chromatography (hexane-ethyl acetate). The purified fraction was subjected to removal of the solvent by distillation under reduced pressure to give 4-(acroyloxy)butyl[1,1'-biphenyl]-2-carboxylate (hereinafter referred to as "Acrylate A") as a light yellow liquid. $^1$H-NMR (400 MHz, $CDCl_3$): δ 7.82-7.80 (m, 2H), 7.53-7.49 (m, 1H), 7.42-7.28 (m, 6H), 6.12-6.05 (m, 1H), 6.38 (d, J = 8.0 Hz, 1H), 5.81 (d, J = 8.0 Hz, 1H), 4.04 (t, J = 6.0 Hz, 2H), 3.99 (t, J = 6.0 Hz, 2H), 1.45-1.30 (m, 4H)

[Chem. 47]

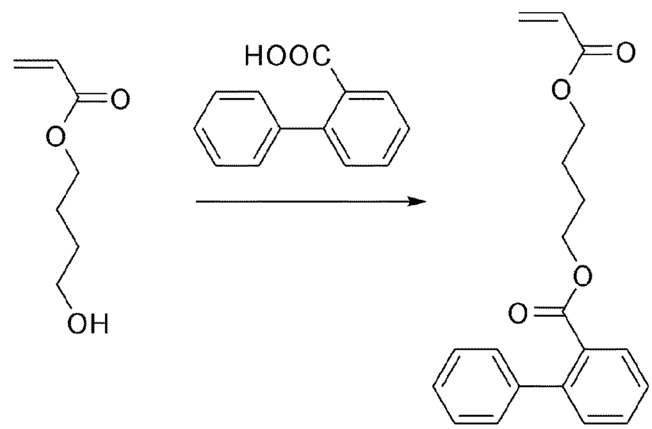

Synthesis Example 2 (Synthesis of Acrylate B)

To a 200 mL three-necked flask, 4.99 g (34.6 mmol) of 4-hydroxybutyl acrylate, 35 mL of dehydrated dichloromethane, 7.0 g (69 mmol) of triethylamine (manufactured by FUJIFILM Wako Pure Chemical Corporation), 0.85 g (6.9 mmol) of diaminopyridine (hereinafter referred to as "DMAP", manufactured by FUJIFILM Wako Pure Chemical Corporation), and 7.9 g (41.5 mmol) of p-toluenesulfonyl chloride (manufactured by Tokyo Chemical Industry Co., Ltd.) were added and the solution was dissolved at 0°C. The solution was allowed to react for 3 hours. The reaction was quenched by adding 100 mL of 2N hydrochloric acid. The reaction liquid was transferred to a separatory funnel and extracted three times with chloroform. The resulting organic layer was washed once with distilled water and then dried over sodium sulfate. The organic layer was concentrated using an evaporator. The concentrate was vacuum-dried at room temperature using a vacuum pump to give 10.7 g of 4-tosyloxybutyl acrylate (hereinafter referred to as "Acrylate B").
$^1$H-NMR (400 MHz, $CDCl_3$): δ 7.80-7.78 (m, 2H), 7.36-7.34 (m, 2H), 6.40-6.35 (m, 1H), 6.12-6.05 (m, 1H), 5.84-5.81 (m, 1H), 4.13-4.05 (m, 4H), 2.45 (s, 3H), 1.75-1.70 (m, 4H)

[Chem. 48]

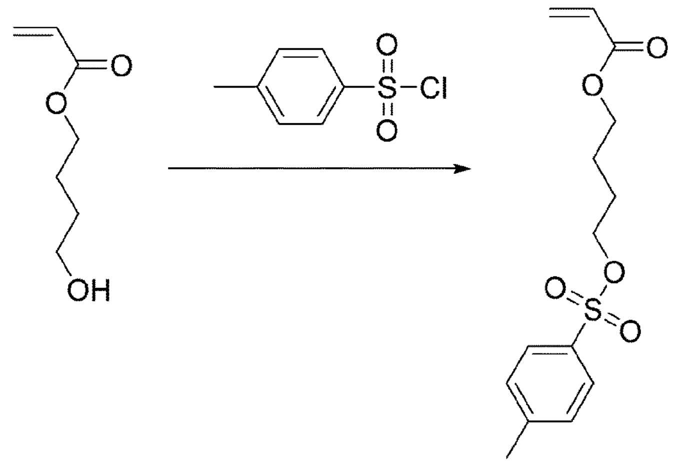

Synthesis Example 3 (Synthesis of Acrylate C)

To a 500 mL three-necked flask, 25.0 g (138 mmol) of 6-bromo-1-hexanol (manufactured by Tokyo Chemical Industry Co., Ltd.), 16.1 g (159 mmol) of triethylamine, and 200 mL of dehydrated dichloromethane were added and the solution was dissolved at 0°C. To the solution, 50 mL of a dehydrated dichloromethane solution of 9.6 g (106 mmol) of acrylic acid chloride (manufactured by Tokyo Chemical Industry Co., Ltd.) was added dropwise. The mixture was heated to room temperature and stirred for 3 hours. The reaction was quenched by adding 200 mL of 2N hydrochloric acid. The reaction product was extracted with dichloromethane. The organic layer was washed three times with ion-exchanged water and three times with brine, and then dried over magnesium sulfate. The organic layer was concentrated using an evaporator to give 24.5 g of 6-bromohexyl acrylate (hereinafter referred to as "Acrylate C").
$^1$H-NMR (400 MHz, $CDCl_3$): δ 6.39 (d, J = 18.4 Hz, 1H), 6.15-6.08 (m, 1H), 5.82 (d, J = 10.8 Hz, 1H), 1.90-1.37 (m, 12H)

[Chem. 49]

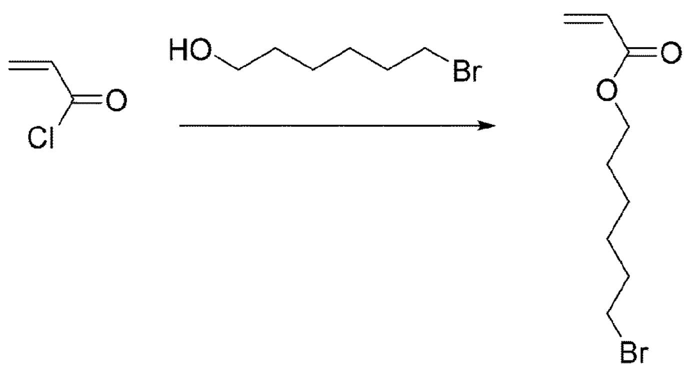

Synthesis Example 4 (Synthesis of Acrylate D)

To a 300 mL three-necked flask, 4.4 g (26 mmol) of 4-phenylphenol (manufactured by Tokyo Chemical Industry Co., Ltd.), 7.2 g (52.1 mmol) of potassium carbonate (manufactured by FUJIFILM Wako Pure Chemical Corporation), 10.1 g (33.9 mmol) of Acrylate B obtained in Synthesis Example 2, and 50 mL of dehydrated DMF (manufactured by FUJIFILM Wako Pure Chemical Corporation) were added and the solution was dissolved at 50°C. The solution was allowed to react for 5 hours, and then the reaction was quenched by adding 50 mL of ion-exchanged water. The reaction product was extracted with ethyl acetate, and the resulting organic layer was washed three times with ion-exchanged water and three times with brine, and then dried over sodium sulfate. The organic layer was concentrated using an evaporator. The concentrate was purified by medium-pressure column chromatography (chloroform/hexane = 80 vol% to 20 vol%, silica gel) to give 5.79 g of 4-([1,1'-biphenyl]-4-yloxy)butyl acrylate (hereinafter referred to as "Acrylate D").

$^1$H-NMR (400 MHz, $CDCl_3$): δ 7.55-7.50 (m, 4H), 7.43-7.39 (m, 2H), 7.31-7.25 (m, 1H), 6.98-6.94 (m, 2H), 6.41 (d, J = 16.0 Hz, 1H), 6.16-6.09 (m, 1H), 5.82 (d, J = 8.0 Hz, 1H), 4.26-4.24 (m, 2H), 4.05-4.02 (m, 2H), 1.95-1.85 (m, 4H)

[Chem. 50]

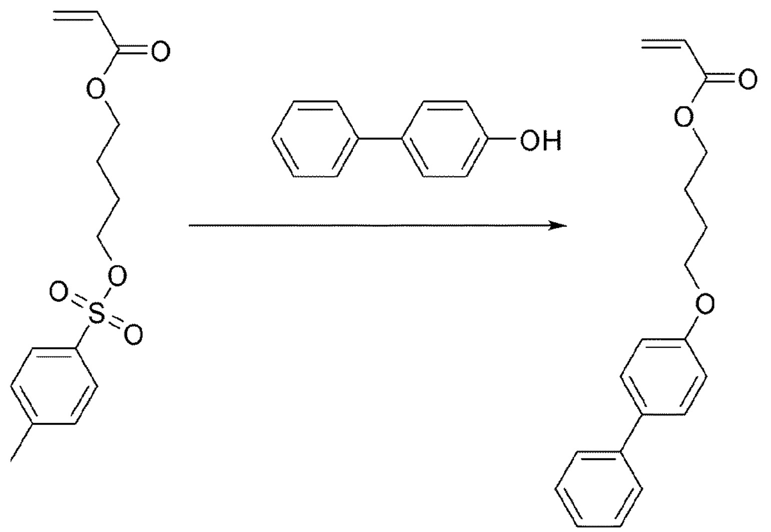

Synthesis Example 5 (Synthesis of Acrylate E)

To a 300 mL three-necked flask, 6.7 g (39.2 mmol) of 4-phenylphenol, 12.0 g (51.0 mmol) of Acrylate C obtained in Synthesis Example 3, 10.9 g (78.5 mmol) of potassium carbonate, 0.065 g (0.4 mmol) of potassium iodide (manufactured by FUJIFILM Wako Pure Chemical Corporation), and 50 mL of dehydrated DMF were added and the solution was dissolved at 120°C. The solution was stirred for 3 hours and then cooled to room temperature. The reaction was quenched by adding 100 mL of ion-exchanged water. The reaction product was extracted with chloroform, and the resulting organic layer was washed three times with ion-exchanged water and three times with brine, and then dried over sodium sulfate. The organic layer was concentrated using an evaporator. The concentrate was purified by medium-pressure column chromatography (dichloromethane/hexane = 80 vol%/20 vol%, silica gel) to give 6.02 g of 6-([1,1'-biphenyl]-4-yloxy)hexyl acrylate (hereinafter referred to as "Acrylate E").

$^1$H-NMR (400 MHz, $CDCl_3$): δ 7.56-7.49 (m, 4H), 7.42-7.38 (m, 2H), 7.31-7.27 (m, 1H), 6.97-6.94 (m, 2H), 6.40 (d, J = 20.0 Hz, 1H), 6.15-6.08 (m, 1H), 5.81 (d, J = 12.0 Hz, 1H), 4.19-4.16 (m, 2H), 4.01-3.98 (m, 2H), 1.85-1.78 (m, 2H), 1.75-1.68 (m, 2H), 1.56-1.42 (m, 4H)

[Chem. 51]

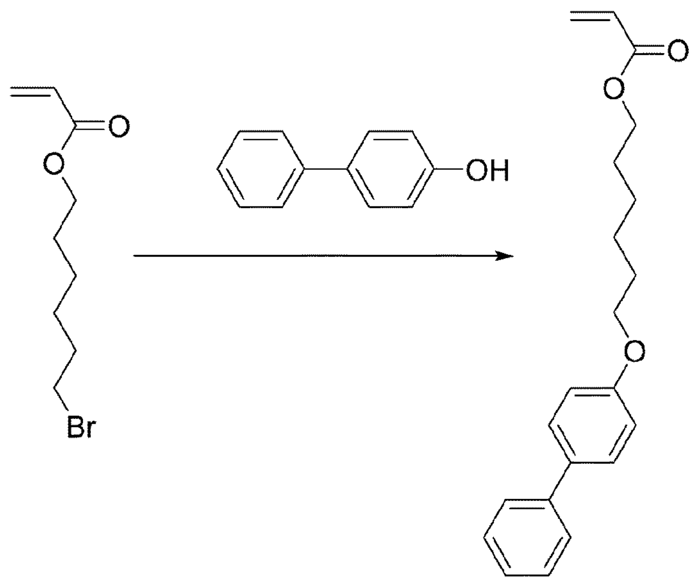

Synthesis Example 6 (Synthesis of Acrylate F)

To a 300 mL three-necked flask, 18.0 g (83.2 mmol) of 2-succinoyloxyethyl acrylate (manufactured by Kyoeisha Chemical Co., Ltd.), 11.8 g (69.3 mmol) of 4-phenylphenol, 13.3 g (69.3 mmol) of EDC hydrochloride, 0.85 g (6.9 mmol) of DMAP, and 50 mL of dehydrated dichloromethane were added and the solution was dissolved at 0°C. After the solution was returned to room temperature and stirred for 3 hours, the reaction was quenched by adding 200 mL of ion-exchanged water. The reaction product was extracted with dichloromethane, and the resulting organic layer was washed three times with ion-exchanged water and three times with brine, and then dried over sodium sulfate. The organic layer was concentrated using an evaporator. The concentrate was purified by medium-pressure column chromatography (chloroform = 100 vol%, silica gel) to give 19.8 g of [1,1'-biphenyl]-4-yl(2-(acryloyloxy)ethyl) succinate (hereinafter referred to as "Acrylate F").
$^1$H-NMR (400 MHz, $CDCl_3$): δ 7.59-7.52 (m, 4H), 7.46-7.39 (m, 2H), 7.37-7.32 (m, 1H), 7.18-7.14 (m, 2H), 6.43 (d, J = 20.0 Hz, 1H), 6.15-6.09 (m, 1H), 5.84 (d, J = 12.0 Hz, 1H), 4.42-4.34 (m, 4H), 2.93-2.89 (m, 2H), 2.80-2.77 (m, 2H)

[Chem. 52]

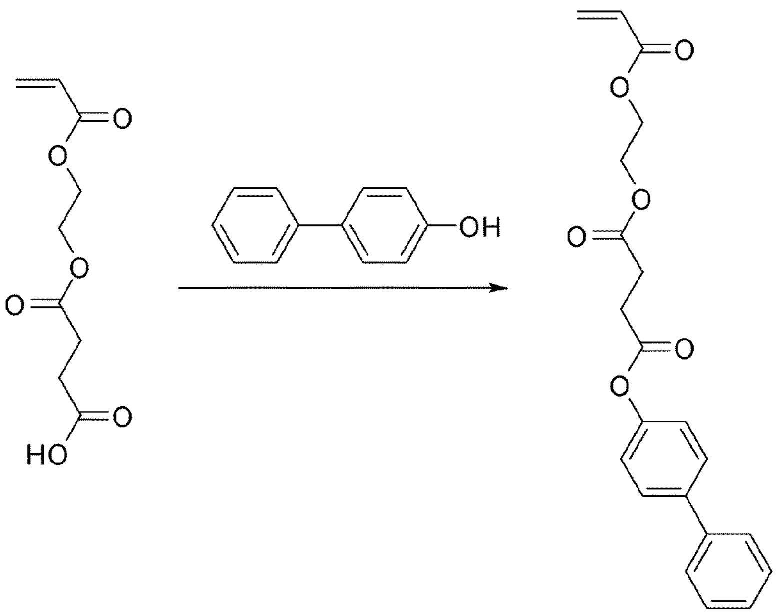

Synthesis Example 7 (Synthesis of Acrylate G)

In a 300 mL three-necked flask, 6.00 g (41.6 mmol) of 2-carboxyethyl acrylate (manufactured by Tokyo Chemical Industry Co., Ltd.) and 0.51 g (4.2 mmol) of diaminopyridine (hereinafter referred to as "DMAP", manufactured by FUJIFILM Wako Pure Chemical Corporation) were dissolved in 150 mL of dehydrated dichloromethane under a nitrogen atmosphere at 0°C. To the solution, 8.78 g (45.8 mmol) of EDC hydrochloride (manufactured by Tokyo Chemical Industry Co., Ltd.) was added and the resulting mixture was stirred for 30 minutes. To the mixture, 6.98 g (31.0 mmol) of 2-(2-benzotriazolyl)-p-cresol (manufactured by Tokyo Chemical Industry Co., Ltd.) was added. The resulting mixture was returned to room temperature and allowed to react overnight. The reaction was quenched by adding water. The organic layer was fractionated three times with water/dichloromethane and three times with a saturated aqueous solution of sodium chloride/dichloromethane, and then dried over sodium sulfate. The organic layer was subjected to removal of the solvent by distillation under reduced pressure to give a light yellow liquid. The liquid was purified by silica gel column chromatography (hexane-ethyl acetate) to give 5.1 g of 3-(2-(2H-benzo[d][1,2,3]triazol-2-yl)-4-methylphenoxy)-3-oxopropyl acrylate (hereinafter referred to as "Acrylate G").
$^1$H-NMR (400 MHz, $CDCl_3$): δ 7.99-7.98 (m, 1H), 7.93-7.91 (m, 2H), 7.42-7.40 (m, 2H), 7.32-7.28 (m, 1H), 7.20-7.18 (m, 1H), 6.37 (d, J = 16.0 Hz, 1H), 6.08-6.01 (m, 1H), 5.79 (d, J = 8.0 Hz, 1H), 4.14-4.08 (m, 4H), 2.41 (s, 3H)

[Chem. 53]

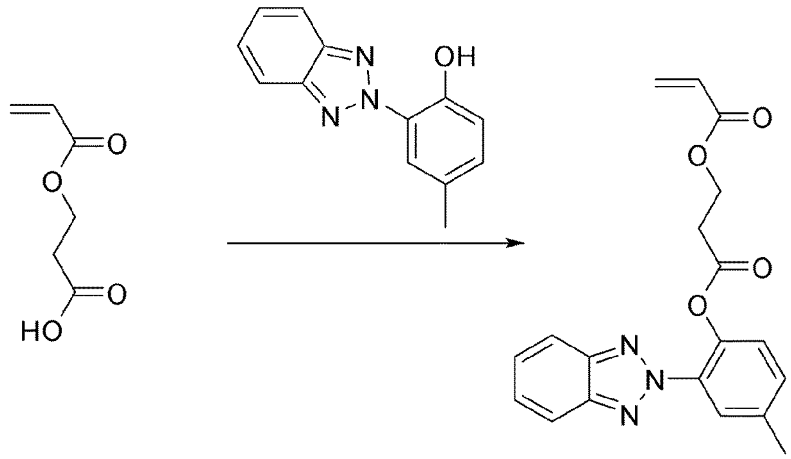

Synthesis Example 8 (Synthesis of Acrylate H)

To a 300 mL three-necked flask, 7.55 g (33.5 mmol) of 2-(2-benzotriazolyl)-p-cresol, 9.26 g (67.0 mmol) of potassium carbonate, 15.0 g (50.3 mmol) of Acrylate B obtained in Synthesis Example 2, and 100 mL of dehydrated DMF were added and the solution was dissolved at 50°C. The solution was stirred for 5 hours and then cooled to room temperature. The reaction was quenched by adding 50 mL of ion-exchanged water. The reaction product was extracted with chloroform, and the resulting organic layer was washed three times with ion-exchanged water and three times with brine, and then dried over sodium sulfate. The organic layer was concentrated using an evaporator. The concentrate was purified by medium-pressure column chromatography (chloroform/hexane = 80 vol%/20 vol%, silica gel) to give 10.7 g of 2-(2H-benzo[d][1,2,3]triazol-2-yl)-4-methylphenol (hereinafter referred to as "Acrylate H"). $^1$H-NMR (400 MHz, $CDCl_3$): δ 7.96-7.94 (m, 2H), 7.49-7.49 (m, 1H), 7.43-7.41 (m, 2H), 7.28-7.25 (m, 1H), 7.03-7.01 (m, 1H), 6.32 (d, J = 18.8 Hz, 1H), 6.07-6.00 (m, 1H), 5.77 (d, J = 11.2 Hz, 1H), 4.09-4.03 (m, 4H), 2.37 (s, 3H), 1.77-1.67 (m, 4H)

[Chem. 54]

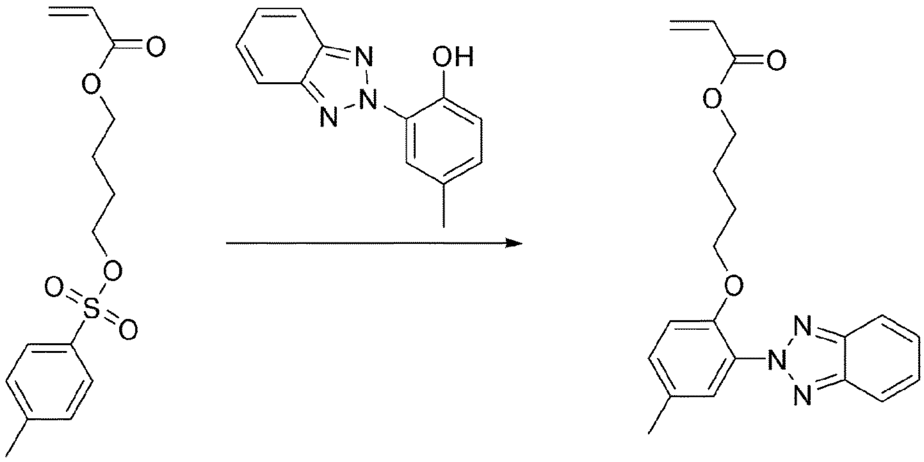

Synthesis Example 9 (Synthesis of Acrylate I)

To a 300 mL three-necked flask, 5.03 g (25.8 mmol) of 4-cyano-4'-hydroxybiphenyl (manufactured by Tokyo Chemical Industry Co., Ltd.), 7.13 g (51.6 mmol) of potassium carbonate, 10.0 g (33.5 mmol) of Acrylate B obtained in Synthesis Example 2, and 50 mL of dehydrated DMF were added and the solution was dissolved at 50°C. The solution was stirred for 5 hours and then cooled to room temperature. The reaction was quenched by adding 50 mL of ion-exchanged water. The reaction product was extracted with chloroform, and the resulting organic layer was washed three times with ion-exchanged water and three times with brine, and then dried over sodium sulfate. The organic layer was concentrated using an evaporator. The concentrate was purified by medium-pressure column chromatography (chloroform = 100 vol%, silica gel) to give 2.01 g of 4-((4'-cyano-[1,1'-biphenyl]-4-yl)oxy)butyl acrylate (hereinafter referred to as "Acrylate I").
$^1$H-NMR (400 MHz, $CDCl_3$): δ 7.70-7.61 (m, 4H), 7.55-7.46 (m, 2H), 7.00-6.98 (m, 2H), 6.43-6.35 (m, 1H), 6.17-6.05 (m, 1H), 5.85-5.81 (m, 1H), 4.27-4.24 (m, 2H), 4.15-4.04 (m, 2H), 1.92-1.90 (m, 4H)

[Chem. 55]

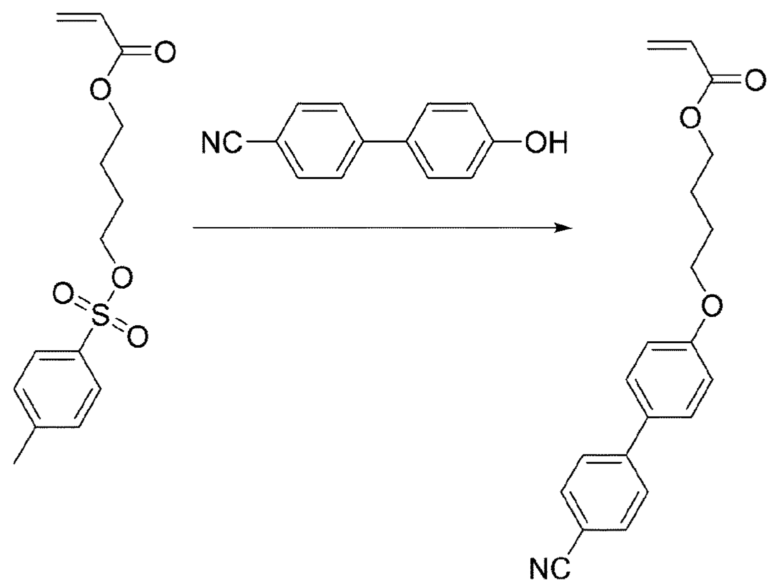

Synthesis Example 10 (Synthesis of Acrylate J)

To a 500 mL three-necked flask, 20.0 g (64.9 mmol) of 2-(acryloyloxy)ethyl (2-hydroxyethyl) phthalate (manufactured by Kyoeisha Chemical Co., Ltd.), 200 mL of dehydrated dichloromethane, 13.1 g (130.0 mmol) of triethylamine, 1.59 g (13.0 mmol) of DMAP, and 14.8 g (77.8 mmol) of p-toluenesulfonyl chloride were added and the solution was dissolved at 0°C. The solution was allowed to react for 3 hours, and then the reaction was quenched by adding 200 mL of 2N hydrochloric acid. The reaction liquid was transferred to a separatory funnel and extracted three times with chloroform. The resulting organic layer was washed once with distilled water and then dried over sodium sulfate. The organic layer was concentrated using an evaporator. The concentrate was vacuum-dried at room temperature using a vacuum pump to give 10.7 g of 2-(acryloyloxy)ethyl (2-(tosyloxy)ethyl) phthalate (hereinafter referred to as "Acrylate J").
$^1$H-NMR (400 MHz, $CDCl_3$): δ 7.92-7.64 (m, 4H), 7.59-7.53 (m, 2H), 7.41-7.25 (m, 2H), 6.47-6.34 (m, 1H), 6.18-6.00 (m, 1H), 5.88-5.82 (m, 1H), 4.61-4.18 (m, 8H), 2.34 (s, 3H)

[Chem. 56]

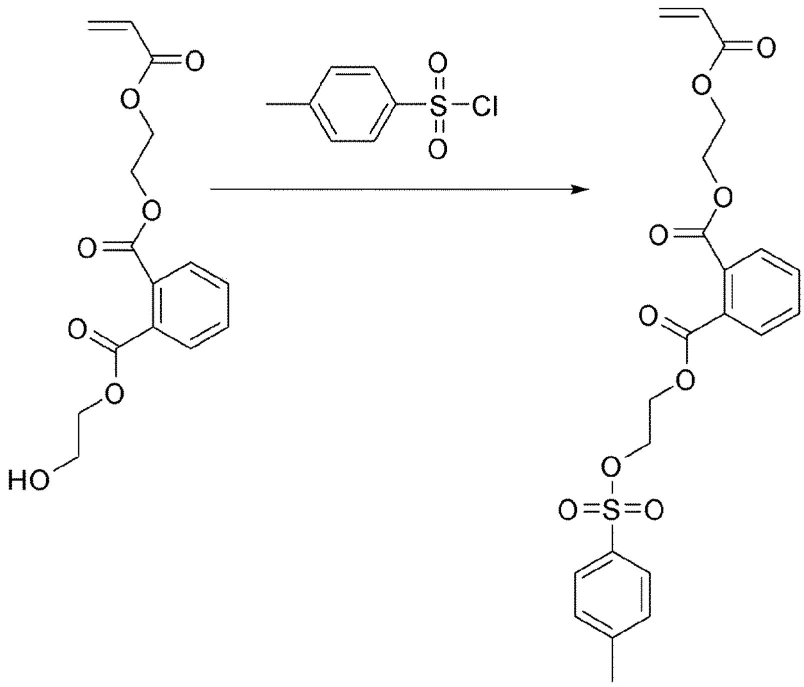

Synthesis Example 11 (Synthesis of Acrylate K)

To a 300 mL three-necked flask, 2.83 g (16.6 mmol) of 4-phenylphenol, 4.60 g (33.3 mmol) of potassium carbonate, 10.0 g (21.6 mmol) of Acrylate J obtained in Synthesis Example 10, and 50 mL of dehydrated DMF were added and the solution was dissolved at 50°C. The solution was stirred for 5 hours and then cooled to room temperature. The reaction was quenched by adding 50 mL of ion-exchanged water. The reaction product was extracted with chloroform, and the resulting organic layer was washed three times with ion-exchanged water and three times with brine, and then dried over sodium sulfate. The organic layer was concentrated using an evaporator. The concentrate was purified by medium-pressure column chromatography (dichloromethane = 100 vol%, silica gel) to give 0.89 g of 2-([1,1'-biphenyl]-4-yloxy)ethyl (2-(acryloyloxy)ethyl) phthalate (hereinafter referred to as "Acrylate K").
$^1$H-NMR (400 MHz, $CDCl_3$): δ 7.78-7.25 (m, 11H), 7.05-6.93 (m, 2H), 6.47-6.39 (m, 1H), 6.20-6.00 (m, 1H), 5.87-5.81 (m, 1H), 4.68-4.24 (m, 8H)

[Chem. 57]

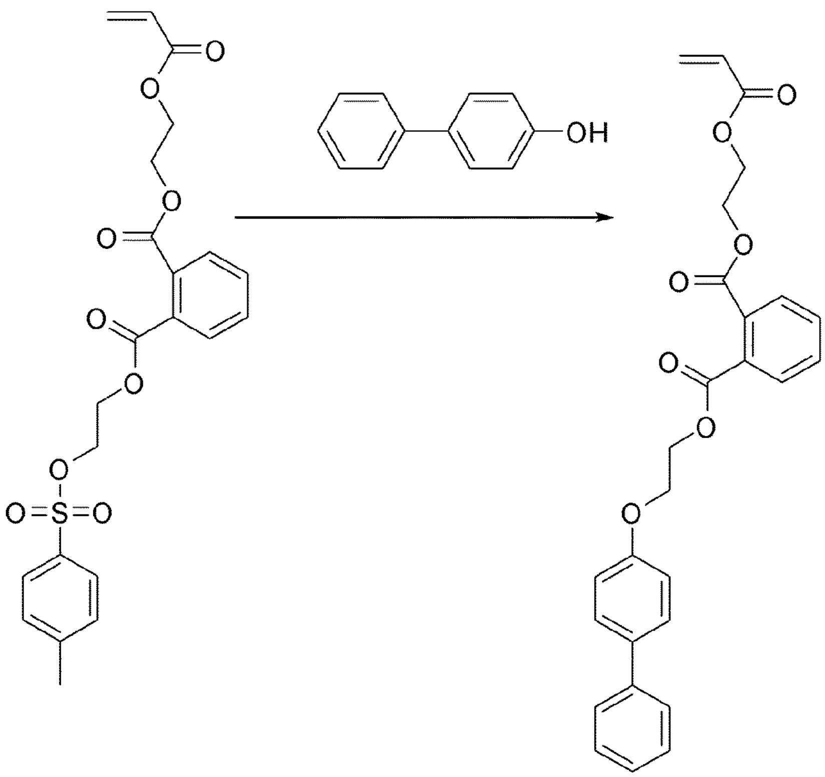

Example 1

To a 75 mL volume glass ampoule, 38.00 g (190 mmol) of diisopropyl fumarate, 6.78 g (21.0 mmol) of 2-(2-biphenyloxy)ethyl acrylate, and 0.42 g (1.7 mmol) of PERBUTYL PV (manufactured by NOF Corporation) were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 400 g of tetrahydrofuran. The resulting polymer solution was added dropwise into 3 L of methanol. The resulting precipitate was vacuum-dried at 80°C for 10 hours to give a resin (hereinafter referred to as "Resin 1"). Resin 1 obtained had a weight average molecular weight of 290,000. The $^1$H-NMR analysis revealed that Resin 1 had the composition: 93 mol% of the diisopropyl fumarate residue unit and 7 mol% of the 2-(2-biphenyloxy)ethyl acrylate residue unit.

[Chem. 58]

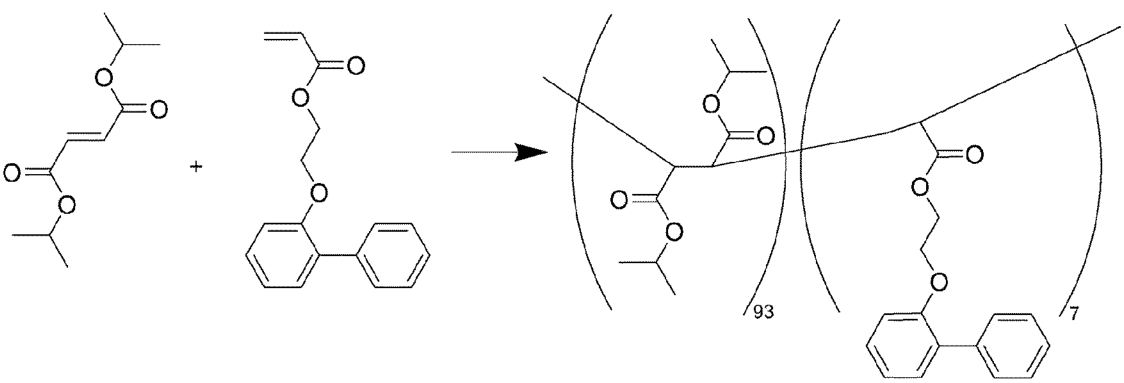

Example 2

To a 75 mL volume glass ampoule, 40.00 g (200 mmol) of diisopropyl fumarate, 4.09 g (22.2 mmol) of Acrylate

A obtained in Synthesis Example 1, and 0.46 g (1.85 mmol) of PERBUTYL PV were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 400 g of tetrahydrofuran. The resulting polymer solution was added dropwise into 3 L of methanol. The resulting precipitate was vacuum-dried at 80°C for 10 hours to give a resin (hereinafter referred to as "Resin 2"). Resin 2 obtained had a weight average molecular weight of 203,000. The $^1$H-NMR analysis revealed that Resin 2 had the composition: 93 mol% of the diisopropyl fumarate residue unit and 7 mol% of the Acrylate A residue unit.

[Chem. 59]

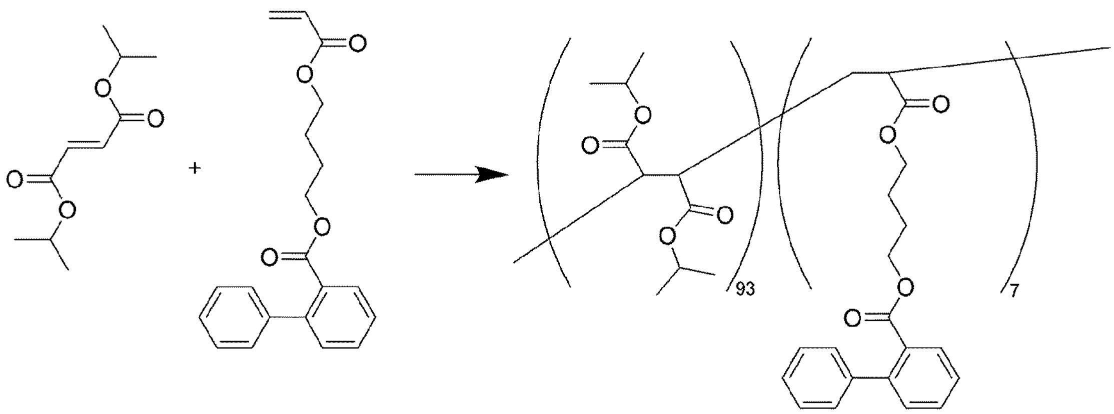

Example 3

To a 75 mL volume glass ampoule, 20.02 g (100 mmol) of diisopropyl fumarate, 1.67 g (5.2 mmol) of 2-[2-hydroxy-5-[2-(methacryloyloxy)ethyl]phenyl]-2H-benzotriazole (manufactured by Otsuka Chemical Co., Ltd.), and 0.22 g (0.89 mmol) of PERBUTYL PV were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 400 g of tetrahydrofuran. The resulting polymer solution was added dropwise into 3 L of methanol. The resulting precipitate was vacuum-dried at 80°C for 10 hours to give a resin (hereinafter referred to as "Resin 3"). Resin 3 obtained had a weight average molecular weight of 243,000. The $^1$H-NMR analysis revealed that Resin 3 had the composition: 97 mol% of the diisopropyl fumarate residue unit and 3 mol% of the 2-[2-hydroxy-5-[2-(methacryloyloxy)ethyl]phenyl]-2H-benzotriazole residue unit.

[Chem. 60]

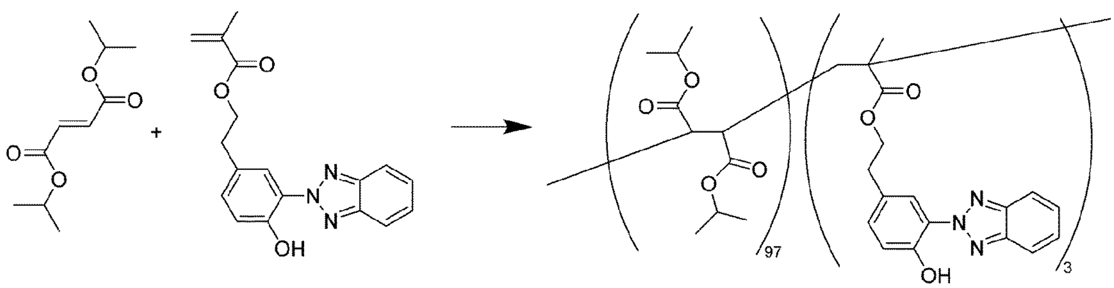

Example 4

To a 75 mL volume glass ampoule, 9.12 g (45.5 mmol) of diisopropyl fumarate, 0.72 g (2.4 mmol) of Acrylate D, and 0.106 g (0.42 mmol) of PERBUTYL PV were added and the resulting mixture was subjected to repeated nitrogen purging and evacuation, which was followed by melting and sealing the ampoule under reduced pressure. The ampoule

was placed and kept in a thermostatic chamber at 50°C for 24 hours for radical polymerization. After the polymerization reaction was completed, the polymerization product was taken out of the ampoule and dissolved in 90 g of tetrahydrofuran. The resulting polymer solution was added dropwise into 0.5 L of methanol. The resulting precipitate was vacuum-dried at 80°C for 10 hours to give a resin (hereinafter referred to as "Resin 4"). Resin 4 obtained had a weight average molecular weight of 299,000. The $^1$H-NMR analysis revealed that Resin 4 had the composition: 95 mol% of the diisopropyl fumarate residue unit and 5 mol% of the Acrylate D residue unit.

[Chem. 61]

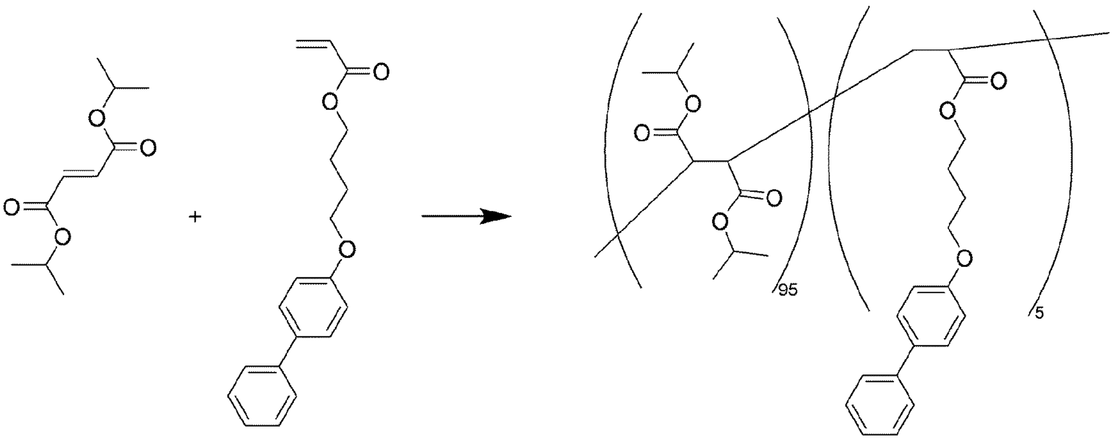

Example 5

To a 75 mL volume glass ampoule, 6.45 g (32.2 mmol) of diisopropyl fumarate, 0.55 g (1.7 mmol) of Acrylate E obtained in Synthesis Example 5, 0.070 g (0.28 mmol) of PERBUTYL PV, and 1.24 g of toluene were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 90 g of tetrahydrofuran. The resulting polymer solution was added dropwise into 0.5 L of methanol. The resulting precipitate was vacuum-dried at 80°C for 10 hours to give a resin (hereinafter referred to as "Resin 5"). Resin 5 obtained had a weight average molecular weight of 153,000. The $^1$H-NMR analysis revealed that Resin 5 had the composition: 93 mol% of the diisopropyl fumarate residue unit and 7 mol% of the Acrylate E residue unit.

[Chem. 62]

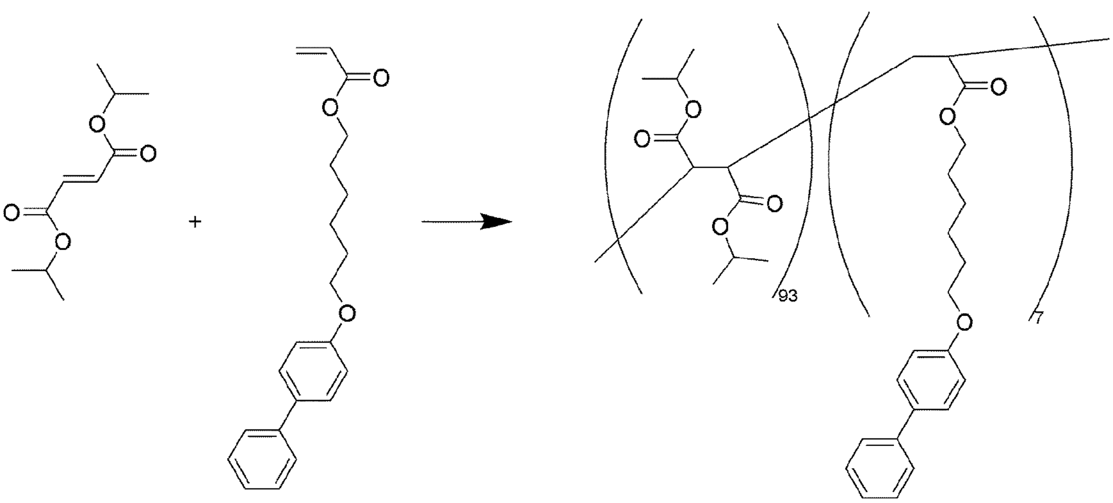

Example 6

To a 75 mL volume glass ampoule, 4.13 g (20.8 mmol) of diisopropyl fumarate, 0.42 g (1.1 mmol) of Acrylate F obtained in Synthesis Example 6, and 0.038 g (0.15 mmol) of PERBUTYL PV were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 90 g of tetrahydrofuran. The resulting polymer solution was added dropwise into 0.5 L of methanol. The resulting precipitate was vacuum-dried at 80°C for 10 hours to give a resin (hereinafter referred to as "Resin 6"). Resin 6 obtained had a weight average molecular weight of 367,000. The $^1$H-NMR analysis revealed that Resin 6 had the composition: 94 mol% of the diisopropyl fumarate residue unit and 6 mol% of the Acrylate F residue unit.

[Chem. 63]

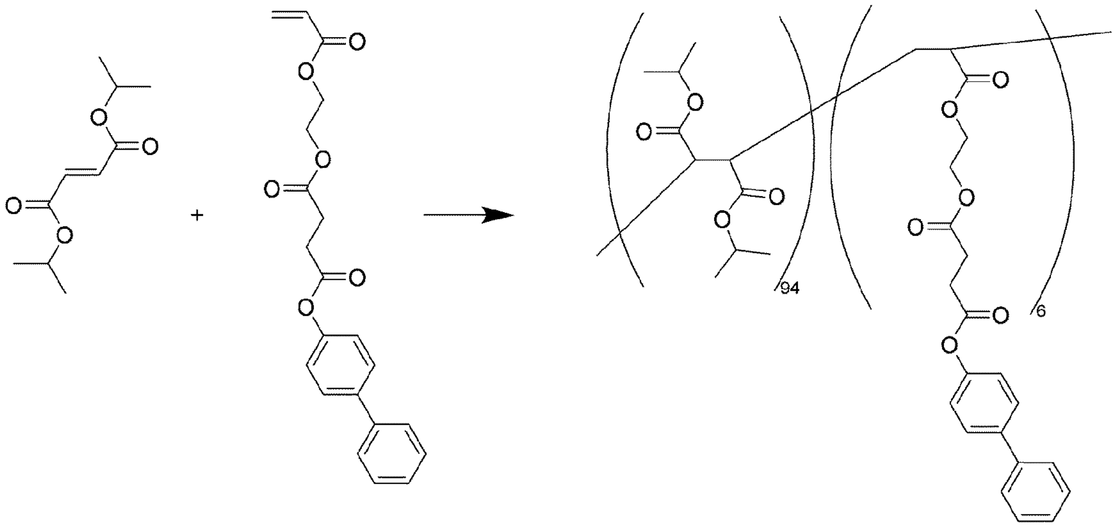

Example 7

To a 75 mL volume glass ampoule, 3.75 g (18.7 mmol) of diisopropyl fumarate, 0.60 g (1.6 mmol) of Acrylate F obtained in Synthesis Example 6, and 0.041 g (0.17 mmol) of PERBUTYL PV and subjected to repeated nitrogen purging were added and the resulting mixture was evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 90 g of tetrahydrofuran. The resulting polymer solution was added dropwise into 0.5 L of methanol. The resulting precipitate was vacuum-dried at 80°C for 10 hours to give a resin (hereinafter referred to as "Resin 7"). Resin 7 obtained had a weight average molecular weight of 330,000. The $^1$H-NMR analysis revealed that Resin 7 had the composition: 91 mol% of the diisopropyl fumarate residue unit and 9 mol% of the Acrylate F residue unit.

[Chem. 64]

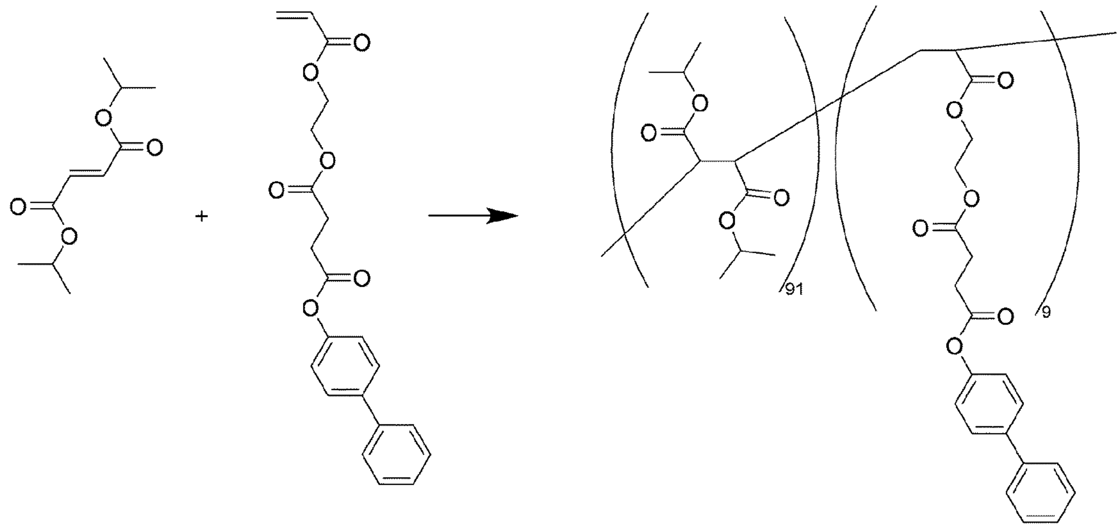

Example 8

To a 75 mL volume glass ampoule, 4.13 g (20.8 mmol) of diisopropyl fumarate, 0.42 g (1.1 mmol) of Acrylate G obtained in Synthesis Example 7, and 0.038 g (0.15 mmol) of PERBUTYL PV were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 90 g of tetrahydrofuran. The resulting polymer solution was added dropwise into 0.5 L of methanol. The resulting precipitate was vacuum-dried at 80°C for 10 hours to give a resin (hereinafter referred to as "Resin 8"). Resin 8 obtained had a weight average molecular weight of 367,000. The $^1$H-NMR analysis revealed that Resin 8 had the composition: 94 mol% of the diisopropyl fumarate residue unit and 6 mol% of the Acrylate G residue unit.

[Chem. 65]

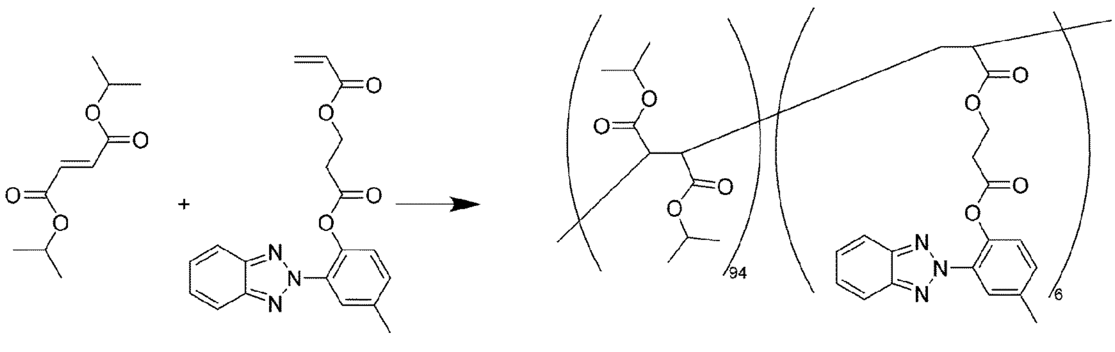

Example 9

To a 75 mL volume glass ampoule, 6.87 g (34.3 mmol) of diisopropyl fumarate, 0.37 g (1.1 mmol) of Acrylate H obtained in Synthesis Example 8, and 0.068 g (0.27 mmol) of PERBUTYL PV were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 90 g of tetrahydrofuran. The resulting polymer solution was added dropwise into 0.5 L of methanol. The resulting precipitate was vacuum-dried at 80°C for 10 hours to give a resin (hereinafter referred to as "Resin 9"). Resin 9 obtained had a weight average molecular weight of 396,000. The $^1$H-NMR analysis revealed that Resin 9 had the composition: 97 mol% of the diisopropyl fumarate residue unit and 3 mol% of the Acrylate H residue unit.

[Chem. 66]

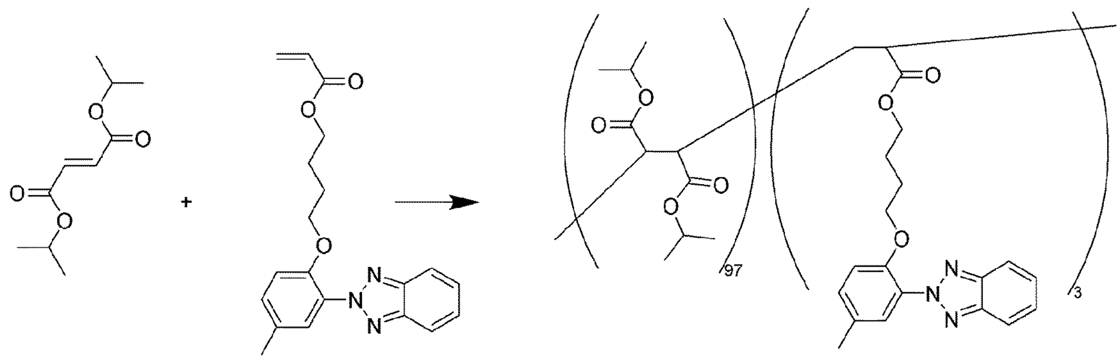

Example 10

To a 75 mL volume glass ampoule, 10.21 g (51.0 mmol) of diisopropyl fumarate, 0.51 g (1.6 mmol) of Acrylate I obtained in Synthesis Example 9, and 0.11 g (0.44 mmol) of PERBUTYL PV were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 90 g of tetrahydrofuran. The resulting polymer solution was added dropwise into 0.5 L of methanol. The resulting precipitate was vacuum-dried at 80°C for 10 hours to give a resin (hereinafter referred to as "Resin 10"). Resin 10 obtained had a weight average molecular weight of 247,000. The $^1$H-NMR analysis revealed that Resin 10 had the composition: 97 mol% of the diisopropyl fumarate residue unit and 3 mol% of the Acrylate I residue unit.

[Chem. 67]

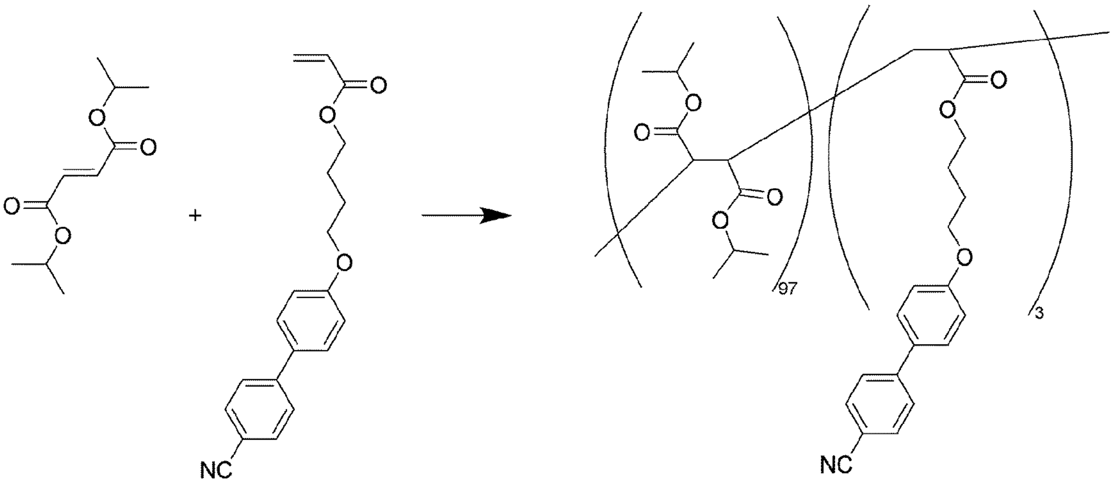

Example 11

To a 75 mL volume glass ampoule, 9.83 g (49.1 mmol) of diisopropyl fumarate, 0.83 g (2.6 mmol) of Acrylate I obtained in Synthesis Example 9, and 0.11 g (0.44 mmol) of PERBUTYL PV were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 90 g of tetrahydrofuran. The resulting polymer solution was added dropwise into 0.5 L of methanol. The resulting precipitate was vacuum-dried at 80°C for 10 hours to give a resin (hereinafter referred to as "Resin 11"). Resin 11 obtained had a weight average molecular weight of 221,000. The $^1$H-NMR analysis revealed that Resin 11 had the

composition: 95 mol% of the diisopropyl fumarate residue unit and 5 mol% of the Acrylate I residue unit.

[Chem. 68]

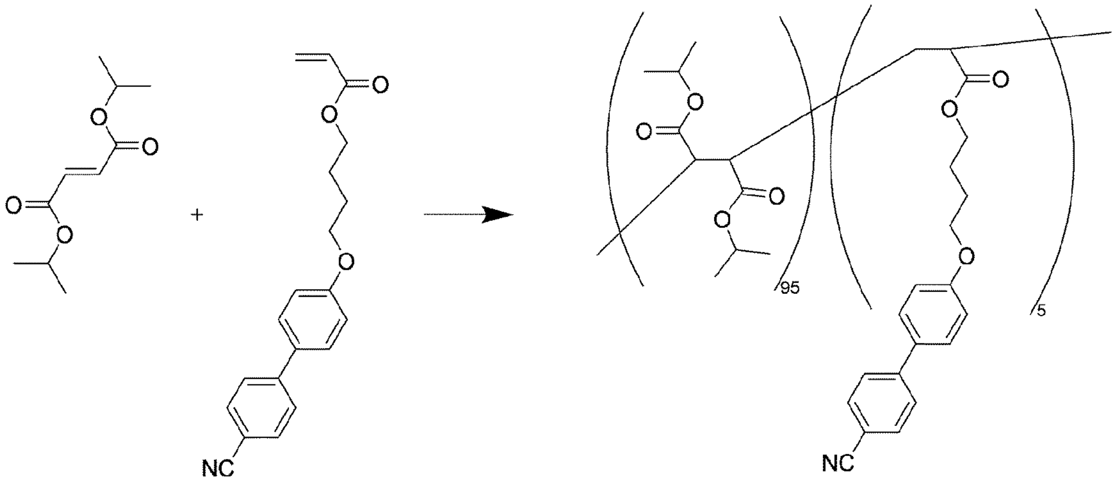

Example 12

To a 75 mL volume glass ampoule, 1.55 g (7.6 mmol) of diisopropyl fumarate, 0.083 g (0.24 mmol) of 4-[(6-acryloyloxy)hexyloxy]-4'-cyanobiphenyl (manufactured by Tokyo Chemical Industry Co., Ltd.), and 0.016 g (0.065 mmol) of PERBUTYL PV were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 40 g of tetrahydrofuran. The resulting polymer solution was added dropwise into 0.3 L of methanol. The resulting precipitate was vacuum-dried at 80°C for 10 hours to give a resin (hereinafter referred to as "Resin 12"). Resin 12 obtained had a weight average molecular weight of 365,000. The $^1$H-NMR analysis revealed that Resin 12 had the composition: 97 mol% of the diisopropyl fumarate residue unit and 3 mol% of the 4-[(6-acryloyloxy)hexyloxy]-4'-cyanobiphenyl residue unit.

[Chem. 69]

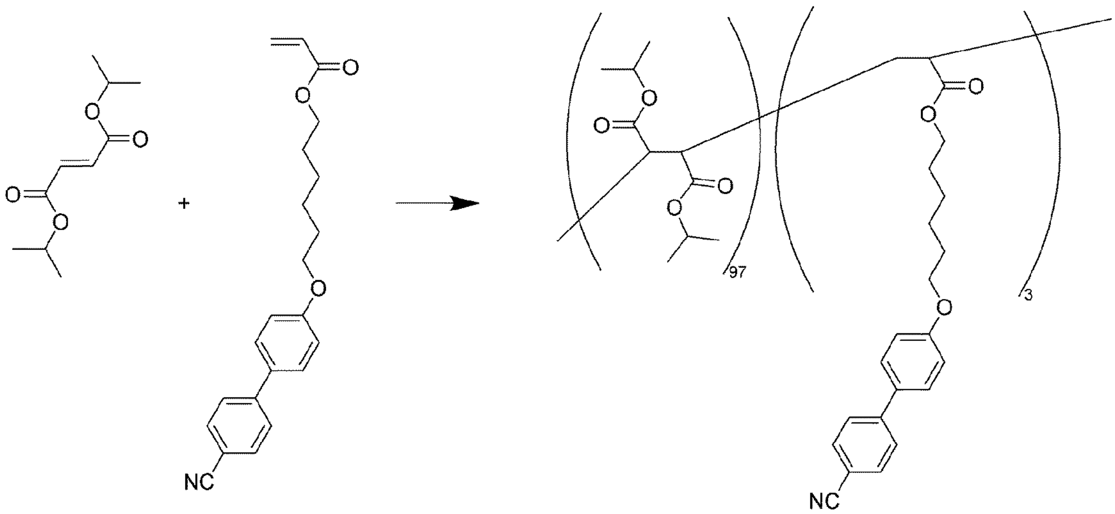

Example 13

To a 75 mL volume glass ampoule, 1.11 g (5.5 mmol) of diisopropyl fumarate, 0.22 g (0.5 mmol) of Acrylate K obtained in Synthesis Example 11, and 0.015 g (0.072 mmol) of PERBUTYL PV were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 40 g of tetrahydrofuran. The resulting polymer solution was added dropwise into 0.3 L of methanol. The resulting precipitate was vacuum-dried at 80°C for 10 hours to give a resin (hereinafter referred to as "Resin 13"). Resin 13 obtained had a weight average molecular weight of 170,000. The $^1$H-NMR analysis revealed that Resin 13 had the composition: 93 mol% of the diisopropyl fumarate residue unit and 7 mol% of the Acrylate K residue unit.

[Chem. 70]

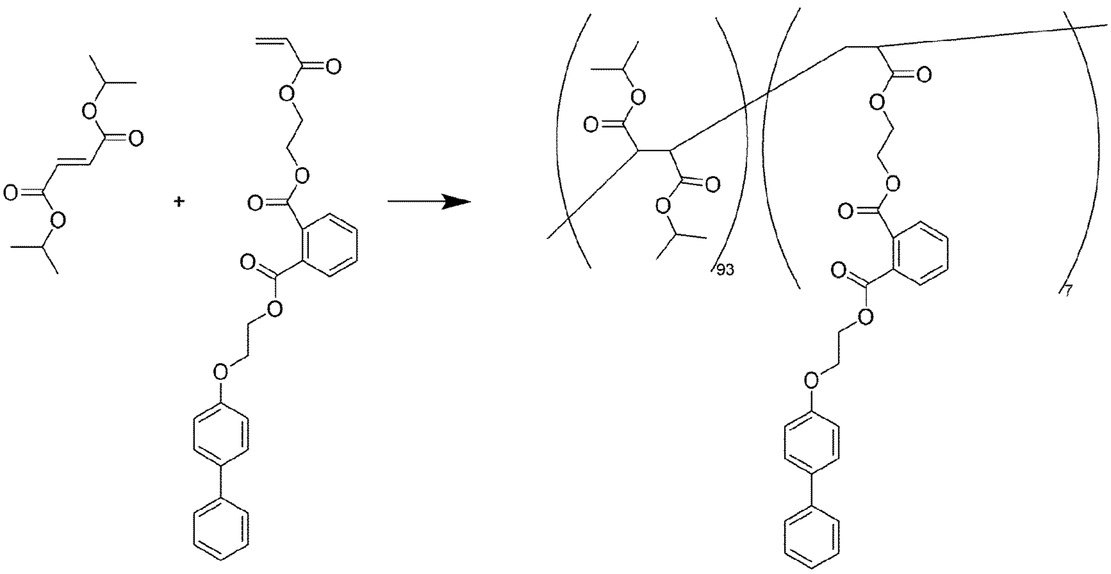

Example 14

To a 75 mL volume glass ampoule, 6.99 g (34.9 mmol) of diisopropyl fumarate, 0.33 g (1.9 mmol) of diethyl fumarate, 0.43 g (1.2 mmol) of 4-[(6-acryloyloxy)hexyloxy]-4'-cyanobiphenyl, and 0.068 g (0.27 mmol) of PERBUTYL PV were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 100 g of tetrahydrofuran. The resulting polymer solution was added dropwise into 0.5 L of methanol. The resulting precipitate was vacuum-dried at 80°C for 10 hours to give a resin (hereinafter referred to as "Resin 14"). Resin 14 obtained had a weight average molecular weight of 297,000. The $^1$H-NMR analysis revealed that Resin 14 had the composition: 91 mol% of the diisopropyl fumarate residue unit, 6 mol% of the diethyl fumarate residue unit, and 3 mol% of the 4-[(6-acryloyloxy)hexyloxy]-4'-cyanobiphenyl residue unit.

[Chem. 71]

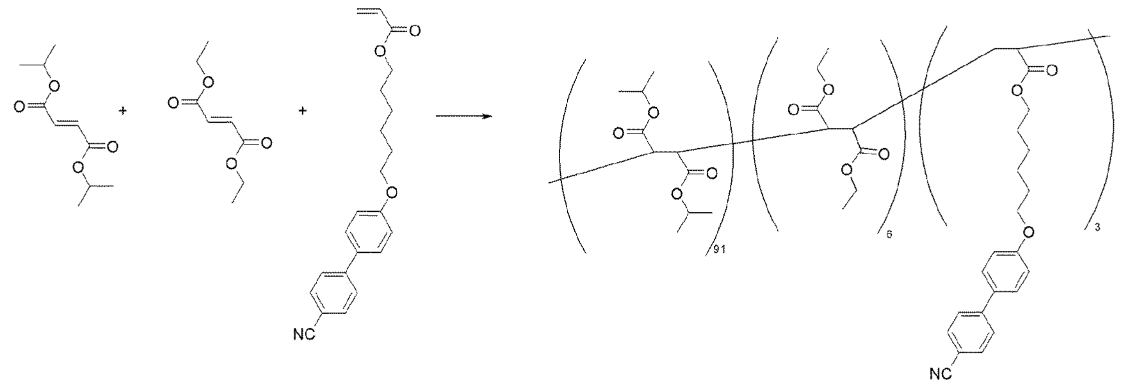

Example 15

To a 75 mL volume glass ampoule, 6.99 g (34.9 mmol) of diisopropyl fumarate, 0.70 g (4.1 mmol) of diethyl fumarate, 0.49 g (1.4 mmol) of 4-[(6-acryloyloxy)hexyloxy]-4'-cyanobiphenyl, and 0.084 g (0.34 mmol) of PERBUTYL PV were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 100 g of tetrahydrofuran. The resulting polymer solution was added dropwise into 0.5 L of methanol. The resulting precipitate was vacuum-dried at 80°C for 10 hours to give a resin (hereinafter referred to as "Resin 15"). Resin 15 obtained had a weight average molecular weight of 271,000. The $^1$H-NMR analysis revealed that Resin 15 had the composition: 86 mol% of the diisopropyl fumarate residue unit, 10 mol% of the diethyl fumarate residue unit, and 4 mol% of the 4-[(6-acryloyloxy)hexyloxy]-4'-cyanobiphenyl residue unit.

[Chem. 72]

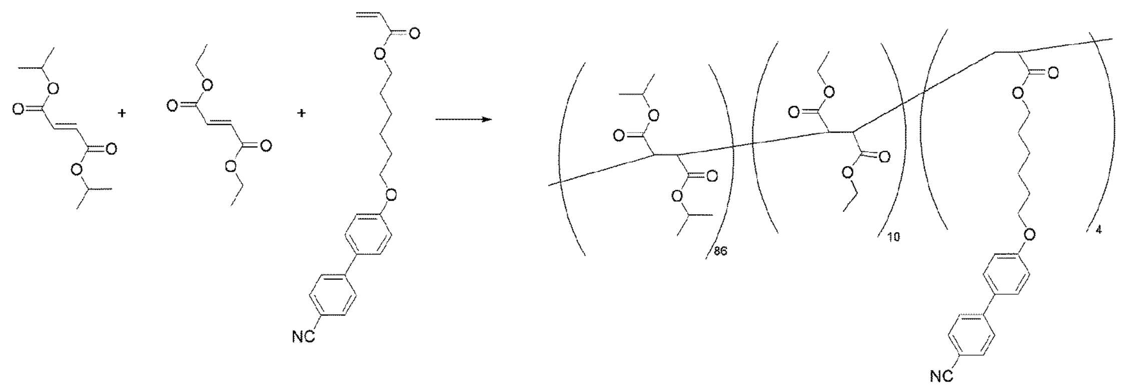

Example 16

To a 75 mL volume glass ampoule, 7.01 g (35.0 mmol) of diisopropyl fumarate, 1.10 g (6.4 mmol) of diethyl fumarate, 0.54 g (1.6 mmol) of 4-[(6-acryloyloxy)hexyloxy]-4'-cyanobiphenyl, and 0.071 g (0.29 mmol) of PERBUTYL PV were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 100 g of tetrahydrofuran. The resulting polymer solution was added dropwise into 0.5 L of methanol. The resulting precipitate was vacuum-dried at 80°C for 10 hours to give a resin (hereinafter referred to as "Resin 16"). Resin 16 obtained had a weight average molecular weight of 245,000. The $^1$H-NMR analysis revealed that Resin 16 had the composition: 82 mol% of the diisopropyl fumarate residue unit, 14 mol% of the diethyl fumarate residue unit, and 4 mol% of the 4-[(6-acryloyloxy)hexyloxy]-4'-cyanobiphenyl residue unit.

[Chem. 73]

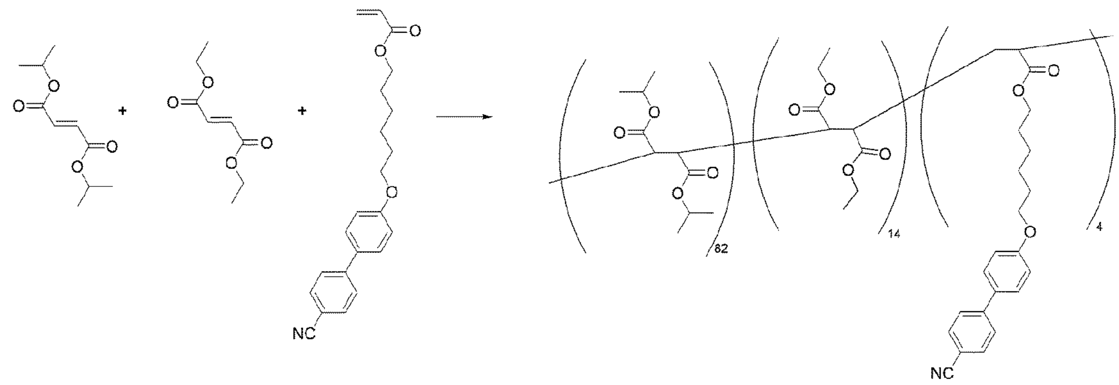

Example 17

A 20 mass% resin solution was obtained by dissolving 4.0 g of Resin 1 (obtained in Example 1) in 16.0 g of tetrahydrofuran (THF). The resin solution was cast on a polyethylene terephthalate film using a coater and then subjected to a two-stage drying process including drying at 80°C for 4 minutes and then drying at 130°C for 4 minutes. The resulting film was cut into a 50 mm square piece, which was then uniaxially stretched to 1.2 times at 118°C. The retardation properties of the resulting film are shown in Table 1. The resulting film had wavelength dispersion properties lower than those of the films of Comparative Examples 1 to 3.

[Table 1]

| | Diisopropyl fumarate residue unit content (mol%) | Diethyl fumarate residue unit content (mol%) | (Meth) acrylic acid ester residue unit content (mol%) | Thickness µm | $R_{450}/R_{550}$ | Re nm | Rth nm | Nz |
|---|---|---|---|---|---|---|---|---|
| Example 17 | 93 | 0 | 7 | 22.0 | 1.007 | 28 | -31 | -0.60 |
| Example 18 | 93 | 0 | 7 | 22.7 | 1.006 | 29 | -37 | -0.77 |
| Example 19 | 97 | 0 | 3 | 21.0 | 0.995 | 70 | -67 | -0.46 |
| Example 20 | 95 | 0 | 5 | 20.3 | 0.998 | 47.5 | -50.2 | -0.56 |
| Example 21 | 93 | 0 | 7 | 17.4 | 0.966 | 23.7 | -27.1 | -0.64 |
| Example 22 | 94 | 0 | 6 | 20.5 | 1.000 | 41.1 | -40.2 | -0.48 |
| Example 23 | 91 | 0 | 9 | 21.9 | 0.991 | 21.5 | -32.7 | -1.02 |
| Example 24 | 94 | 0 | 6 | 17.9 | 1.006 | 46.2 | -49 | -0.56 |
| Example 25 | 97 | 0 | 3 | 23.3 | 1.007 | 72.7 | -86.2 | -0.69 |
| Example 26 | 97 | 0 | 3 | 19.6 | 0.949 | 75.6 | -58 | -0.27 |
| Example 27 | 95 | 0 | 5 | 16.7 | 0.899 | 27.2 | -33.4 | -0.73 |
| Example 28 | 97 | 0 | 3 | 20.3 | 0.898 | 40.3 | -51.6 | -0.78 |
| Example 29 | 93 | 0 | 7 | 21.9 | 1.014 | 58.7 | -63.2 | -0.58 |
| Example 30 | 97 | 0 | 3 | 16.6 | 0.863 | 90.6 | -48.7 | -0.04 |
| Example 31 | 97 | 0 | 3 | 17.2 | 0.822 | 78.9 | -39.5 | 0.00 |
| Example 32 | 91 | 6 | 3 | 21.4 | 0.883 | 32.0 | -49.4 | -1.04 |
| Example 33 | 86 | 10 | 4 | 19.0 | 0.873 | 38.3 | -37.8 | -0.49 |

(continued)

| | Diisopropyl fumarate residue unit content (mol%) | Diethyl fumarate residue unit content (mol%) | (Meth) acrylic acid ester residue unit content (mol%) | Thickness μm | $R_{450}/R_{550}$ | Re nm | Rth nm | Nz |
|---|---|---|---|---|---|---|---|---|
| Example 34 | 82 | 14 | 4 | 21.4 | 0.863 | 26.6 | -34.1 | -0.78 |
| Comparative Example 1 | 100 | 0 | 0 | 17.4 | 1.022 | 122 | -99 | -0.31 |
| Comparative Example 2 | 96 | 0 | 4 | 20.2 | 1.024 | 74 | -74 | -0.49 |
| Comparative Example 3 | 91 | 0 | 9 | 21.3 | 1.022 | 51 | -56 | -0.60 |

Example 18

A film was prepared and analyzed for retardation properties as in Example 14 except that a resin solution was prepared using Resin 2 (obtained in Example 2) instead of Resin 1 and that the stretching temperature was changed to 106°C. The retardation properties of the resulting film are shown in Table 1. The resulting film had wavelength dispersion properties lower than those of the films of Comparative Examples 1 to 3.

Example 19

A film was prepared and analyzed for retardation properties as in Example 14 except that a resin solution was prepared using Resin 3 (obtained in Example 3) instead of Resin 1 and that the stretching temperature was changed to 151°C. The retardation properties of the resulting film are shown in Table 1. The resulting film had wavelength dispersion properties lower than those of the films of Comparative Examples 1 to 3.

Example 20

A film was prepared and analyzed for retardation properties as in Example 14 except that a resin solution was prepared using Resin 4 (obtained in Example 4) instead of Resin 1 and that the stretching temperature was changed to 140°C. The retardation properties of the resulting film are shown in Table 1. The resulting film had wavelength dispersion properties lower than those of the films of Comparative Examples 1 to 3.

Example 21

A film was prepared and analyzed for retardation properties as in Example 14 except that a resin solution was prepared using Resin 5 (obtained in Example 5) instead of Resin 1 and that the stretching temperature was changed to 101°C. The retardation properties of the resulting film are shown in Table 1. The resulting film had wavelength dispersion properties lower than those of the films of Comparative Examples 1 to 3.

Example 22

A film was prepared and analyzed for retardation properties as in Example 14 except that a resin solution was prepared using Resin 6 (obtained in Example 6) instead of Resin 1 and that the stretching temperature was changed to 117°C. The retardation properties of the resulting film are shown in Table 1. The resulting film had wavelength dispersion properties lower than those of the films of Comparative Examples 1 to 3.

Example 23

A film was prepared and analyzed for retardation properties as in Example 14 except that a resin solution was prepared using Resin 7 (obtained in Example 7) instead of Resin 1 and that the stretching temperature was changed to 117°C. The retardation properties of the resulting film are shown in Table 1. The resulting film had wavelength dispersion

properties lower than those of the films of Comparative Examples 1 to 3.

Example 24

A film was prepared and analyzed for retardation properties as in Example 14 except that a resin solution was prepared using Resin 8 (obtained in Example 8) instead of Resin 1 and that the stretching temperature was changed to 160°C. The retardation properties of the resulting film are shown in Table 1. The resulting film had wavelength dispersion properties lower than those of the films of Comparative Examples 1 to 3.

Example 25

A film was prepared and analyzed for retardation properties as in Example 14 except that a resin solution was prepared using Resin 9 (obtained in Example 9) instead of Resin 1 and that the stretching temperature was changed to 140°C. The retardation properties of the resulting film are shown in Table 1. The resulting film had wavelength dispersion properties lower than those of the films of Comparative Examples 1 to 3.

Example 26

A film was prepared and analyzed for retardation properties as in Example 14 except that a resin solution was prepared using Resin 10 (obtained in Example 10) instead of Resin 1 and that the stretching temperature and the stretching ratio were changed to 159°C and 1.4 times, respectively. The retardation properties of the resulting film are shown in Table 1. The resulting film had wavelength dispersion properties lower than those of the films of Comparative Examples 1 to 3.

Example 27

A film was prepared and analyzed for retardation properties as in Example 14 except that a resin solution was prepared using Resin 11 (obtained in Example 11) instead of Resin 1 and that the stretching temperature was changed to 140°C. The retardation properties of the resulting film are shown in Table 1. The resulting film had wavelength dispersion properties lower than those of the films of Comparative Examples 1 to 3.

Example 28

A film was prepared and analyzed for retardation properties as in Example 14 except that a resin solution was prepared using Resin 12 (obtained in Example 12) instead of Resin 1 and that the stretching temperature was changed to 140°C. The retardation properties of the resulting film are shown in Table 1. The resulting film had wavelength dispersion properties lower than those of the films of Comparative Examples 1 to 3.

Example 29

A film was prepared and analyzed for retardation properties as in Example 14 except that a resin solution was prepared using Resin 13 (obtained in Example 13) instead of Resin 1 and that the stretching temperature was changed to 140°C. The retardation properties of the resulting film are shown in Table 1. The resulting film had wavelength dispersion properties lower than those of the films of Comparative Examples 1 to 3.

Example 30

A film was prepared and analyzed for retardation properties as in Example 17 except that a resin solution was prepared using Resin 12 (obtained in Example 12) instead of Resin 1 and using 2,2'-methylenebis[6-(benzotriazol-2-yl)-4-tert-octylphenol] as an additive in an amount of 4 mass% based on the total mass of the resin and the additive (corresponding to 100 mass%) and that the stretching temperature was changed to 117°C. The retardation properties of the resulting film are shown in Table 1. The resulting film had wavelength dispersion properties lower than those of the films of Comparative Examples 1 to 3.

Example 31

A film was prepared and analyzed for retardation properties as in Example 17 except that a resin solution was prepared using Resin 12 (obtained in Example 12) instead of Resin 1 and using 2,4-bis(2,4-dimethylphenyl)-6-(2-hydroxy-4-n-octyloxyphenyl)-1,3,5-triazine as an additive in an amount of 3 mass% based on the total mass of the resin and the additive (corresponding to 100 mass%) and that the stretching temperature was changed to 115°C. The retardation properties of the resulting film are shown in Table 1. The resulting film had wavelength dispersion properties lower than those of the films of Comparative Examples 1 to 3.

Example 32

A film was prepared and analyzed for retardation properties as in Example 17 except that a resin solution was prepared using Resin 14 (obtained in Example 14) instead of Resin 1 and using methyl ethyl ketone (MEK) instead of THF and that the stretching temperature was changed to 138°C. The retardation properties of the resulting film are shown in Table 1. The resulting film had wavelength dispersion properties lower than those of the films of Comparative Examples 1 to 3.

Example 33

A film was prepared and analyzed for retardation properties as in Example 17 except that a resin solution was prepared using Resin 15 (obtained in Example 15) instead of Resin 1 and using MEK instead of THF and that the stretching temperature was changed to 124°C. The retardation properties of the resulting film are shown in Table 1. The resulting film had wavelength dispersion properties lower than those of the films of Comparative Examples 1 to 3.

Example 34

A film was prepared and analyzed for retardation properties as in Example 17 except that a resin solution was prepared using Resin 16 (obtained in Example 16) instead of Resin 1 and using MEK instead of THF and that the stretching temperature was changed to 116°C. The retardation properties of the resulting film are shown in Table 1. The resulting film had wavelength dispersion properties lower than those of the films of Comparative Examples 1 to 3.

Comparative Example 1

To a 75 mL volume glass ampoule, 40.02 g (200 mmol) of diisopropyl fumarate and 0.41 g (1.7 mmol) of PERBUTYL PV (manufactured by NOF Corporation) were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 400 g of tetrahydrofuran. The resulting polymer solution was added dropwise into 3 L of methanol. The resulting precipitate was vacuum-dried at 80°C for 10 hours to give a diisopropyl fumarate homopolymer. The resulting diisopropyl fumarate homopolymer had a weight average molecular weight of 257,000.

[Chem. 74]

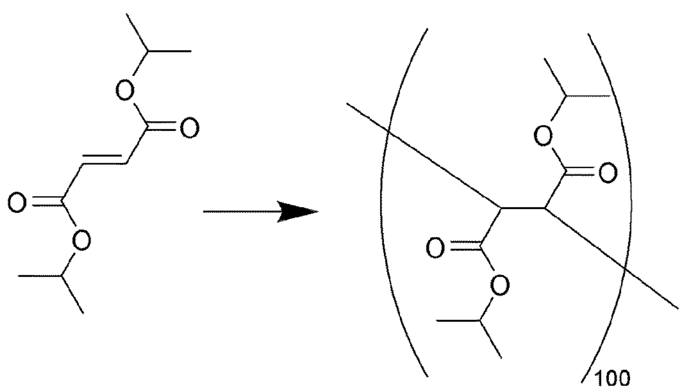

A 20 mass% resin solution was obtained by dissolving 4.0 g of the resulting diisopropyl fumarate homopolymer in 16.0 g of tetrahydrofuran. The resin solution was cast on a polyethylene terephthalate film using a coater and then subjected to a two-stage drying process including drying at 80°C for 4 minutes and then drying at 130°C for 4 minutes.

The resulting film was cut into a 50 mm square piece, which was then uniaxially stretched to 1.2 times at 140°C. The retardation properties of the resulting film are shown in Table 1.

Comparative Example 2

To a 75 mL volume glass ampoule, 40.01 g (200 mmol) of diisopropyl fumarate, 2.11 g (11.5 mmol) of n-octyl acrylate (manufactured by Tokyo Chemical Industry Co., Ltd.), and 0.45 g (1.81 mmol) of PERBUTYL PV (manufactured by NOF Corporation) were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 400 g of tetrahydrofuran. The resulting polymer solution was added dropwise into 3 L of methanol. The resulting precipitate was vacuum-dried at 80°C for 10 hours to give a copolymer. The resulting copolymer had a weight average molecular weight of 351,000. The $^1$H-NMR analysis revealed that the copolymer had the composition: 96 mol% of the diisopropyl fumarate residue unit and 4 mol% of the n-octyl acrylate residue unit.

[Chem. 75]

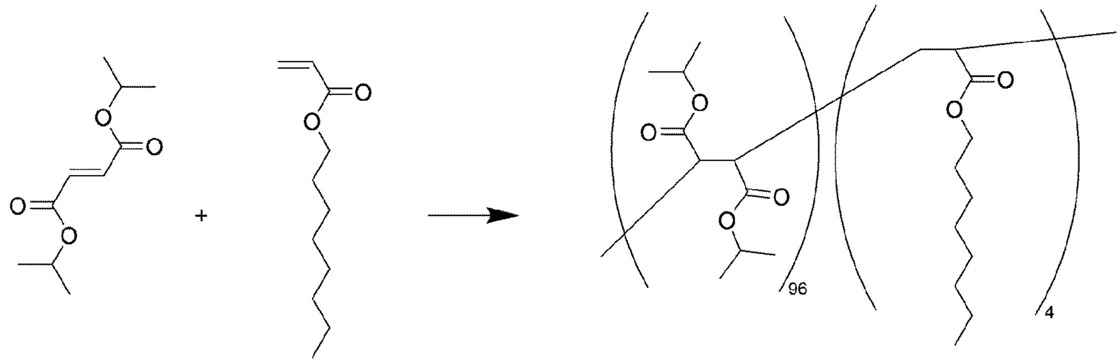

A 20 mass% resin solution was obtained by dissolving 4.0 g of the resulting resin in 16.0 g of tetrahydrofuran. The resin solution was cast on a polyethylene terephthalate film using a coater and then subjected to a two-stage drying process including drying at 80°C for 4 minutes and then drying at 130°C for 4 minutes. The resulting film was cut into a 50 mm square piece, which was then uniaxially stretched to 1.3 times at 140°C. The retardation properties of the resulting film are shown in Table 1.

Comparative Example 3

To a 75 mL volume glass ampoule, 39.04 g (195 mmol) of diisopropyl fumarate, 3.89 g (21.1 mmol) of n-octyl acrylate, and 0.43 g (1.74 mmol) of PERBUTYL PV (manufactured by NOF Corporation) were added and the resulting mixture was subjected to repeated nitrogen purging and evacuation, which was followed by melting and sealing the ampoule under reduced pressure. The ampoule was placed and kept in a thermostatic chamber at 50°C for 24 hours for radical polymerization. After the polymerization reaction was completed, the polymerization product was taken out of the ampoule and dissolved in 400 g of tetrahydrofuran. The resulting polymer solution was added dropwise into 3 L of methanol. The resulting precipitate was vacuum-dried at 80°C for 10 hours to give a copolymer (named Copolymer B). The resulting copolymer had a weight average molecular weight of 371,000. The $^1$H-NMR analysis revealed that the copolymer had the composition: 91 mol% of the diisopropyl fumarate residue unit and 9 mol% of the n-octyl acrylate residue unit.

[Chem. 76]

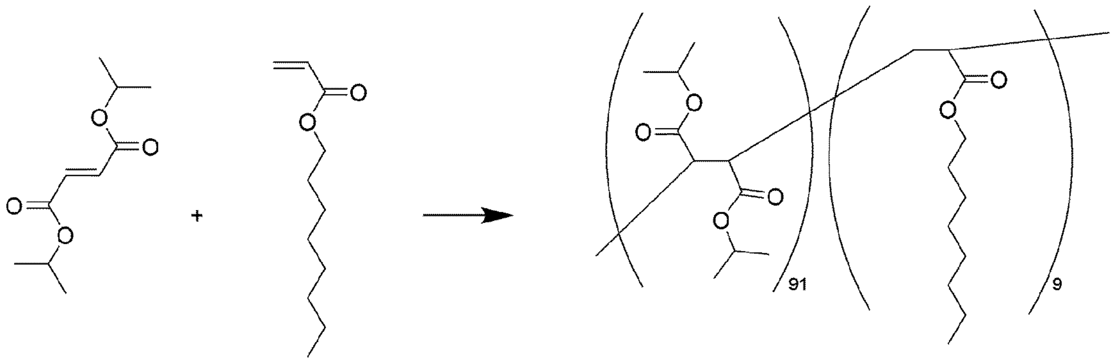

A 20 mass% resin solution was obtained by dissolving 4.0 g of the resulting resin in 16.0 g of tetrahydrofuran. The resin solution was cast on a polyethylene terephthalate film using a coater and then subjected to a two-stage drying process including drying at 80°C for 4 minutes and then drying at 130°C for 4 minutes. The resulting film was cut into a 50 mm square piece, which was then uniaxially stretched to 1.3 times at 105°C. The retardation properties of the resulting film are shown in Table 1.

## Claims

1. A fumaric acid diester resin comprising: a fumaric acid diester residue unit represented by Formula (1) below; and a (meth)acrylic acid ester residue unit represented by Formula (2) below:

[Chem. 1]

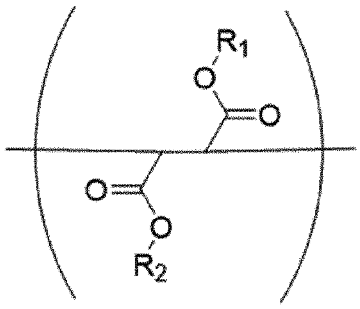

(1)

where $R_1$ and $R_2$ each independently represent a linear alkyl group having 1 to 12 carbon atoms, a branched alkyl group having 3 to 12 carbon atoms, or a cyclic alkyl group having 3 to 12 carbon atoms,

[Chem. 2]

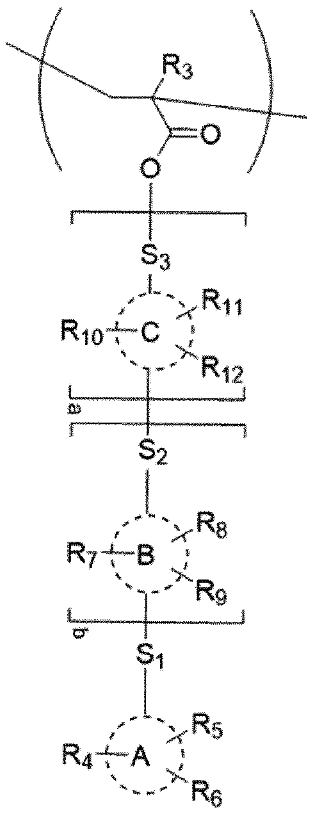

(2)

where $R_3$ represents a hydrogen atom or a methyl group,
$S_1$, $S_2$, and $S_3$ each independently represent a single bond or an alkylene group having 1 to 12 carbon atoms, the alkylene group having 1 to 12 carbon atoms may have at least one selected from the group consisting of an ether group, an ester group, a carbonate group, and an amide group and may have at least one selected from the group consisting of a branched structure, an alicyclic ring, and an aromatic ring in a chain thereof,
ring A, ring B, and ring C each independently represent an aromatic or heterocyclic ring-constituting atoms selected from the group consisting of a carbon atom, a nitrogen atom, an oxygen atom, and a sulfur atom,
$R_4$ to $R_{12}$ each independently represent a hydrogen atom, a halogen atom, a hydroxyl group, a carboxyl group, a cyano group, a cyanophenyl group, an alkyl group having 1 to 10 carbon atoms, an alkoxy group having 1 to 10 carbon atoms, an alkyl carboxylic acid group having 2 to 11 carbon atoms, a halogenated alkyl group having 1 to 10 carbon atoms, an alkyl alcohol group having 1 to 10 carbon atoms, or an aromatic or heterocyclic ring-constituting atoms selected from the group consisting of a carbon atom, a nitrogen atom, an oxygen atom, and a sulfur atom, and
a and b each independently represent 0 or 1.

**2.** The fumaric acid diester resin according to claim 1, wherein at least one ring selected from the group consisting of ring A, ring B, and ring C in Formula (2) is at least one selected from the group consisting of rings represented by Structural Formulas (I) to (IX) below,

[Chem. 3]

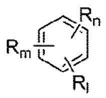

(I)

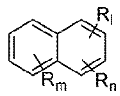

(II)

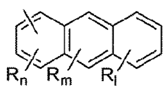

(III)

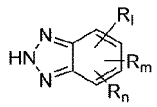

(IV)

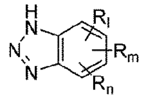

(V)

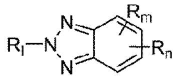

(VI)

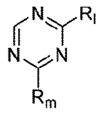

(VII)

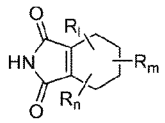

(VIII)

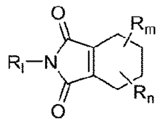

(IX)

where $R_1$, $R_m$, and $R_n$ each independently have the same meaning as that defined for $R_4$ to $R_{12}$ in Formula (2) above, and

the rings (I) to (IX) are bonded to any of S1, S2, and S3 in formula (2) above, and are bonded at any carbon atom or nitrogen atom constituting the ring.

**3.** The fumaric acid diester resin according to claim 1 or 2, wherein the fumaric acid diester resin comprises 50 mol% or more and 99 mol% or less of the residue unit represented by Formula (1) and 1 mol% or more and 50 mol% or less of the residue unit represented by Formula (2).

**4.** The fumaric acid diester resin according to any one of claims 1 to 3, wherein the fumaric acid diester resin has a standard polystyrene-equivalent weight average molecular weight of 150,000 to 450,000 as measured by gel permeation chromatography.

**5.** A film comprising the fumaric acid diester resin according to any one of claims 1 to 4.

**6.** The film according to claim 5, wherein the film is a uniaxially or multiaxially stretched film.

**7.** The film according to claim 5 or 6, wherein the film has a thickness of 80 $\mu$m or less.

**8.** The film according to any one of claims 5 to 7, wherein the film has an in-plane retardation (Re) of 10 to 300 nm and an out-of-plane retardation (Rth) of -200 to 50 nm, and the in-plane retardation (Re) and the out-of-plane retardation (Rth) are respectively expressed by Formulas (a) and (b):

$$Re = (nx - ny) \times d \quad (a)$$

$$Rth = \{(nx + ny)/2 - nz\} \times d \quad (b)$$

where nx is refractive index of an in-plane slow axis, ny is refractive index of an in-plane fast axis, nz is out-of-plane refractive index, and d is thickness.

**9.** The film according to any one of claims 5 to 8, wherein the film has a ratio $R_{450}/R_{550}$ of in-plane retardation ($R_{450}$) at a wavelength of 450 nm to in-plane retardation ($R_{550}$) at a wavelength of 550 nm satisfying a condition of $R_{450}/R_{550} < 1.015$.

**10.** The film according to any one of claims 5 to 9, wherein the film has an Nz coefficient (Nz) satisfying $-5.0 \leq Nz \leq 0.9$, and the Nz coefficient (Nz) is expressed by Formula (c):

$$Nz = (nx - nz)/(nx - ny) \quad (c)$$

where nx is refractive index of an in-plane slow axis, ny is refractive index of an in-plane fast axis, and nz is out-of-plane refractive index.

**11.** A polarizing plate comprising: a polarizer; and the film according to any one of claims 5 to 10 disposed on at least one side of the polarizer.

## INTERNATIONAL SEARCH REPORT

International application No.
**PCT/JP2022/015143**

**A. CLASSIFICATION OF SUBJECT MATTER**

***B29C 55/02***(2006.01)i; ***C08F 222/14***(2006.01)i; ***C08J 5/18***(2006.01)i; ***G02B 5/30***(2006.01)i
FI: C08F222/14; G02B5/30; B29C55/02; C08J5/18 CEY

According to International Patent Classification (IPC) or to both national classification and IPC

**B. FIELDS SEARCHED**

Minimum documentation searched (classification system followed by classification symbols)

C08F222/14; G02B5/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2009-37110 A (TOSOH CORP.) 19 February 2009 (2009-02-19) claims, paragraphs [0023]-[0027], [0041]-[0045], [0052]-[0114] | 1, 3-11 |
| A | | 2 |
| X | WO 2015/064205 A1 (NITTO DENKO CORP.) 07 May 2015 (2015-05-07) claims, paragraphs [0053]-[0084] | 1, 3-11 |
| A | | 2 |
| X | JP 2012-21101 A (TOSOH CORP., OSAKA CITY UNIV.) 02 February 2012 (2012-02-02) claims, paragraphs [0036]-[0046] | 1-7 |
| A | | 8-11 |
| X | IINUMA, Fujio et al. Functional Polymers: Synthesis and Polymerization of Vinyl and Methacrylate Monomers Containing the Pendant 1,3,5-Triphenyl-2-pyrazoline Group. Polymer Journal. 1981, vol. 13, no. 7, pp. 641-650 pp. 641-650 | 1-7 |
| A | | 8-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 June 2022** | **14 June 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/015143**

**C. DOCUMENTS CONSIDERED TO BE RELEVANT**

| Category* | Citation of document, with indication, where appropriate, of the relevant passages | Relevant to claim No. |
|---|---|---|
| X | JP 2002-220423 A (TDK CORP.; DAI ICHI KOGYO SEIYAKU CO., LTD.) 09 August 2002 (2002-08-09) claims, paragraphs [0039], [0044]-[0057] | 1, 3-7 |
| A | | 2, 8-11 |
| P, X | JP 2021-173861 A (TOSOH CORP.) 01 November 2021 (2021-11-01) claims, paragraphs [0019]-[0029], [0039], [0048]-[0065] | 1, 3-11 |
| P, A | | 2 |
| P, X | JP 2021-189286 A (TOSOH CORP.) 13 December 2021 (2021-12-13) claims, paragraphs [0014], [0027]-[0037], [0052], [0067]-[0101] | 1, 3-11 |
| P, A | | 2 |

Form PCT/ISA/210 (second sheet) (January 2015)

**INTERNATIONAL SEARCH REPORT**
**Information on patent family members**

International application No.
**PCT/JP2022/015143**

| Patent document cited in search report | Publication date (day/month/year) | Patent family member(s) | Publication date (day/month/year) |
|---|---|---|---|
| JP 2009-37110 A | 19 February 2009 | (Family: none) | |
| WO 2015/064205 A1 | 07 May 2015 | US 2015/0293407 A1<br>claims, paragraphs [0058]-[0093]<br>US 2018/0039138 A1<br>EP 2921902 A1<br>KR 10-2015-0074147 A<br>CN 104871079 A<br>KR 10-2017-0094013 A<br>TW 201527837 A<br>JP 2015-111236 A | |
| JP 2012-21101 A | 02 February 2012 | (Family: none) | |
| JP 2002-220423 A | 09 August 2002 | US 2002/0137867 A1<br>claims, paragraphs [0038], [0044]-[0064]<br>EP 1227115 A2<br>TW 265938 B<br>KR 10-2002-0062812 A<br>CN 1367185 A | |
| JP 2021-173861 A | 01 November 2021 | (Family: none) | |
| JP 2021-189286 A | 13 December 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2818983 B
- JP H5297223 A
- JP H5323120 A
- JP 2017149932 A